# EUROPEAN PATENT SPECIFICATION

(11) **EP 1 260 417 B1**
(45) Date of publication and mention of the grant of the patent: **12.01.2011**
(21) Application number: 02010832.0
(22) Date of filing: 15.05.2002
(51) Int. Cl.: B60R 21/205, B60R 21/20

(54) **Knee protecting airbag device**
Knieschutz-Airbagvorrichtung
Coussin gonflable de protection des genoux

(30) Priority: 21.05.2001 JP 2001150484; 21.05.2001 JP 2001150478; 21.05.2001 JP 2001151516; 21.12.2001 JP 2001390263; 23.01.2002 JP 2002014616
(43) Date of publication of application: 27.11.2002
(73) Proprietor: TOYODA GOSEI CO., LTD., Nishi-Kasugai-gun, Aichi-ken, 452-8564 (JP)
(72) Inventor: Takimoto, Masahiro, c/o Toyoda Gosei Co., Ltd, Nishikasugai-gun, Aichi-ken, 452-8564 (JP); Koyama, Toru, c/o Toyoda Gosei Co., Ltd, Nishikasugai-gun, Aichi-ken, 452-8564 (JP); Totani, Chiharu, c/o Toyoda Gosei Co., Ltd, Nishikasugai-gun, Aichi-ken, 452-8564 (JP); Ando, Hikaru, c/o Toyoda Gosei Co., Ltd, Nishikasugai-gun, Aichi-ken, 452-8564 (JP); Hosokawa, Takeshi, c/o Toyoda Gosei Co., Ltd, Nishikasugai-gun, Aichi-ken, 452-8564 (JP); Tajima, Hiroyuki, c/o Toyoda Gosei Co., Ltd, Nishikasugai-gun, Aichi-ken, 452-8564 (JP); Mizuno, Yoshio, c/o Toyoda Gosei Co., Ltd, Nishikasugai-gun, Aichi-ken, 452-8564 (JP); Suzuki, Kazumasa, c/o Toyoda Gosei Co., Ltd, Nishikasugai-gun, Aichi-ken, 452-8564 (JP)
(74) Representative: TBK-Patent

(56) References cited:
- EP-A- 0 684 167
- EP-A- 0 872 388
- DE-C- 19 730 397
- US-A- 3 904 222
- US-A- 6 158 763
- PATENT ABSTRACTS OF JAPAN vol. 1997, no. 09, 30 September 1997 (1997-09-30) -& JP 09 123862 A (MITSUBISHI MOTORS CORP), 13 May 1997 (1997-05-13)

## Description

### BACKGROUND OF THE INVENTION

### 1. FIELD OF THE INVENTION

The present invention relates to a knee protecting airbag device capable of protecting the knees of a passenger with an airbag to extend and expand when fed with an inflating gas.

### 2. DESCRIPTION OF RELATED ART

In the prior art, a device for protecting the knees of a passenger is exemplified by an airbag device having a construction, as disclosed in Unexamined Published Japanese Patent Application No. 9-123862. This airbag device is arranged at a position below a steering column so as to protect the knees of a driver. Moreover, this airbag device comprises an airbag, an inflator for feeding an inflating gas to the airbag, a case for housing the airbag and the inflator, and an airbag cover for covering the housed airbag and also allowing that airbag to protrude. The airbag extends and expands, when activated, toward the lower face of the upper portion of a column cover.

In the airbag device thus constructed, a strong reaction pushing the case forward is applied to the case when the airbag extends and expands with the inflating gas from the inflator. Therefore, the case has to be mounted and fixed on a highly rigid structural member in a vehicle such as a steering column so that the case may not be moved by the reaction.

At positions below the steering column where the airbag device of the aforementioned construction is arranged, however, there are usually arranged not only the steering column but also a tilt mechanism, a telescopic mechanism, a parking brake device and so on, thereby leaving just a narrow space for arranging the airbag device. Therefore, working space for mounting and fixing the case on the steering column is so narrow that the mounting work requires a long time.

In order to protect the knees of a passenger seated on the front seat next to the driver's (or a passenger's seat), on the other hand, it is conceivable to arrange the knee protecting airbag device in front of this seat. In front of the passenger's seat where such an airbag device would be installed, however, there are closely arranged a main airbag device for this seat having an airbag for extending and expanding between the windshield and the passenger to protect the passenger, the duct of an air conditioner, and a glove box and so on. Therefore, the working space for arranging this airbag device is narrow as in the case of the driver's seat, and the working space for mounting and fixing the case is narrow.

In the airbag device thus constructed, moreover, it is also conceivable to arrange a case or the like on a plate-shaped holding member such as a knee panel (or a knee bolster) to be arranged in front of the seated passenger.

Here, the knee panel is connected to a movement energy absorber arranged on the vehicle front side thereof, thereby facing a large portion the front side of the seated passenger. Moreover, this knee panel receives the forward moving knees of the passenger at the time of a front collision of the vehicle, and moves together with the knees forward, thereby to deform the kinetic energy absorber arranged in front. In short, the knee panel acts to damp the shock on the knees of the passenger moving forward.

When the airbag and the inflator are to be housed in the plate-shaped holding member or such knee panel, moreover, the airbag cover for covering the folded airbag also has to be mounted on the holding member.

This airbag cover is desirably constructed to cover the rear side of the holding member such as the knee panel widely so as not to degrade the appearance design. Moreover, this airbag cover is desirably formed not separately of but integrally with a door portion which covers the folded airbag but is opened when pushed by the expanding airbag. In this construction, therefore, the door portion is formed integrally with the rest of the airbag cover itself by providing a breakaway in its periphery.

When the airbag cover having the integrated door portion is mounted on the aforementioned holding member, however, there arises a problem in that the breakaway portion is smoothly broken to open the door portion.

In the airbag device thus constructed, moreover, the airbag module including the airbag, the inflator, the case and the airbag cover is mounted and fixed on the vehicle body by supporting it on a mounted bracket.

When the airbag which has completed its extension and expansion cannot completely absorb the kinetic energy of the knees, moreover, the aforementioned the mounted bracket of the airbag device is constructed to deform and buckle plastically, thereby to absorb the kinetic energy of the knees.

In short, the airbag device is constructed to absorb the kinetic energy of the knees by buckling the mounted bracket. For this, the mounted bracket has a structure in which it is extended generally forward from the airbag module and is fixed at a predetermined portion of the vehicle body. As a result, the extension of the mounted bracket to the forward needs some degree of length.

In case the distance between the airbag module and the portion of the vehicle body for rigidly fixing the module is short, therefore, the structure having the aforementioned mounted bracket is not acceptable, and so the conventional device has a low degree of freedom for mounting on the vehicle.

In case the airbag device of the aforementioned construction is mounted on the vehicle, moreover, the distance from the steering column cover or the instrument panel to the knees of the passenger is usually set short when the passenger is seated. Especially in the case of the driver, this driver frequently depresses the brake pedal at the acting time of the airbag device so that the distance from the column cover to the driver's knees becomes shorter. Therefore, the airbag has to quickly expand in order for it to protect the knees properly.

In case the airbag device of this kind is arranged at the driver's seat, moreover, the steering column, the tilt mechanism, the telescopic mechanism, the parking brake and so on are closely arranged near the portion where the airbag device is arranged. Therefore, it is difficult to retain a large housing space for arranging the knee protecting airbag device. Especially in recent years, the width of the airbag device in the directions perpendicular to the axis of the case is hard to retain when a glove box or the like is arranged below the column cover. It is, therefore, desired to make the airbag device compact by making the width as small in the directions perpendicular to the case axis as possible.

According to JP 9 123 862 a knee airbag module is laid inside an undercover fitted to the instrument panel of a vehicle, and operates when an impact equal to or above the preset value acts on the vehicle. Then, a knee airbag expanded in a cabin comes to be engaged with both right and left sides of a steering column cover, thereby being prevented from right and left dislocations.

According to US 3 904 222 an instrument panel structure mounts an occupant restraint cushion housing having a flanged elongated opening. An inflatable occupant restraint cushion is housed within the housing and communicates with an inflator mounted to the housing. A cover assembly for the housing is secured to the instrument panel structure and includes an integrally hinged closure closing an opening therein generally coextensive with that of the housing. The cover assembly includes flanges defining the free side and upper edge portions of the opening therein. The free edge portions of the closure are provided with inwardly offset flanges underlying the flanges of the assembly to releasably hold the closure in closed position against outward movement. In one embodiment, integral ribs of the side and upper flanges of the closure engage the side and upper flanges of the housing to block movement of the side and upper flanges of the closure inwardly of the housing. In a second embodiment, a spacer on the upper flange of the housing blocks inward movement of the upper flange of the closure. In a third embodiment, the integral rib on one side flange of the closure engages a respective side flange of the housing and spacers on the cover assembly and housing block inward movement of the outer side flange and upper flange of the closure.

According to EP0872388 a vehicle occupant safety apparatus includes a knee bolster movable from a stored position adjacent to an instrument panel of the vehicle to a blocking position spaced apart from the instrument panel. An actuator for moving the knee bolster from the stored position to the blocking position is supported on the instrument panel by an actuator support. An attachment member is connected with the knee bolster. The knee bolster is movable relative to the attachment member when the knee bolster is in the blocking position. The attachment member is fixed to the instrument panel adjacent to the actuator support. A plurality of tethers are connected between the knee bolster and the attachment member for controlling movement of the knee bolster relative to the attachment member. The actuator preferably includes an inflatable device which is inflatable to move the knee bolster from the stored position to the blocking position. The tethers are located outside the inflatable device and are the only connection between the knee bolster and the instrument panel when the knee bolster is in the blocking position.

It is the object of the invention to provide an improved knee protecting airbag device which can ensure a smooth and fast opening of a door portion for a fast inflation of the airbag to protect knees of a passenger, even if an airbag cover having the door portion is integrated is mounted on a plate-shaped holding member.

The object of the invention is achieved by an airbag device according to claim 1. Advantageous embodiments are achieved according to the dependent claims.

### BRIEF DESCRIPTION OF THE DRAWINGS

Fig. 1 is a schematic vertical section showing the operation of a knee protecting airbag device according to a first comparative example for better understanding the present invention in the longitudinal directions of a vehicle;
Fig. 2 is a schematic vertical section of the knee protecting airbag device of the first comparative example in the longitudinal directions of the vehicle;
Fig. 3 is a section of a portion III - III of Fig. 2;
Fig. 4 is a schematic front elevation showing the
   operation of the knee protecting airbag device of the first comparative example taken from the rear side of the vehicle;
Fig. 5 is a front elevation of an airbag to be used in the first comparative example;
Fig. 6 is a schematic section of a portion VI - VI of Fig. 5;
Figs. 7A to 7E are schematic views showing how to fold the airbag used in the first comparative example;
Figs. 8A and 8B are schematic vertical sections for explaining the state of the knee protecting airbag device of the first comparative example during extending and expanding of the airbag in the longitudinal directions of the vehicle;
Figs. 9A and 9B are schematic lateral sections showing the state of the knee protecting airbag device of the first comparative example during extending and expanding of the airbag in the longitudinal directions of the vehicle;
Figs. 10A and 10B are schematic front elevations taken from the vehicle rear side for explaining the extension and expansion of the airbag in the knee protecting airbag device of the first comparative example;
Fig. 11 is a schematic vertical section showing the state in which the airbag has completed its extension and expansion in the knee protecting airbag device according to the first comparative example in the longitudinal directions of the vehicle;
Fig. 12 is a schematic vertical section of a knee protecting airbag device according to a second comparative example for better understanding the invention in the longitudinal directions of the vehicle;
Fig. 13 is a schematic front elevation showing the operation of the knee protecting airbag device of the second comparative example and taken from the vehicle rear side;
Fig. 14 is a schematic vertical section of a knee protecting airbag device according to a third comparative example for better understanding the invention in the longitudinal directions of the vehicle;
Fig. 15 is a schematic front elevation showing the operation of the knee protecting airbag device of the third comparative example and taken from the vehicle rear side;
Fig. 16 is a schematic front elevation taken from the vehicle rear side and showing the state in which the knee protecting airbag device of the first comparative example for better understanding is arranged in front of a passenger's seat;
Fig. 17 is a schematic vertical section showing the operation of a knee protecting airbag device according to an embodiment of the invention in the longitudinal directions of the vehicle;
Fig. 18 is a schematic vertical section of the knee protecting airbag device of the embodiment in the longitudinal directions of the vehicle;
Fig. 19 is a section of a portion XIX - XIX of Fig. 18;
Fig. 20 is a schematic front elevation showing the operation of the knee protecting airbag device of the embodiment and taken from the vehicle rear side;
Fig. 21 is an exploded front side perspective view of a knee panel to be used as a holding member and an airbag cover in the embodiment;
Fig. 22 is an exploded rear side perspective view of the knee panel to be used as the holding member and the airbag cover in the embodiment;

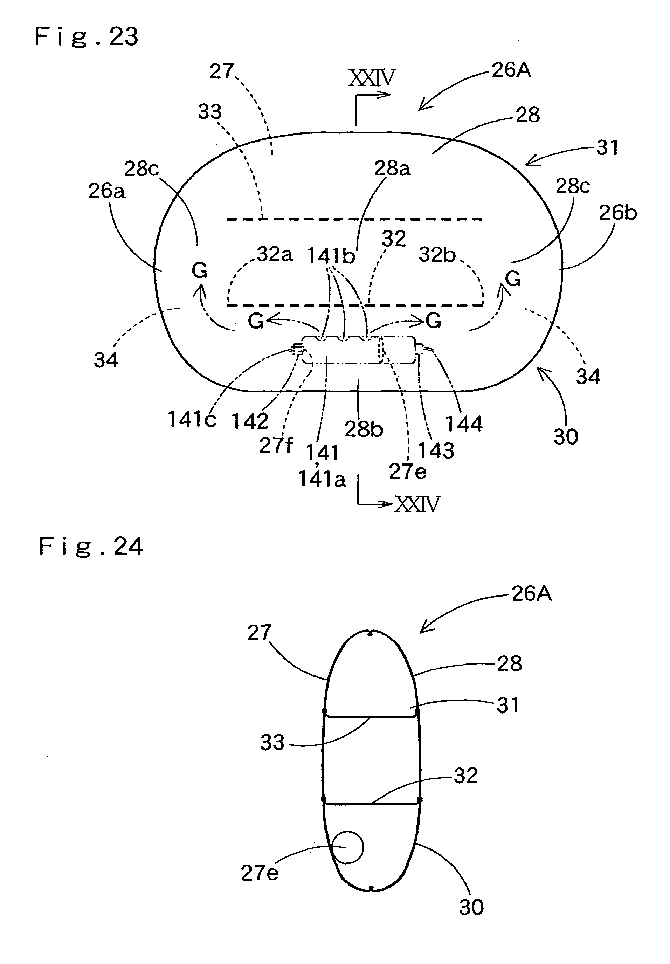

Fig. 23 is a front elevation of the airbag to be used in the embodiment;
Fig. 24 is a schematic section of a portion XXIV - XXIV of Fig. 23;
Fig. 25 is a view showing the state in which the airbag cover used in the embodiment is mounted on the knee panel as the holding member;
Fig. 26 is a view showing the state, in which the airbag cover used in the embodiment is mounted on the knee panel as the holding member, and the state after Fig. 25;
Fig. 27 is a schematic front elevation taken from the vehicle rear side for explaining the extension and expansion of the airbag in the knee protecting airbag device of the embodiment;
Fig. 28 is a schematic vertical section taken in the vehicle longitudinal directions and showing the state in which the airbag has completed its extension and expansion in the knee protecting airbag device of the embodiment;
Fig. 29 is a schematic front elevation taken from the vehicle rear side and showing the state in which the knee protecting airbag device of the embodiment is arranged on the vehicle front side of the passenger's seat;
Fig. 30 is a schematic vertical section taken in the longitudinal directions and showing the operation of a knee protecting airbag device according to a fourth comparative example for better understanding the invention;
Fig. 31 is a schematic vertical section of the knee protecting airbag device of the fourth comparative example in the longitudinal directions of the vehicle;
Fig. 32 is a schematic section of a portion XXXII - XXXII of Fig. 31;
Fig. 33 is a schematic front elevation taken from the vehicle rear side and showing the operation of the knee protecting airbag device of the fourth comparative example;
Fig. 34 is an exploded perspective front side view of a knee panel to be used as a holding member and an airbag cover in the fourth comparative example;
Fig. 35 is an exploded perspective rear side view of a knee panel to be used as the holding member and an airbag cover in the fourth comparative example;

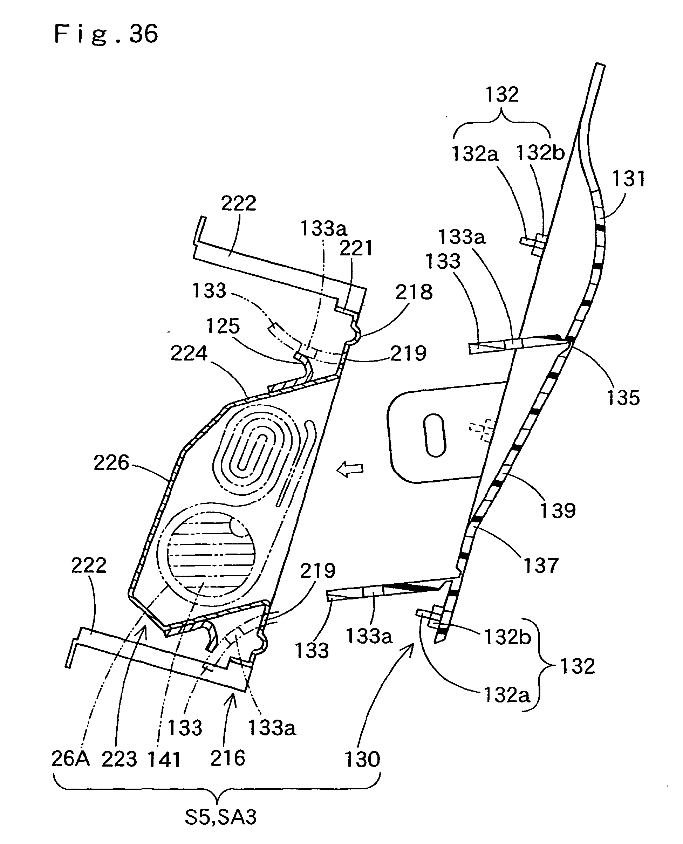

Fig. 36 is a view showing the state in which the airbag cover used in the fourth comparative example is mounted on the knee panel as the holding member;

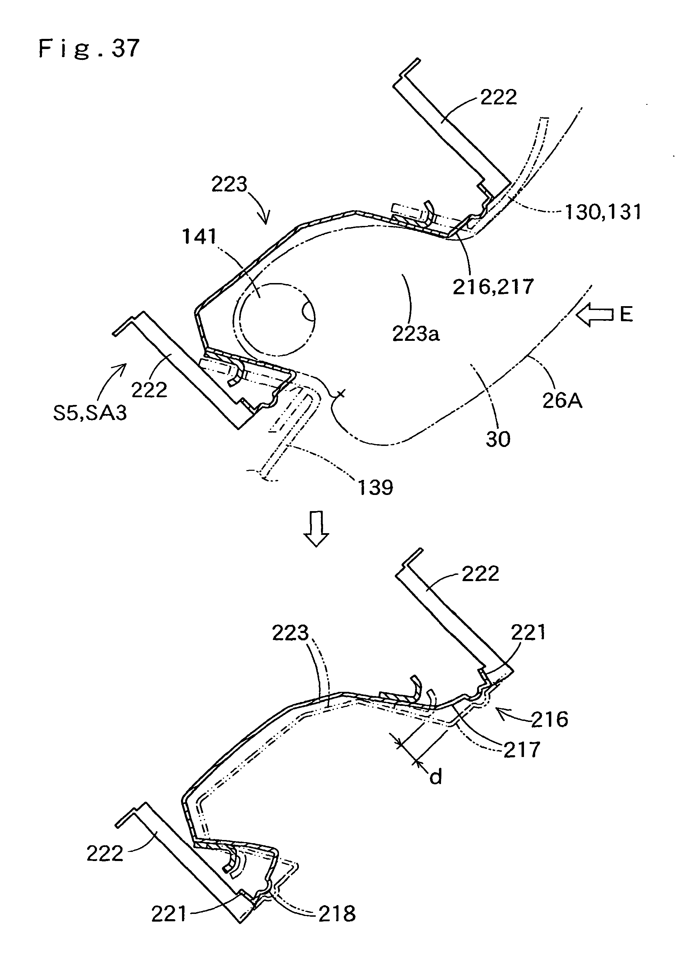

Figs. 37A and 37B are explanatory views for explaining the deformed state of the plate portion of the knee panel as the holding member used in the fourth comparative example;
Fig. 38 is a schematic vertical section showing the operation of the knee protecting airbag device according to a fifth comparative example for better understanding the invention and taken in the longitudinal directions of the vehicle;
Fig. 39 is a schematic vertical section of the knee protecting airbag device of the fifth comparative example in the longitudinal directions of the vehicle;
Fig. 40 is a sectional view of a portion taken along XL - XL of Fig. 39;
Fig. 41 is a schematic front elevation showing the operation of the knee protecting airbag device of the fifth comparative example and taken from the vehicle rear side;
Fig. 42 is a schematic vertical section of a knee protecting airbag device according to a sixth comparative example for better understanding the invention in the longitudinal directions of the vehicle;
Fig. 43 is a section of a portion taken along XLIII - XLIII of Fig. 42;
Fig. 44 is a schematic front elevation taken from the vehicle rear side and showing the operation of a knee protecting airbag device according to an seventh comparative example for better understanding the invention;
Fig. 45 is a schematic front elevation taken from the vehicle rear side and showing the state in which the knee protecting airbag device of the fifth comparative example is arranged in front of the passenger's seat;
Fig. 46 is a schematic vertical section showing the operation of a knee protecting airbag device according to an eigth comparative example for better understanding the invention in the longitudinal directions of the vehicle;
Fig. 47 is a schematic vertical section of the knee protecting airbag device of the eigth comparative example in the longitudinal directions of the vehicle;
Fig. 48 is a section of a portion taken along XLVIII - XLVIII of Fig. 47;
Fig. 49 is a schematic front elevation taken from the vehicle rear side and showing the operation of the knee protecting airbag device of the eigth comparative example;
Fig. 50 is a front elevation of an airbag used in the eigth comparative example;
Fig. 51 is a schematic section of a portion taken along LI - LI of Fig. 50;
Fig. 52 is a schematic vertical section of a knee protecting airbag device according to a ninth comparative example for better understanding the invention in the longitudinal directions of the vehicle;
Fig. 53 is a front elevation, as taken in a direction LIII of Fig. 52, of the knee protecting airbag device of the ninth comparative example for better understanding;
Fig. 54 is a section taken along LIV - LIV of Fig. 53;
Fig. 55 is a front elevation of an airbag used in the ninth comparative example;

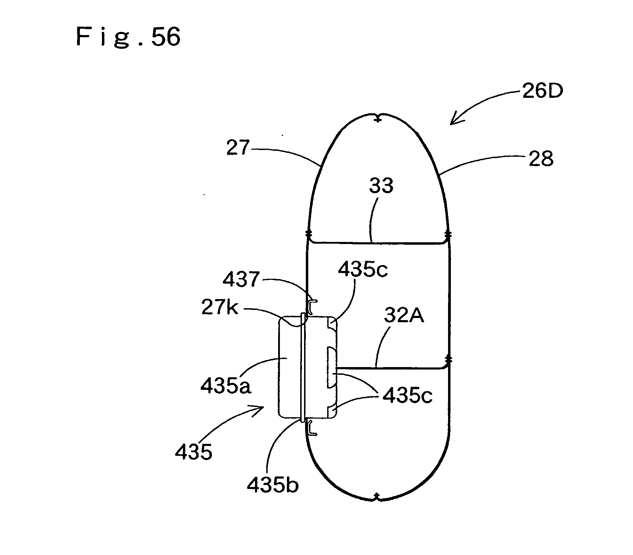

Fig. 56 is a schematic section of a portion along LVI - LVI of Fig. 55;
Fig. 57 is a schematic view of a knee protecting airbag device according to a tenth comparative example for better understanding the invention;
Fig. 58 is a schematic vertical section of the knee protecting airbag device of the tenth comparative example in the longitudinal directions of the vehicle;
Fig. 59 is a section of a portion taken along LIX - LIX of Fig. 58;
Fig. 60 is a schematic view of a knee protecting airbag device according to a eleventh comparative example for better understanding the invention;
Fig. 61 is a schematic vertical section of the knee protecting airbag device of the eleventh comparative example in the longitudinal directions of the vehicle; and
Fig. 62 is a section of a portion taken along LXII - LXII of Fig. 61.

### DESCRIPTION OF THE PREFERRED EMBODIMENT

The invention will be described below by way of an embodiment shown in the drawings as well as by comparative example. In addition, the invention is not limited to the embodiment. All modifications within the requirements of the claims and equivalents with respect to the requirements should be included in the scope of the claims.

First of all, here will be the described knee protecting airbag devices S1 to S3 which can achieve the first object of the invention.

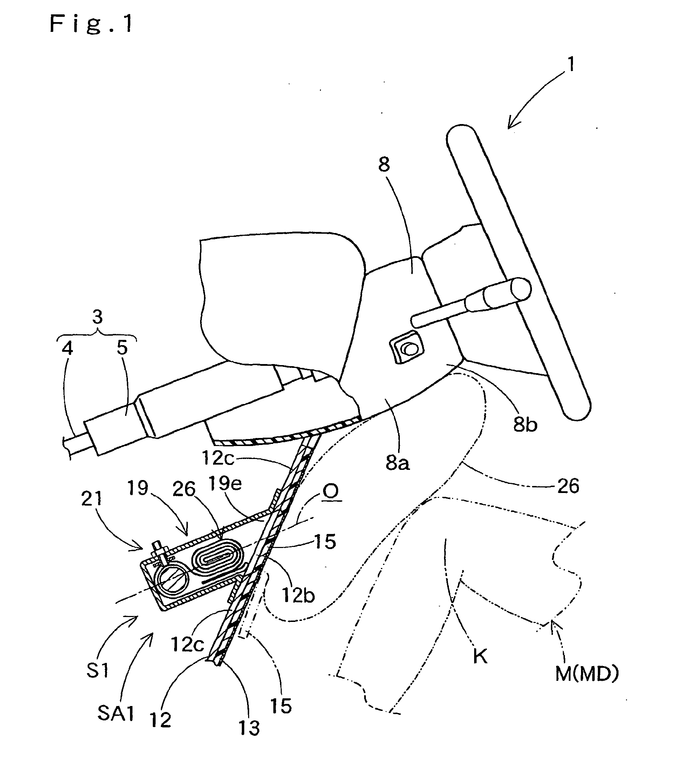

A knee protecting airbag device S1 according to a first comparative example for better understanding the invention is shown in Figs. 1 to 3.

Here, the vertical, transverse and longitudinal directions will be termed to correspond to the vertical, transverse and longitudinal directions of a vehicle at the time when the knee protecting airbag device is mounted on the vehicle.

Moreover, the passenger M is a driver MD, or a person MP who sat on the passenger's seat. That is, the passenger M includes the driver MD.

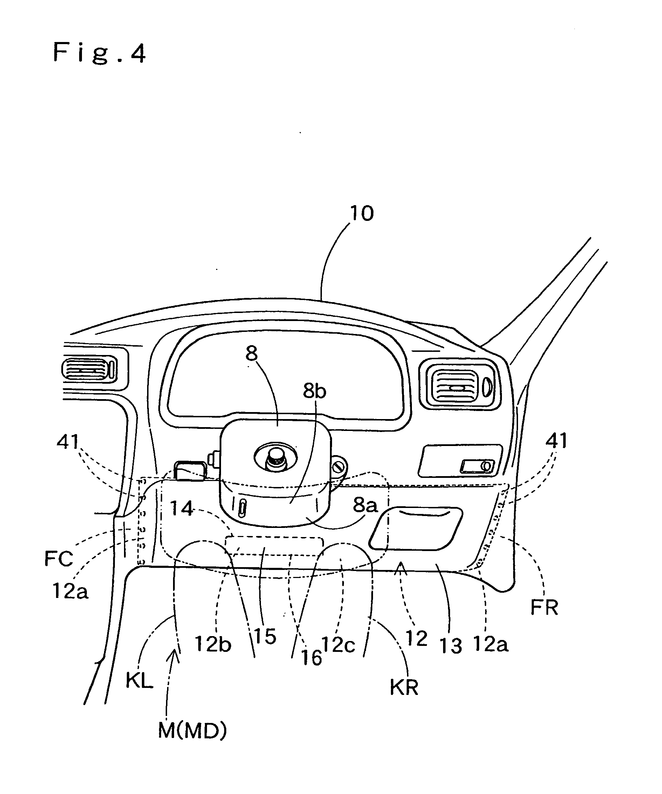

The airbag device S1 is so arranged below a steering column 3 on the vehicle front side of a driver MD, one of the passengers M, so as to protect the knees K of the driver MD. The airbag device S1 comprises a folded airbag 26, an inflator 21, a case 19, an airbag cover 13 and a holding member 12. The inflator 21 feed an inflating gas to the airbag 26. The case 19 houses the airbag 26 and the inflator 21. The airbag cover 13 is constructed to cover the airbag 26 folded. The holding member 12 holds the case 19. In the airbag device S1 the case 19 having the airbag 26 housed therein is held by the holding member 12. At the two left and right ends of the holding member 12, moreover, there are formed mounting portions 12a and 12a, which are mounted and fixed on frame portions FC and FR having rigidity of the vehicle, as shown in Fig. 4. Moreover, the folded airbag 26 is arranged in front of the knees K (KL and KR) of the seated driver MD below the steering column 3.

Here, the frame portion FR is the front body pillar in the body of the vehicle. On the other hand, the frame portion FC is the center brace in the body of the vehicle.

Moreover, the steering column 3 comprises, as shown in Fig. 1, a main shaft 4 connected to a steering wheel 1, and a column tube 5 enclosing the main shaft 4. Between the main shaft 4 and the column tube 5, there are arranged the not-shown tilt mechanism capable of adjusting the angle of the ring face of the steering wheel, and the not-shown telescopic mechanism capable of moving and stopping the steering wheel 1 in the axial directions of the shaft.

A column cover 8 is formed of a synthetic resin into a generally square tubular shape or the like. The column cover 8 is constructed to cover the steering column 3 below the steering wheel 1. Moreover, the column cover 8 is arranged in the axial directions of the steering column 3. Specifically, the column cover 8 is inclined upward so that its front side is downward and its rear side is upward. Moreover, the column cover 8 has a lower face 8a formed into a generally rectangular shape and profile line curving upward.

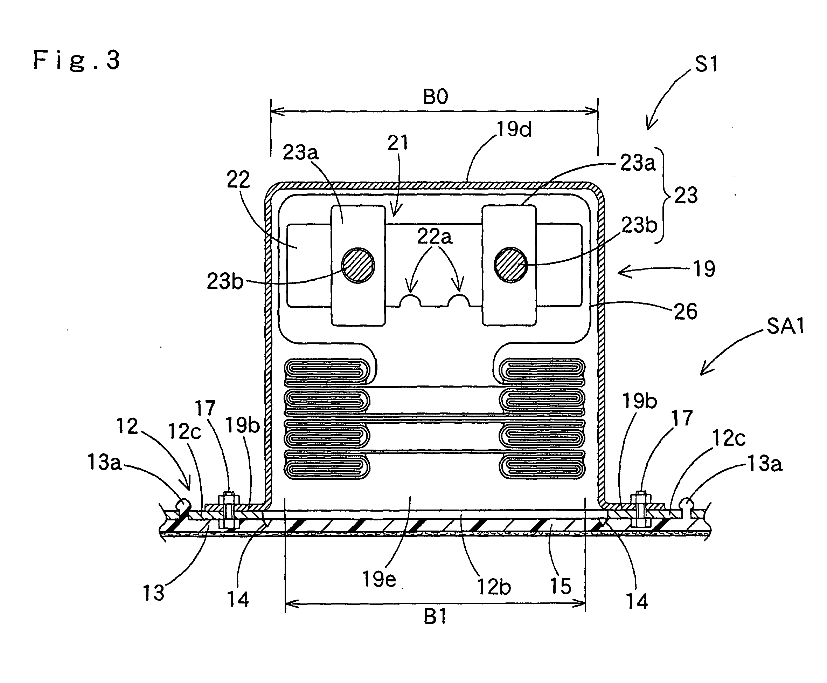

The holding member 12 is formed of a sheet metal into a plate shape. The holding member 12 is arranged at a position on the lower side of an instrument panel (hereafter called the "dashboard") 10, as shown in Figs. 1 to 4. This holding member 12 is arranged at a position containing the lower side of the column cover 8 enclosing the steering column 3. Moreover, the holding member 12 is inclined upward so as to have its upper end positioned toward the vehicle rear side and its lower end positioned to the front. On the two left and right ends of the holding member 12, there are formed the mounting portions 12a which are individually provided with the not-shown mounting holes for inserting bolts 41 thereinto. The holding member 12 is connected and fixed by fastening its mounting portions 12a and 12a individually on the lefthand and righthand vehicle frame portions FC and FR at a plurality of positions by means of the bolts 41. Moreover, the holding member 12 mounts and fixes the case 19 on its front side face by bolt, nut, rivet and welding means. The holding member 12 fixes the case 19 (see Fig. 3) by fastening nuts on bolts 17 which protrude forward from the rear face of the holding member 12 through to the forward face.

In the portion of the holding member 12 for mounting the case 19, there is formed a communication hole 12b for communicating with the later-described opening 19e of the case 19. This communication hole 12b allows the airbag 26 housed in the case 19 to protrude into the vehicle compartment toward the rear of the vehicle. Moreover, the communication hole 12b is opened into such a generally rectangular shape as to match the opening 19e of the case 19. The communication hole 12b has a periphery formed into a flat shape. This periphery of the communication hole 12b provides a support face 12c capable of supporting the vehicle front side face of the extending and expanding airbag 26.

As shown in Figs. 1 to 4, the airbag cover 13 is mounted and fixed on the face of the holding member 12 on the vehicle rear side by means such as bolt, nut or rivet. Moreover, the airbag cover 13 performs a role as an interior member to cover the folded airbag 26 and the face of the holding member 12 on the vehicle compartment side. The airbag cover 13 is fixed on the holding member 12 (as referred to in Fig. 3) by using clips 13a and an adhesive. In the airbag cover 13, moreover, there is formed a door portion 15 having a generally rectangular plate shape, which is arranged at the position of the communication hole 12b in the holding member 12. The door portion 15 is opened into the vehicle compartment side when pushed by the extending and expanding airbag 26. Moreover, the door portion 15 has therearound a thin breakaway portion 14 having an inverted U-shape as viewed from the vehicle compartment. And, the door portion 15 has a hinge portion as an integral hinge on the lower edge. When the airbag 26 expands, the door portion 15 is opened at the hinge portion 16 toward the lower side on the vehicle compartment side while being pressed by the airbag 26 to break the breakaway portion 14.

The case 19 is formed of a sheet metal into a generally rectangular box shape. As shown in Figs. 1 to 3, the case 19 is arranged as a housing portion for housing the folded airbag 26. Moreover, the case 19 houses the airbag 26 together with the inflator 21. The case 19 is provided with a peripheral wall portion 19a of a generally rectangular tubular shape, and a bottom wall portion 19d. The peripheral wall portion 19a is opened as the opening 19e on the vehicle rear side. The bottom wall portion 19d is formed into a generally rectangular shape to close the vehicle front side of the peripheral wall portion 19a. On the periphery of the opening 19e in the peripheral wall portion 19a, there is formed a flange portion 19b to be connected to the holding member 12. In the upper face of the peripheral wall portion 19a on the vehicle front side, there are formed a plurality of (e.g., two) mounting holes 19c for mounting and fixing the inflator 21 and the airbag 26. Moreover, the axis O of the peripheral wall portion 19a of the case 19 is arranged along the lower face 8a of the column cover 8 (or in the axial direction of the steering column 3), as shown in Fig. 1.

As shown in Figs. 1 to 3, 5 and 6, the inflator 21 comprises a cylindrical body 22 and two brackets 23 and 23. The body 22 can discharge an inflating gas G in response to an electric signal. The body 22 is provided with gas discharge ports 22a for discharging the inflating gas G. Moreover, the body 22 is activated simultaneously with a not-shown airbag device which is mounted in the steering wheel 1, in response to the electric signal coming from a control device for activating the airbag device. Each bracket 23 comprises a retaining ring 23a made of a sheet metal, and a bolt 23b protruding from the retaining ring 23a. This retaining ring 23a is mounted on the body 22 by fitting it elastically on the body 22 and by constricting it. The inflator 21 is mounted and fixed together with the airbag 26 in the case 19, as follows. First of all, the inflator 21 is arranged in the airbag 26, and the individual bolts 23b are protruded from the later-described mounting holes 29 of the airbag 26. Moreover, these bolts 23b are protruded from the individual mounting holes 19c of the case 19 and are fastened by nuts 24. Moreover, the not-shown lead wire is connected with the body 22.

Here, the case 19 may also be integrated with the holding member 12 by the pressing or welding method using a metallic material such as a sheet metal or by the die-casting method using a light metal alloy material of aluminum or the like. In this modification, the flange portion 19b of the case 19 is made large, and the mounting portions 12a are formed at the large flange portion 19b.

The airbag 26 is formed of a woven fabric having flexibility such as polyester or polyamide. As shown in Figs. 4 to 6, the airbag 26 is formed to have a generally rectangular plate shape upon completion of the extension and expansion.

The airbag 26 is constructed of two woven fabrics: a wall portion 27 facing the column cover (the vehicle side) in a generally rectangular shape; and a wall portion 28 facing the driver MD (the passenger M) in a generally rectangular shape. Moreover, the airbag 26 is formed by sewing the wall portions 27 and 28 at their periphery. In the lower side of the vehicle side wall portion 27, there are formed the mounting holes 29 for inserting the individual bolts 23b of the inflator 21 therethrough.

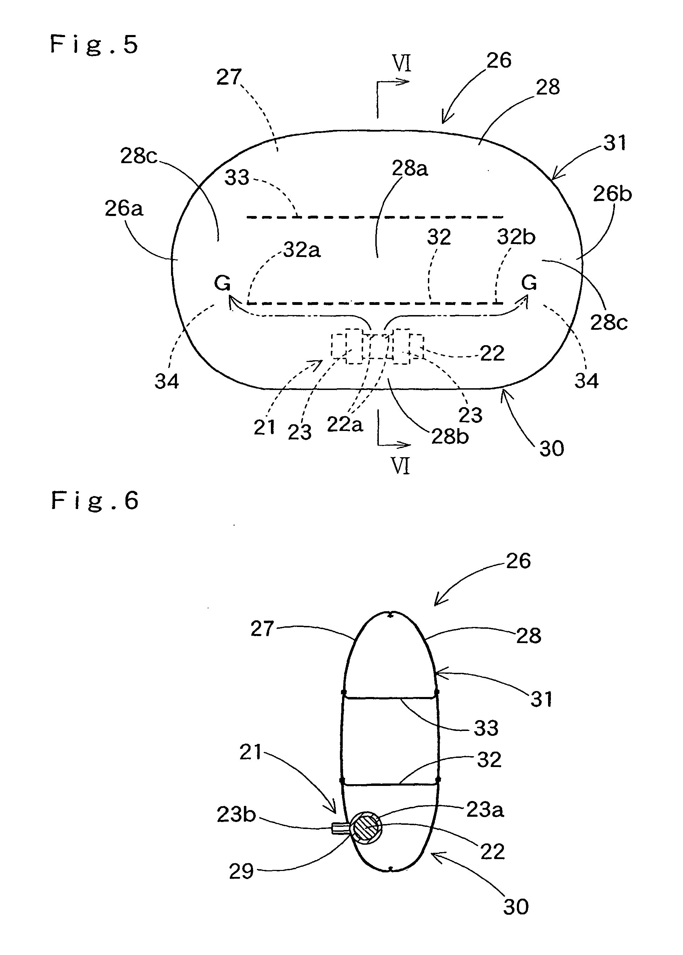

On the other hand, as shown in Fig. 5, the passenger side wall portion 28 includes a lower central portion 28b to the rear of the inflator 21. Moreover, the passenger side wall portion 28 comprises a central portion 28a, and left and right joining portions 28c and 28c merging into the central portion 28a. This central portion 28a is a portion at the transversely central position of the airbag 26. The joining portions 28c and 28c are positioned on the central side of two left and right edges 26a and 26b in the airbag 26 being extended flat.

Moreover, the airbag 26 is provided with a lower expansion portion 30 on the side housing the inflator 21, and an upper expansion portion 31 extending on the upper side of the lower expansion portion 30. This lower expansion portion 30 and upper expansion portion 31 are vertically divided at the arranged position of the later-described tether 32. The lower expansion portion 30 is a portion on the upstream side of the inflating gas G. The lower expansion portion 30 is a portion to protrude during extending and expanding of the airbag 26 backward from the communication hole 12b formed in the holding member 12. The lower expansion portion 30 covers the rear side of the communication hole 12b in the holding member 12. Also, the lower expansion portion 30 covers the lower side of the rear-facing side of the support face 12c arranged on the entire periphery of the communication hole 12b. Moreover, the lower expansion portion 30 can cover the front sides of the knees K (KL and KR) of the driver MD, too. The upper expansion portion 31 communicates with the lower expansion portion 30 downstream of the inflating gas G. Moreover, the upper expansion portion 31 is a portion protruding upward from the lower expansion portion 30 along the lower face 8a of the column cover 8. The upper expansion portion 31 covers from the upper side of the rear-facing side of the support face 12c to the vicinity of the upper end 8b on the lower face 8a side of the column cover 8 at least. Here, the lower expansion portion 30 during extending and expanding is set to have a larger transverse width than that of the communication hole 12b so that it can protect the two knees KL and KR of the driver MD sufficiently.

In the airbag 26, as shown in Figs. 5 and 6, there are arranged the tethers 32 and 33 for connecting the vehicle side wall portion 27 and the passenger side wall portion 28. These tethers 32 and 33 set the thickness sizes of the lower expansion portion 30 and the upper expansion portion 31 at the extending and expanding time. Specifically, the tethers 32 and 33 are thickness regulating means for inserting the airbag 26 smoothly into the clearance between the knees K of the driver MD and the column cover lower face 8a. The tethers 32 and 33 are made of a flexible material like the walls 27 and 28 of the airbag 26. Moreover, the tethers 32 and 33 are sewn to the walls 27 and 28. The tethers 32 and 33 are arranged generally in the transverse direction above the inflator 21. Further, the individual tethers 32 and 33 are arranged to have their two left and right ends removed from the two left and right edges 26a and 26b of the airbag 26. The tether 32 is arranged as the thickness regulating means and performs a role as a gas flow guide member, as will be described in the following. The tether 32 guides the inflating gas G discharged from the inflator 21 to the upper expansion portion 31 while also directing it toward the two left and right edges 26a and 26b of the airbag 26.

In the airbag 26, more specifically, the gas from inflator 21 is blocked above by the tether 32. Gas communication holes 34 and 34 are formed between the left end 32a of the tether 32 and the airbag left edge 26a and between the right end 32b of the tether 32 and the airbag right edge 26b. When the inflating gas G flows in the airbag upper expansion portion 31 which is downstream, the inflating gas G discharged from the inflator 21 flows in the airbag lower expansion portion 30, which is upstream, upward to the gas communication holes 34 and 34 while being directed leftward and rightward along the tether 32.

In the airbag 26, moreover, at the initial stage of the extension and expansion and before the upper expansion portion 31 completes its extension and expansion, the lower expansion portion 30 is so folded as to cover the left and right periphery of the communication hole 12b. The airbag 26 is folded through the following vertical folding step and transverse folding step.

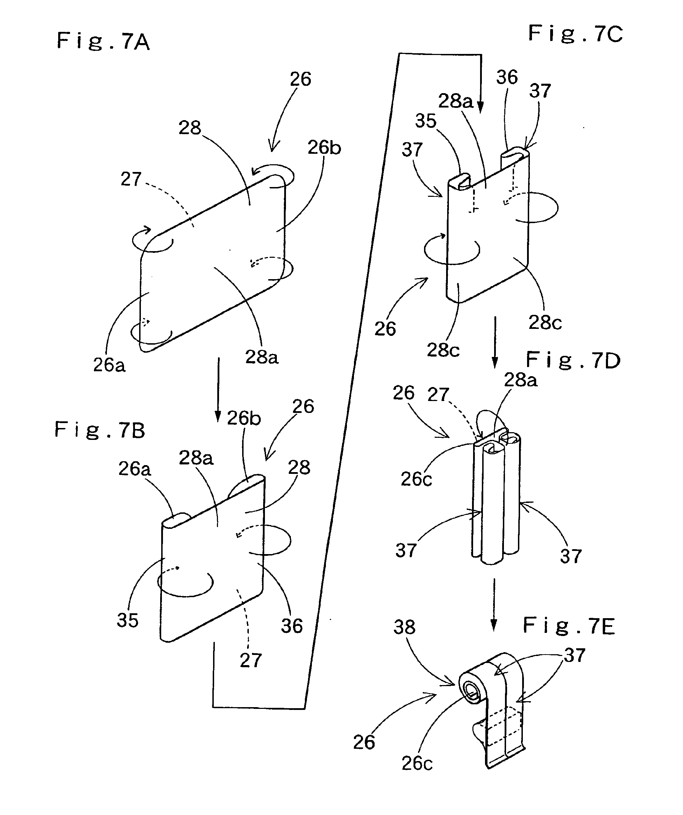

At the vertical folding step, as shown in Figs. 7A to 7D, the passenger side wall portion 28 is extended flat over the vehicle side wall portion 27, the two left and right edges 26a and 26b are vertically folded closer to the central portion 28a thereby to fold the airbag 26 to such a transverse width B1 as to house the same in the case 19. This vertical folding step of the airbag 26 is **characterized in that** the folding portions 37 and 37 on the left and right edge sides of the airbag 26 are respectively arranged on the sides of the vehicle side wall portion 27 at the position of the left and right joining portions 28c and 28c of the passenger side wall portion 28. The folded portions 37 and 37 on the two left and right edge sides of the airbag 26 at the vertically folding step can be prepared by folding them into bellows or by rolling the two left and right edges 26a and 26b on the side of the vehicle side wall portion 27.

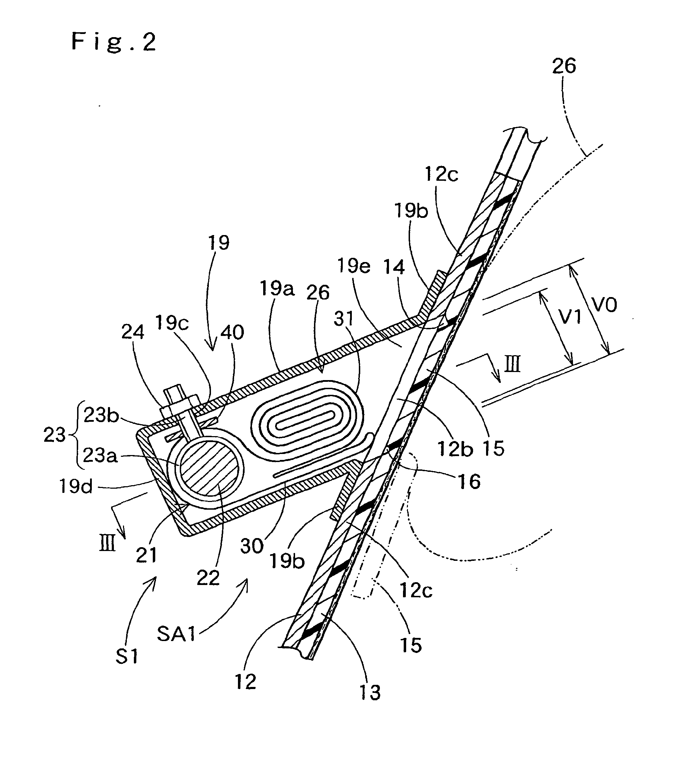

Moreover, the transverse folding step is done after the vertically folding step. At the transverse folding step, as shown in Figs. 7D and 7E, the upper edge 26c of the airbag 26 finished the vertically folding step is transversely folded closer to the side of the arranged position of the inflator 21 to form a folded portion 38 to such a vertical width V1 (see Fig. 2) that the airbag 26 can be housed in the case 19.

Here will be described how to mount the airbag device S1 on the vehicle. First of all, the airbag 26 is folded while housing the inflator 21. Here, the individual bolts 23b of the inflator 21 are protruded in advance from the mounting holes 29. Moreover, the not-shown lead wire extending from the body 22 is led out from the not-shown predetermined insert hole in the airbag 26.

The airbag 26 is folded through two steps, the vertical folding step and the transverse folding step above described.

At the vertical folding step, moreover, the passenger side wall portion 28 is extended flat against the vehicle side wall portion 27, as shown in Fig. 7A. Next, as shown in Fig. 7B, the two left and right edges 26a and 26b of the airbag 26 are so individually folded toward the side of the vehicle side wall portion 27 as to come closer to the central portion 28a of the passenger side wall portion 28. As shown in Fig. 7c, moreover, the two left and right folded edges 35 and 36 of the airbag 26 are folded close to the central portion 28a of the passenger side wall portion 28. At this time, the two edges 35 and 36 are individually folded toward the side of the vehicle side wall portion 27 to form the folded portions 37 and 37. Next, as shown in Fig. 7D, the folded portions 37 and 37 are so folded to complete the vertically folding step that they may be placed on the outer surface (i.e., on the vehicle rear side and on the passenger side) at the central portion 28a of the passenger side wall portion 28. At this time, the folded portions 37 and 37 are individually arranged on the side of the vehicle side wall portion 27 in the left and right joining positions 28c and 28c of the passenger side wall portion 28.

At the transverse folding step after the vertically folding step, as shown in Figs. 7D and 7E, the vertically folded airbag 26 is folded by rolling it from the upper edge 26c toward the vehicle side wall portion 27, to form the folded portion 38. This folded portion 38 is folded to have the vertically housing width V0 (see Fig. 2) of the case 19. Thus, the transversely folding step is completed to complete the folding work of the airbag 26.

After the airbag 26 was folded up, moreover, it is wrapped with the not-shown breakable wrapping film so that the airbag may not become loose, and the individual bolts 23b are protruded from the wrapping film. These individual bolts 23b thus protruded are assembled with spring nuts 40 having a thin sheet shape. Then, the airbag 26 and the inflator 21 are housed in the case 19, and the individual bolts 23b are protruded from the mounting holes 19c of the case 19. When the nuts 24 are screwed on the individual protruded bolts 23b, the inflator 21 and the airbag 26 can be housed and fixed in the case 19. Here, the not-shown lead wire extending from the inflator body 22 is led from the wrapping film and from the not-shown insert hole of the case 19. Then, the flange portion 19b of the case 19 is fixed on the holding member 12 by means of the bolts 17, and they are assembled to form an airbag assembly SA1.

After this, the mounting portions 12a and 12a formed on the left and right ends of the holding member 12 in the formed airbag assembly SA1 are individually fixed on the vehicle frame portions FC and FR arranged on the left and right sides, by means of the bolts 41. The airbag device S1 can be mounted on the vehicle, as shown in Figs. 1 to 4, by connecting the not-shown lead wire with the control circuit and by mounting the dashboard 10 and other items on the vehicle.

After the airbag device S1 is mounted on the vehicle, the inflating gas G is discharged from the gas discharge ports 22a if the specified electric signal is inputted to the inflator body 22. Then, the airbag 26 is expanded by the inflating gas G to break the not-shown wrapping film and to protrude backward while pushing and opening the door portion 15 of the airbag cover 13. After this, the airbag 26 extends and expands upward along the column cover lower face 8a while being transversely and vertically unfolded.

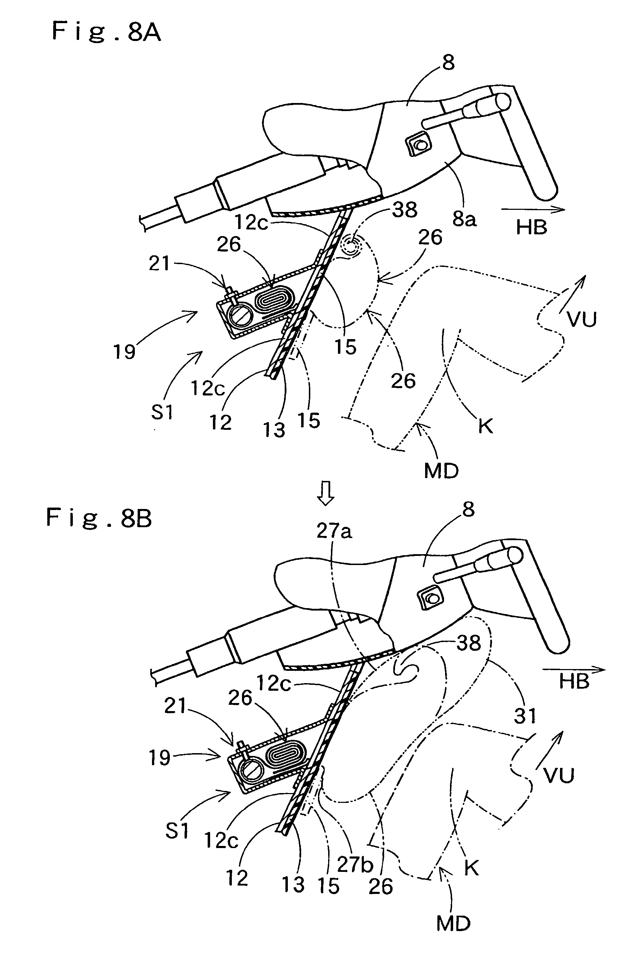

At the initial stage of the extension and expansion of the airbag 26, the lower central portion 28b confronting the inflator at the central portion 28a of the passenger side wall portion 28 is pushed by the inflating gas G discharged from the inflator 21, to protrude at first toward the side of the driver MD at the rear HB, as shown in Figs. 8A, 9A and 10A. At this time, as the lower central portion 28b protrudes, the folded portions 38, 37 and 37 move to the rear HB of the vehicle to break the breakaway portion 14 and then to open the door portion 15 of the airbag cover 13.

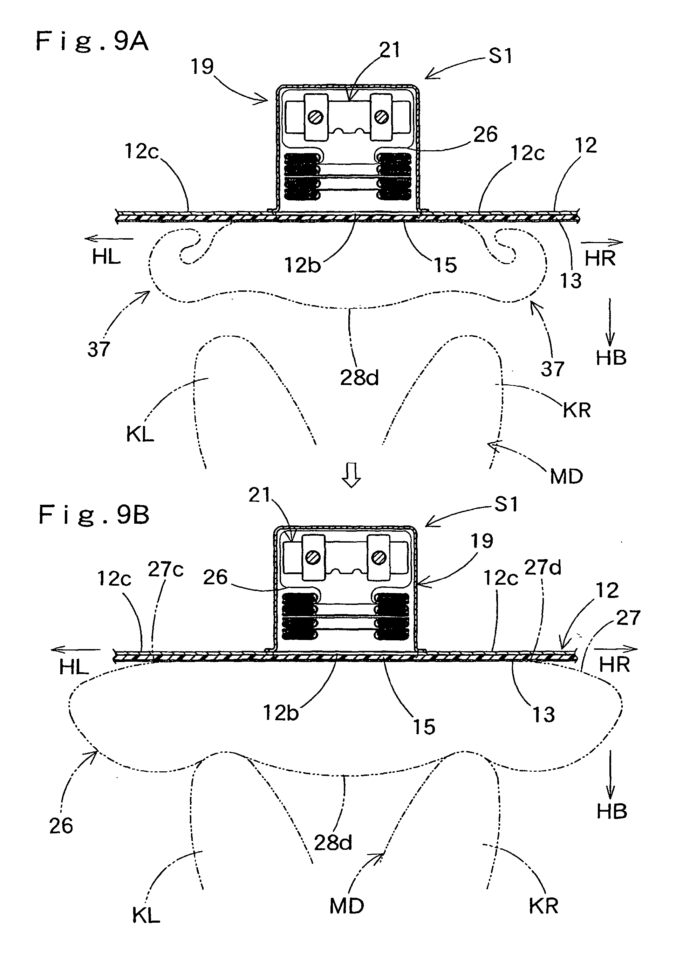

Simultaneously with this, joining positions 28d below the joining positions 28c leading to the lower central portion 28b also protrudes toward the driver MD side (see Fig. 9A). As the inflating gas G flows in, moreover, the folded portions 37 and 37 near the lower joining position 28d are unfolded. These folded portions 37 and 37 are individually arranged, when vertically folded, on the side of the vehicle side wall portion 27 of the left and right joining positions 28c and 28c of the passenger side wall portion 28. Therefore, the folded portions 37 and 37 near the lower joining position 28d are suppressed as much as possible from protruding toward the driver MD. As shown in Figs. 9A and 9B, more specifically, the folded portions 37 and 37 are unfolded leftward HL and rightward HR while being widely extended from the lower joining position 28d toward the column cover 8 (toward the holding member 12). Then, the airbag lower expansion portion 30 completes the extension and expansion.

After this, the protrusion of the central portion 28a of the passenger side wall 28 toward the driver MD proceeds upward VU from the lower central portion 28b. Simultaneously with this, the folded portions 37 and 37 are unfolded upward VU from the vicinity of the lower joining portion 28d. As a result, the transversely folded portion 38 extends and expands while being unfolded along the lower face 8a of the column cover 8. Thus, the airbag upper expansion portion 31 completes its extension and expansion.

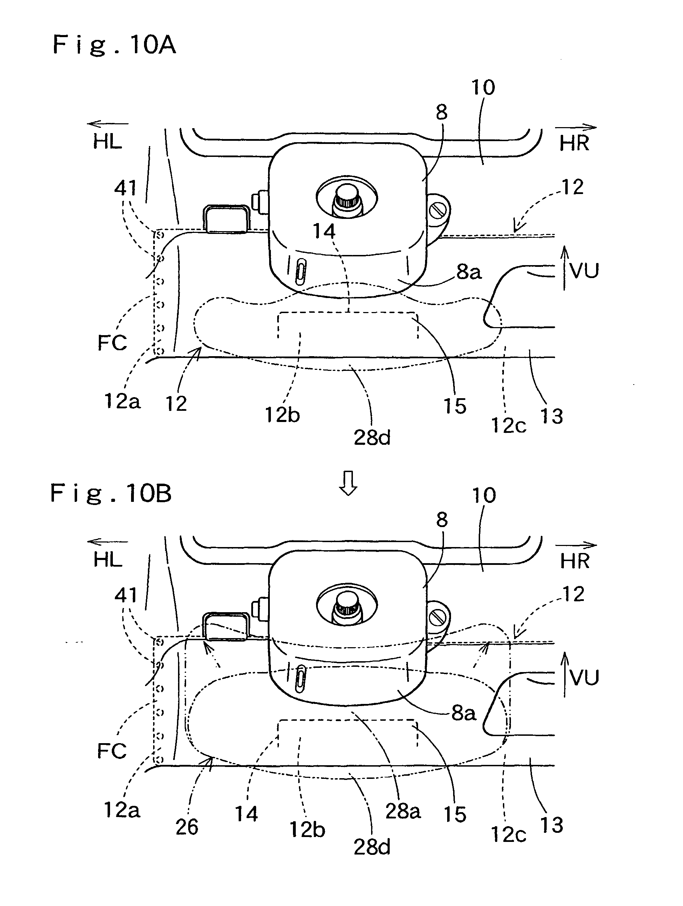

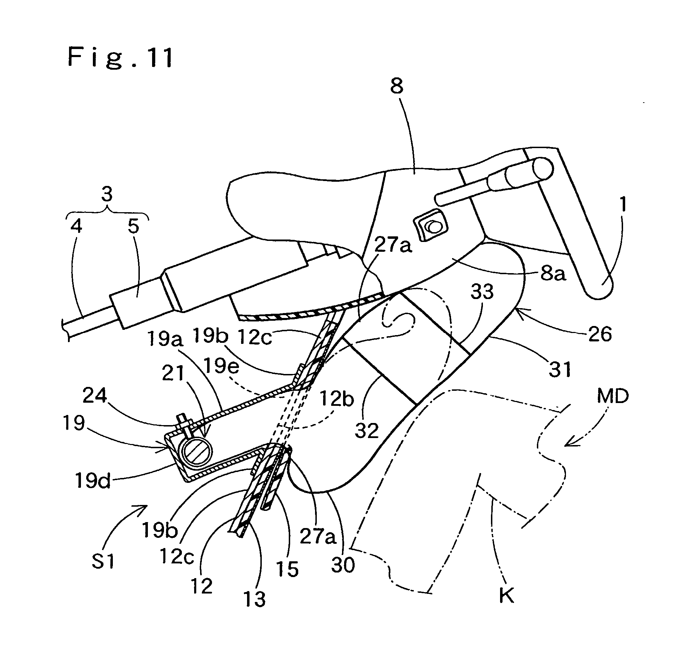

Moreover, the vehicle front-facing side (or the vehicle side wall portion 27) of the extending and expanding airbag 26 is supported, at its portions 27a, 27b, 27c and 27d extending and expanding vertically and transversely from the communication hole 12b of the holding member 12, through the airbag cover 13, as shown in Figs. 8A and 8B to 10A and 10B, by the support face 12c arranged on the periphery of the communication hole 12b. Moreover, the support face 12c supports the door portion 15 which is pushed and opened by the protruding airbag 26, as shown in Fig. 11.

In the airbag device S1 thus far described, the case 19 housing the folded airbag 26 and the inflator 21 is held by the holding member 12 arranged below the column cover 8. Moreover, the airbag device S1 is mounted on the vehicle by using the mounting portions 12a and 12a formed in the holding member 12. Therefore, the airbag device S1 can be mounted on the vehicle when the mounting portions 12a and 12a formed on the left and right ends of the holding member 12 holding the case 19 are mounted and fixed on the left and right specified frame portions FC and FR, highly rigid structural members in the vehicle. In the airbag device S1, moreover, the mounting portions 12a and 12a of the holding member 12 are formed, as shown in Fig. 4, at positions spaced transversely from the lower position of the steering column 3 or the arranged position of the case 19. Therefore, the works to mount the mounting portions 12a and 12a on the frame portions FC and FR can be done at the positions of the vehicle spaced transversely from below the steering column 3. In the airbag device S1, more specifically, the arranged positions of the mounting portions 12a and 12a are so transversely spaced from below the steering column 3 as to retain the needed installation space. Therefore, the work to mount the airbag device S1 on the vehicle is made easier than that of the case in which the case 19 is mounted and fixed directly on the column tube 5 or the structural member of the vehicle, at the position below the steering column 3.

Of course, the holding member 12 holding the case 19 is mounted on the frame portions FC and FR by using the mounting portions 12a and 12a so that it can be stably held even if it houses the airbag 26 and the inflator 21.

Moreover, the forward face (i.e., the vehicle side wall portion 27) of the airbag 26 which has extended and expanded is supported through the airbag cover 13 by the support face 12c of the holding member 12. Even when the airbag 26 having extended and expanded interferes with the knees K of the driver MD, therefore, it does not move forward but can protect the knees K of the driver MD properly and stably.

In the airbag device S1, therefore, it is possible to retain the stable support of the case 19 and the airbag 26 after being extended and expanded, and to facilitate the work to mount the airbag device S1 on the vehicle.

Moreover, the case 19 housing the folded airbag 26 and the inflator 21 is assembled with the holding member 12 to form the airbag assembly SA1. Therefore, the airbag 26, the inflator 21, the case 19 and the holding member 12 can be transported and stored in the assembled state. As a result, it is easy to handle the individual parts such as the airbag 26 and the inflator 21 before mounted on the vehicle.

Here in the airbag device S1 thus far described, the holding member 12 is mounted and fixed on the frame portions FC and FR of the vehicle, to which the mounting portion of the vehicle for mounting and fixing the holding member 12 should not be limited. The holding member need not be directly connected and fixed to the structural member such as the frame portion of the vehicle, if it could support the holding member stably.

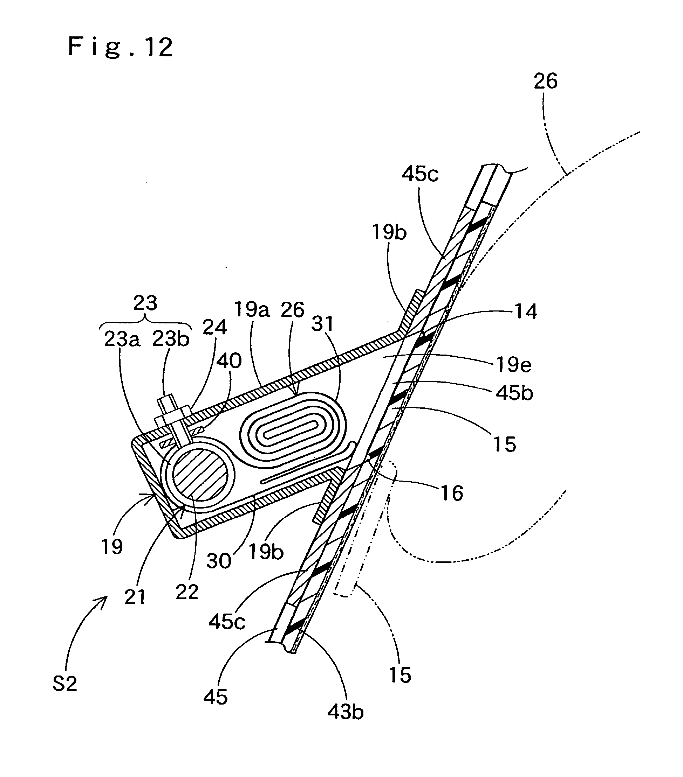

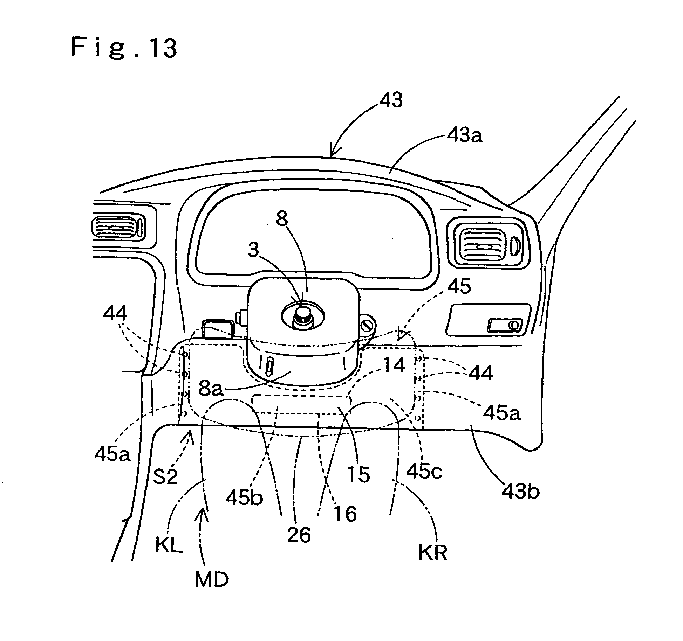

The mounting portion can be the lower panel 43b of a dashboard 43, as in the airbag device S2 of a second comparative example shown in Figs. 12 and 13. In this second comparative example, the dashboard 43 comprises an upper panel 43a and the lower panel 43b. Moreover, a holding member 45 is mounted and fixed on the lower panel 43b acting as the mounting portion. In predetermined portions of the lower panel 43b, more specifically, there are connected a plurality of bolts (e.g., eight) which protrude toward the front. Moreover, the holding member 45 is mounted and fixed on the lower panel 43b by fastening mounting portions 45a and 45a, formed on the two transverse ends of the holding member 45, by means of the bolts 44. The holding member 45 is provided like the aforementioned holding member 12 in the airbag device S1, with a communication hole 45b and a support face 45c arranged on the periphery of the communication hole 45b. This communication hole 45b communicates with the opening 19e of the case 19. The support face 45c can support the front side face of the extending and expanding airbag 26. Moreover, the support face 45c is made transversely wider than the airbag 26 which has extended and expanded so that it can support the face of the airbag 26 on the vehicle front side, as shown in Fig. 13. The door portion 15 is integrated with the lower panel 45b by arranging the breakaway portion 14 having an inverted U-shape around on its peripheral edges and arranging the hinge portion 16 on its lower edge.

Here, the constructions of the airbag device S2, except for the dashboard 43 and the holding member 45, are similar to those of the aforementioned airbag device S1. Therefore, the same members will not be explained, and will be designated by the same reference numerals.

In case the airbag device S2 is given the construction thus far described, too, the mounting portions 45a and 45a of the holding member 45 are formed at specified positions spaced leftward and rightward from the lower position of the steering column 3 or the arranged position of the case 19, as shown in Fig. 13. Even in case the holding member 45 is mounted on the lower panel 43b, as described above, the work to mount the mounting portions 45a and 45a on the lower panel 43b are done at positions spaced transversely from the position below the steering column 3 so that it can be simplified.

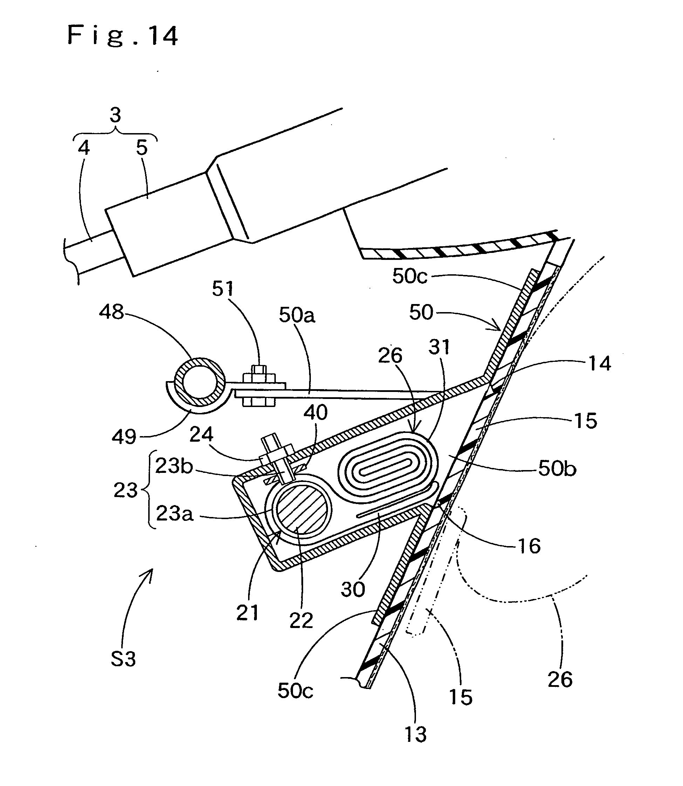

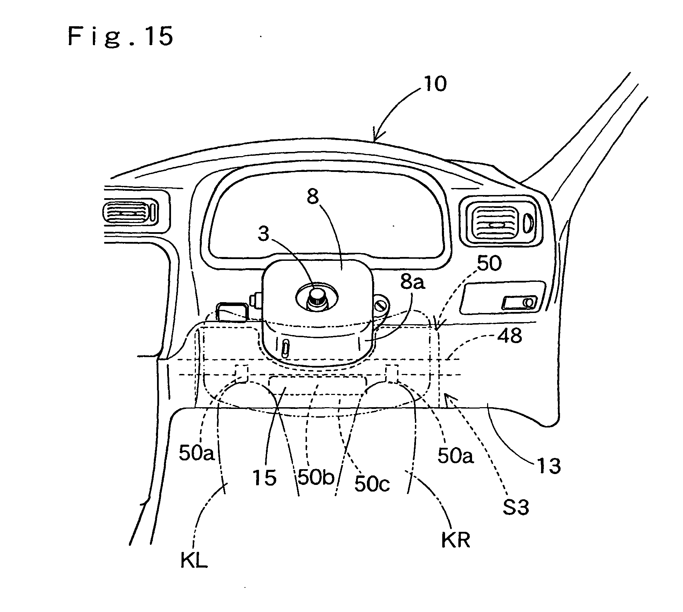

Moreover, the mounting portion may be a dashboard reinforcement 48 which is a structural member of the vehicle as in an airbag device S3 of a third comparative example shown in Figs. 14 and 15. The dashboard reinforcement 48 is formed into a pipe shape and is so arranged below the steering column 3 as to intersect the steering column 3 generally perpendicularly. Moreover, a holding member 50 is provided with a plurality of (e.g., two) mounting plates 50a and 50a protruding forward of the vehicle. The holding member 50 is mounted and fixed on the dashboard reinforcement 48 by fixing the vehicle front side end portion of each mounting plate 50a on a mounting plate portion 49 fixed on the dashboard reinforcement 48, by means of a bolt 51. Moreover, the holding member 50 is integrated with the case 19 by a die-casting method, as shown in Fig. 14. Moreover, the holding member 50 is provided, like the foregoing holding members 12 and 45, with a communication hole 50b and a support face 50c arranged on the periphery of the communication hole 50b. Moreover, the support face 50c is made transversely larger than the airbag 26 having extended and expanded, as shown in Fig. 15.

Here, the constructions of the airbag device S3 other than the holding member 50 are similar to those of the aforementioned airbag device S1. . Therefore, the common members will be omitted from description by designating them by the common reference numerals.

In the case of the aforementioned construction of the airbag device S3, too, the mounting portions 50a and 50b of the holding member 50 are formed at positions spaced transversely from the specified position below the steering column 3 or the arranged position of the case 19, as shown in Fig. 15. Even in case the holding member 50 is mounted on the dashboard reinforcement 48, as described above, the work to mount the mounting portions 50a and 50a on the dashboard reinforcement 48 are done at the positions spaced transversely from the position below the steering column 3 so that it can be simplified.

Here in the airbag device S3, the airbag assembly is made by housing the airbag 26 and the inflator 21 in the case 19 integrated with the holding member 50 and by mounting and fixing the airbag cover 13 on the holding member 50. Moreover, this airbag assembly is mounted on the vehicle by using the mounting portions 50a and 50a.

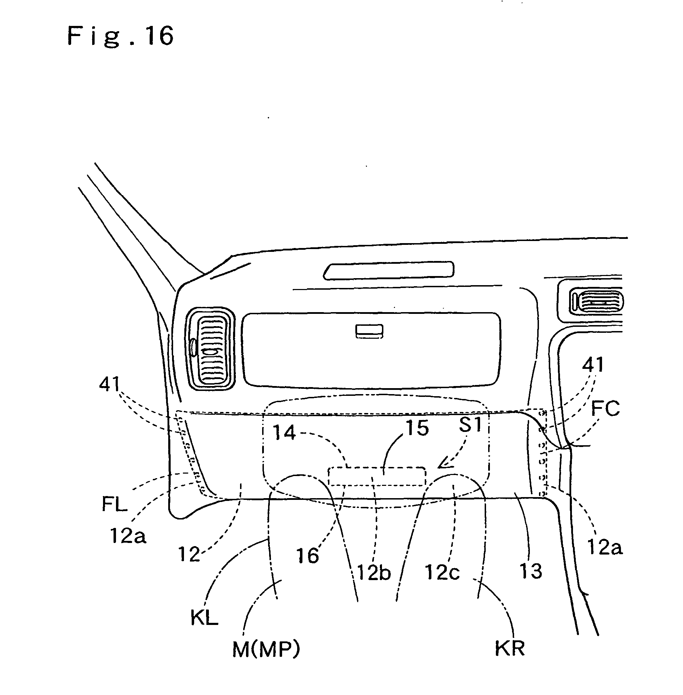

The first to third comparative examples have been described by exemplifying the airbag devices S1 to S3 arranged on the vehicle front side of the driver MD so as to protect the knees of the driver MD. In order to protect the knees of a passenger MP seated on the passenger's seat, however, the airbag device S1 may be arranged in front of the passenger MP seated on the rider's seat, as shown in Fig. 16. Here in the shown example, the mounting portions 12a and 12a formed at the left and right ends of the holding member 12 for holding the case are individually connected and fixed to the left and right frame portions FL and FC as the mounting portions of the vehicle, by means of the bolts 41. The frame portion FL is a front body pillar in the body of the vehicle, and the frame portion FC is a center brace in the body of the vehicle.

In the airbag devices S1 to S3, moreover, the mounting portion of the vehicle for mounting and fixing the holding members 12, 45 and 50 need not be limited to the aforementioned ones. The mounting portion may be the column tube 5 or the like. In the holding members 12, 45 and 50, moreover, the mounting portions 12a, 45a and 50a are formed at specified positions spaced transversely away from the case 19. However, the positions for forming the mounting portions should not be limited thereto but may be located for example to be vertically spaced away from the case 19.

Here will be described a knee protecting airbag device S4.

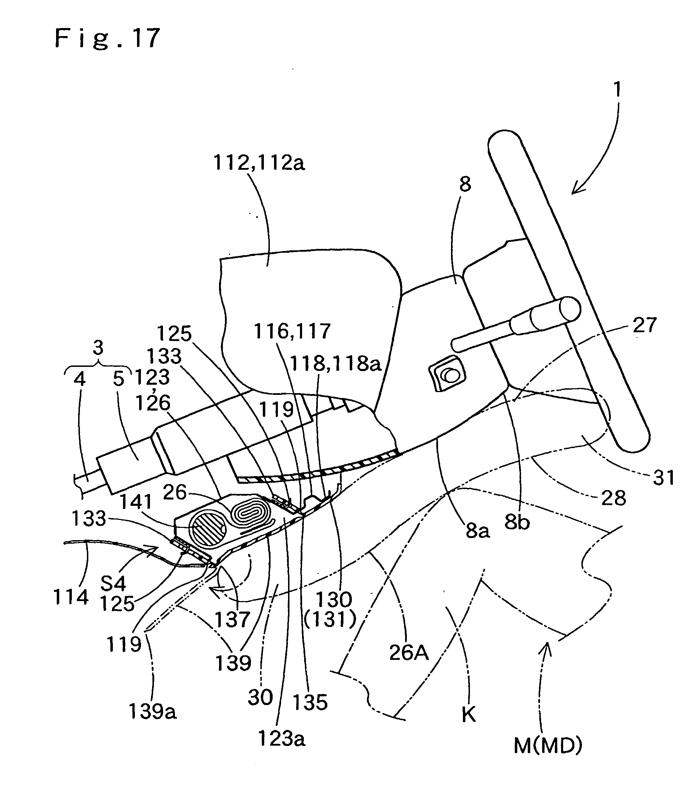

The knee protecting airbag device S4 of an embodiment is arranged below the steering column 3 or on the vehicle front side of the driver MD, as shown in Figs. 17 to 20, so as to protect the knees K of the driver MD as the passenger M.

Here, the constructions of the vehicle mounted the airbag device S4 of the embodiment other than a dashboard 112 are similar to those of the aforementioned airbag device S1 of the first comparative example. Therefore, the common members will be omitted on their description by designating them by the common reference numerals.

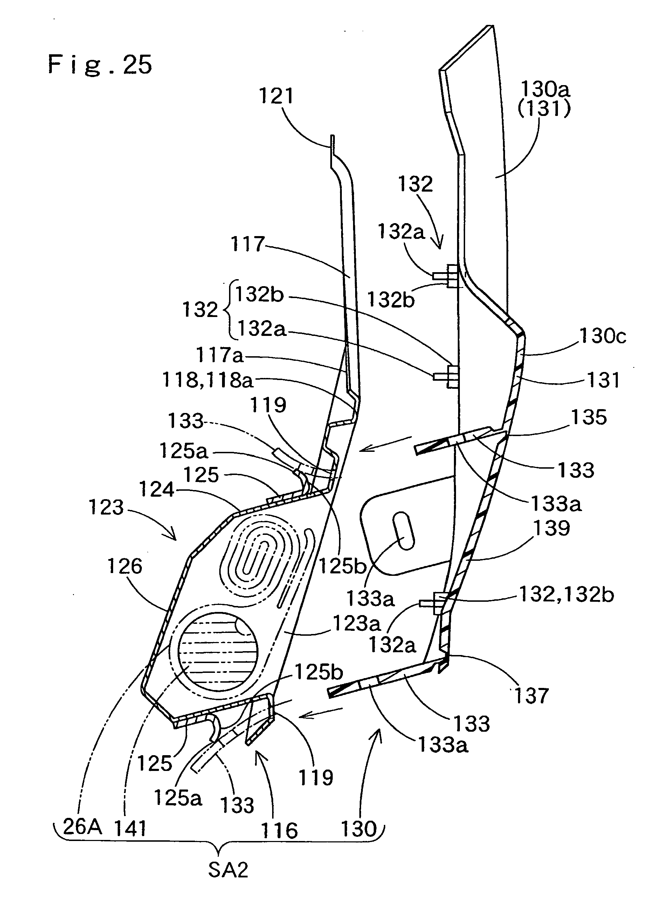

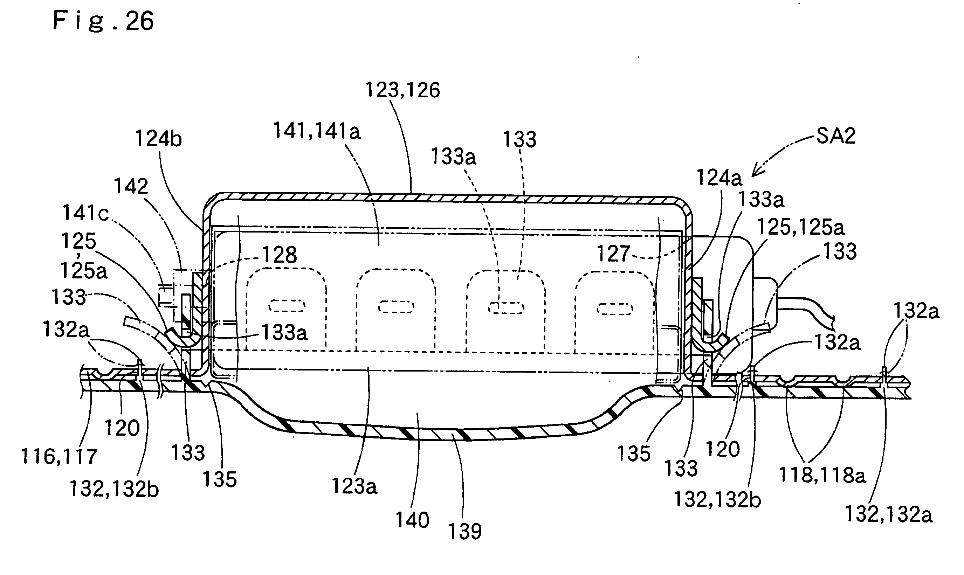

The knee protecting airbag device S4 comprises a folded airbag 26A, an inflator 141, an airbag cover 130, and a knee panel 116 as the holding member. In the airbag device S4 of the embodiment, moreover, the airbag 26A, the inflator 141 and the airbag cover 130 are assembled with the knee panel 116 to make an airbag assembly SA2 (see Figs. 25 and 26). Moreover, the airbag assembly SA2 thus integrated by assembling those individual parts is mounted on the vehicle, and the airbag device S4 is mounted on the vehicle.

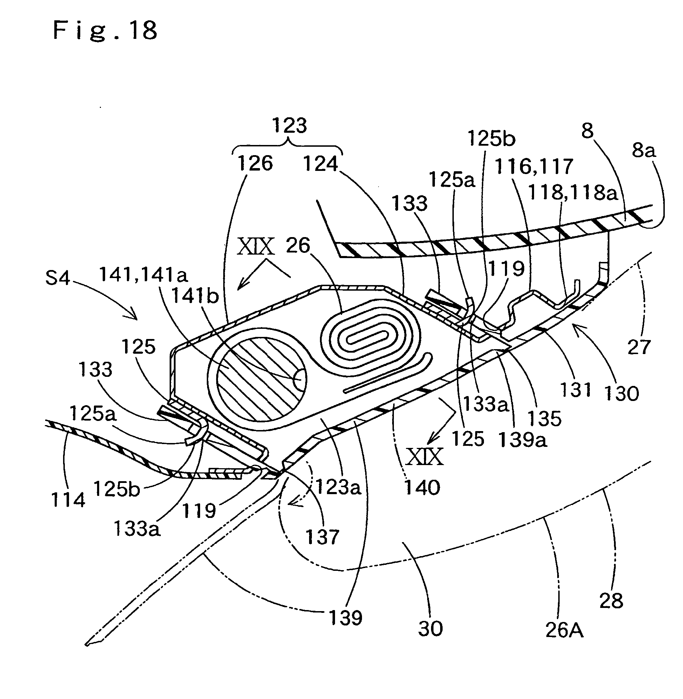

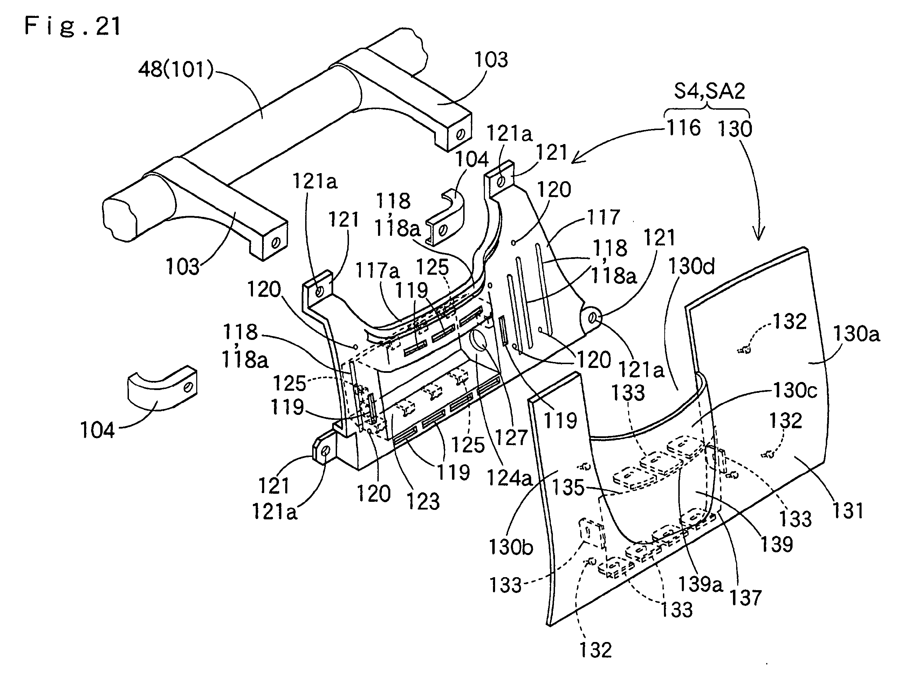

The knee panel 116 is made of a sheet metal and is provided with a body portion 117 having a flat shape, and a housing portion 123, as shown in Figs. 18 to 22. The housing portion 123 houses the folded airbag 26A and the inflator 141.

The housing portion 123 is formed into a bottomed box shape having an opening 123a sloping downward toward the rear. In the case of the embodiment, the housing portion 123 is formed into a generally rectangular box shape. The housing portion 123 has a bottom wall portion 126 of a generally rectangular shape and a peripheral wall portion 124 of a generally rectangular tubular shape. In the peripheral wall portion 124 surrounding the opening 123a, moreover, mounting holes 127 and 128 of larger and smaller diameters for mounting the inflator 141 are individually formed in wall portions 124a and 124b which are positioned in the transverse direction. The mounting hole 127 is constructed to insert thereinto the later-described cylindrical body portion 141a of the inflator 141. Moreover, the mounting hole 127 can support the outer circumference of the body portion 141a on its inner circumference. The mounting hole 128 is too small to insert the body portion 141a of the inflator 141 but to allow a screw portion 141c of the inflator 141 to pass. The inflator 141 is mounted in the housing portion 123 in the following manner. First of all, the inflator 141 is so inserted into the mounting hole 127 from the outside of the housing portion 123 as to protrude the screw portion 141c from the mounting hole 128. After this, a nut 142 is screwed on the screw portion 141c.

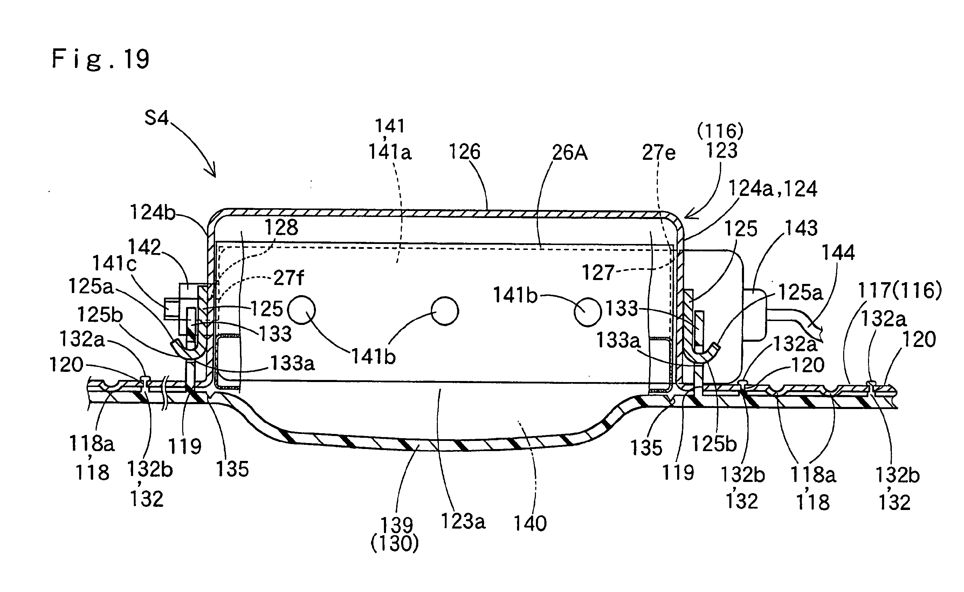

On the outer circumference of the peripheral wall portion 124, moreover, there are fixed a plurality of hooks 125 which have a generally J-shaped section. Each hooks 125 has a retaining hook portion 125a at the top end. The individual retaining hook portion 125a is inverted to the bottom wall portion 126 side. In the case of the embodiment, moreover, there are arranged nine hooks 125. Specifically, four hooks 125 are arranged at positions (on the lower portion of the peripheral wall portion 124) along the later-described hinge portion 137 in the airbag cover 130. Moreover, three hooks 125 are arranged at positions (on the upper face side of the peripheral wall portion 124) along the leading edge 139a of the later-described door portion 139 of the airbag cover 130. As shown in Fig. 19, moreover, one hook 125 is arranged, respectively, on the portions arranged in the transverse direction of the peripheral wall portion 124.

The body portion 117 is formed into a generally rectangular shape extending from the periphery of the opening 123a of the housing portion 123. The body portion 117 is positioned on the front sides of the left and right knees K (KL and KR) of the seated driver MD. At the four corners of the periphery in the body portion 117, individually, there are arranged mounting members 121 for connecting the body portion 117 to the body 101 of the vehicle. Here in the vicinity of the upper edge side of the opening 123a in the body portion 117, there is formed a recess 117a for the protruding lower face 8a of the column cover 8. The upper edge of the opening 123a in the body portion 117 is so curved as to protrude toward the rear in a manner to match the curved state of the column cover lower face 8a. Between the periphery of the opening 123a and the outer periphery of the body portion 117, there are formed ribs 118a for enhancing the rigidity of the body portion 117. The rear-facing surface of each rib 118a constructs a support portion 118 for supporting the later-described general portion 131 of the airbag cover 130.

Along the periphery of the housing portion opening 123a of the body portion 117, moreover, there are formed a plurality of through holes 119. Each through hole is opened in a generally rectangular shape. These through holes 119 can pass mounting members 133 to be retained on the individual hooks 125 in the airbag cover 130. Moreover, the individual through holes 119 are arranged on the body portion 117 corresponding to the individual retaining hook portions 125a along the peripheral wall portion 124.

On the left and right sides apart from the housing portion 123 in the body portion 117, moreover, there are formed a plurality of mounting holes 120 which is arranged through the body portion 117. These mounting holes 120 are portions for mounting the airbag cover 130 on the knee panel 116 by using the thermal caulking method. This airbag cover 130 is mounted on the knee panel 116 in the following manner. First of all, the later-described mounting leg portions 132 of the airbag cover 130 are inserted into the individual mounting holes 120. After this, the leading ends 132a of the individual mounting leg portions 132 are melted and radially enlarged so that they are prevented after solidifying from coming out of the mounting holes 120. In short, the airbag cover 130 is mounted on the knee panel 116 by using the mounting leg portions 132 and the hooks 125 together.

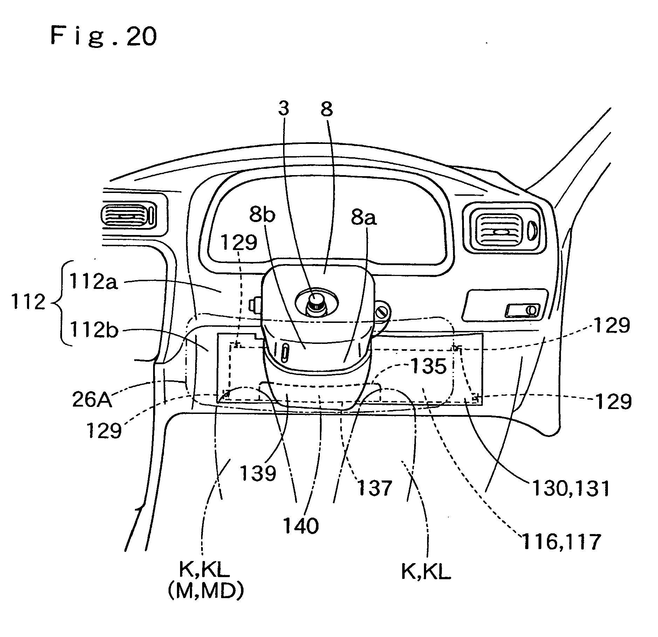

In the individual joining members 121 of the knee panel 116, moreover, there are formed joint holes 121a for mounting the knee panel 116 on the side of the body 101 by means of bolts 129 (see Fig. 20). For mounting the individual joining members 121, moreover, there are arranged brackets 103 and 104 at the body 101 side. These brackets 103 and 104 serve as kinetic energy absorbing members for absorbing the kinetic energy of the knees K of the driver MD. When the airbag 26A completes the extension and expansion and is pushed by the knees K of the driver MD, the airbag 26A cannot absorb all the kinetic energy of the knees K, in case that the passenger side wall portion 28 of the airbag 26A contacts the vehicle side wall portion 27, pushed by the knees K. At this time, the brackets 103 and 104 plastically deform and absorb the forward energy from the knees K. Moreover, the brackets 103 and 104 elastically deform even if the knees K of the passenger MD interfere with the knee panel 116 while the airbag 26A is in the unexpanded state. The brackets 103 and 103 are connected to the dashboard reinforcement 48 on the side of the body 101. The brackets 104 and 104 are connected to the not-shown center brace or front body pillar of the body 101.

Here, the embodiment has been described where the knee panel 116 connected to the body portion 117 and the housing portion 123 is pressed into one unit. However, the knee panel 116 may be suitably formed by welding a sheet metal.

The airbag cover 130 is made of a thermoplastic elastomer such as polyolefin. The airbag cover 130 is given a larger external shape than that of the knee panel 116, as shown in Figs. 18 to 22, so that it may be able to cover the rear-facing side of the knee panel 116.

Here, the airbag cover 130 is arranged on the side of the lower panel 112b on the periphery of the column cover 8 in the dashboard 112 which is composed of an upper panel 112a and a lower panel 112b. The airbag cover 130 covers the lower side periphery of the column cover 8 protruding from the dashboard 112. For this purpose, the airbag cover 130 is provided near the center, as viewed from the vehicle rear, with a recessed portion 130d which allows to protrude the column cover 8 to the rear side. Below the recessed portion 130d in the airbag cover 130, there is arranged a raised portion 130c which is so curved to the rear of the vehicle on its upper edge side as to match the curved face on the side of the column cover lower face 8a. On the two left and right sides of the raised portion 130c in the airbag cover 130, moreover, there are arranged flat portions 130a and 130b which extend to cover the two left and right sides of the body portion 117 of the knee panel 116.

Moreover, the airbag cover 130 comprises the door portion 139 for covering the opening 123a of the housing portion 123, and the general portion 131 for covering the vehicle rear side of the body portion 117.

The door portion 139 is arranged below the raised portion 130c. The door portion 139 is formed into a generally rectangular plate shape for covering the opening 123a slightly more than necessary. At the inverted U-shaped portion of the outer periphery of the door portion 139, there is formed a breakaway portion 135 which is so thinned and connected to the general portion 131 that the door portion 139 may be opened downward. The breakaway portion 135 is so formed to have continuous or interrupted grooves on the vehicle front side face that it could be easily broken when the door portion 139 is pushed by the expanding airbag 26A.

On the lower edge side of the door portion 139, moreover, there is formed the hinge portion 137, which provides a pivot for the door portion 139 when the breakaway portion 135 is broken to allow the door portion 139 to open. The hinge portion 137 is an integral hinge having such a thickness smaller than that of the general portion 131 and the door portion 139 as is within the unbreakable range.

In the vicinity of the entire periphery of the housing portion opening 123a in the general portion 131, moreover, the mounting members 133 protrude forward. Each of these mounting members 133 extends through each through hole 119 in the body portion 117 of the knee panel 116. Each mounting members 133 is formed into a generally rectangular plate shape. In each mounting member 133, there is formed a retaining hole 133a which is opened in a rectangular shape. This retaining hole 133a is held by the retaining hook portion 125a of the hook 125.

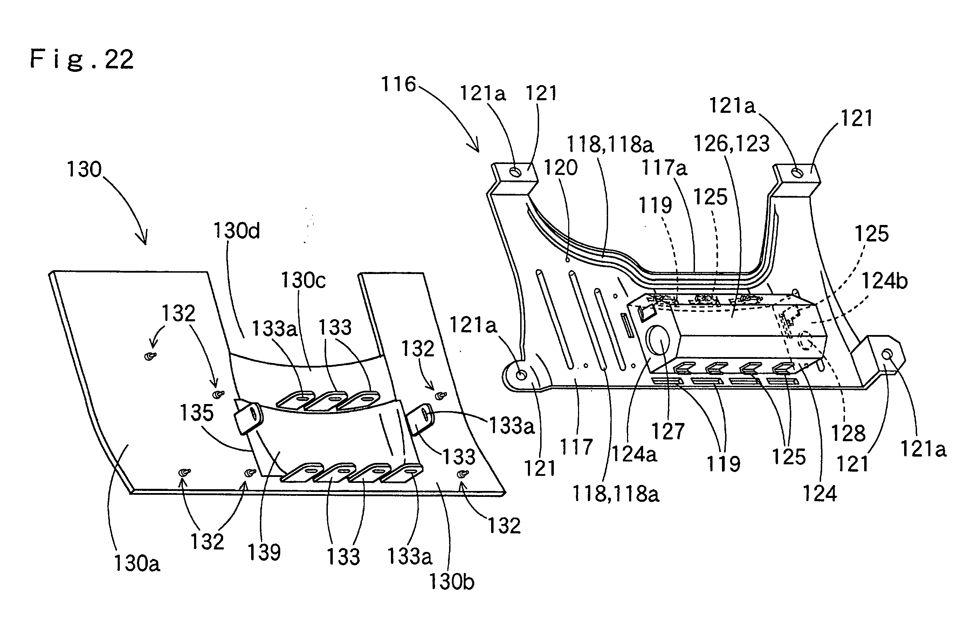

At the predetermined positions of the general portion 131, on the other hand, there are formed the mounting leg portions 132. Each mounting leg portion 132 is thermally caulked and retained in each mounting hole 120 in the body portion 117 of the knee panel 116. As shown in Figs. 22 and 25, each mounting leg portion 132 is formed to have such a rod shape before thermally caulked as to be insertable into the mounting hole 120. As shown in Figs. 19 and 26, moreover, each mounting leg portion 132 is provided at its leading end with the head portion 132a which is crushed after being thermally caulked. On the root side of each mounting leg portion 132, there is formed a root portion 132b of a column or cross shape, which abuts against the body portion 117 when the head portion 132a is thermally caulked and fixed in the mounting hole 120.

The inflator 141 is, as shown in Figs. 17 to 19, of the cylinder type capable of discharging the inflating gas G when fed with the electric signal. The inflator 141 has the cylindrical body portion 141a provided with gas discharge ports 141b. In the inflator 141, moreover, the screw threaded portion 141c protrudes from one end of the body portion 141a. This inflator 141 is held in the following manner in the housing portion 123, as has been described hereinbefore. Specifically, the inflator 141 is inserted into the housing portion 123 in the knee panel 116 from the mounting hole 127, and the nut 142 is fastened on the screw portion 141c protruding from the mounting hole 128. Then, the screw portion 141c side face of the body portion 141a is pressed to the periphery of the mounting hole 128 of the housing portion 123. At this time, the face of the body portion 141a separate from the screw portion 141c is supported on the inner circumference of the mounting hole 127. The inflator 141 extends, when housed in the housing portion 123, through the later-described mounting holes 27e and 27f of the airbag 26A.

Like the aforementioned inflator in the airbag device S1, moreover, the inflator 141 is activated when fed with the electric signal from the control device for activating the not-shown airbag device mounted on the steering wheel 1, simultaneously with the airbag device for the steering wheel. On the end of the body portion 141a that protrudes out of the housing portion 123, there is arranged a connector 143 which is connected with a lead wire 144 connected with the airbag activating circuit.

The airbag 26A used has a construction similar to the airbag 26 in the airbag device S1 of the first comparative example. Therefore, the description will be omitted by designating the common reference numerals. In the lower side of the vehicle side wall portion 27 in the airbag 26A, there are formed the two mounting holes 27e and 27f. The mounting hole 27e has such an internal diameter substantially equal to the external diameter of the body portion 141a as can insert the body portion 141a of the inflator 141 thereinto. The mounting hole 27f has such an internal diameter smaller than the external diameter of the body portion 141a but which can pass the screw portion 141c thereinto. Moreover, the airbag 26A is mounted on the knee panel 116 in the following manner. First of all, the inflator body portion 141a is inserted into the mounting hole 27e of the airbag 26A, and the screw portion 141c is inserted into the mounting hole 27f. At this time, the inner circumferences of the mounting holes 27e and 27f are supported by the body portion 141a and the screw portion 141c of the inflator 141. Moreover, the airbag 26A is mounted on the knee panel 116 by using the inflator 141 which is housed in the housing portion 123.

Here will be described how to mount the airbag device S4 on the vehicle. Like the aforementioned airbag 26 in the airbag device S1, the airbag 26A is folded at first. The airbag 26A is wrapped, after being folded up, with the not-shown breakable wrapping film so that it may not become loose. After this, the airbag 26A is so housed in the housing portion 123 that the mounting holes 127 and 27e and the mounting holes 128 and 27f may match each other. Here, the wrapping film is broken in advance at the portions of the mounting holes 27e and 27f.

After this, the side of the screw portion 141c of the inflator 141 is inserted from the mounting holes 127 and 27e into the airbag 26A housed in the housing portion 123. Moreover, the nut 142 is fastened on the screw portion 141c protruding from the mounting holes 27f and 128, and the end face of the body portion 141a on the side of the screw portion 141c is pushed through the periphery of the mounting hole 27e of the airbag 26A to contact with the inner circumference of the housing portion 123. Then, the inflator 141 and the airbag 26A can be mounted in the housing portion 123.

Then, the airbag cover 130 is mounted on the knee panel 116. For this, as shown in Figs. 25 and 26, the mounting members 133 are inserted at first into the corresponding through holes 119 from the vehicle rear side of the knee panel 116. Simultaneously with this, the rounded rod-shaped head portions 132a of the mounting leg portions 132 are inserted into the corresponding mounting holes 120.

At this time, the individual mounting members 133 are elastically deformed to separate from the housing portion 123, as indicated by double-dotted lines in Figs. 25 and 26, through interfering with curved guide faces 125b on the rear side of the retaining hook portions 125a of the hooks 125. If the retaining holes 133a are arranged at the positions of the retaining hook portion 125a, the mounting members 133 are restored. Then, the retaining hook portions 125a are inserted into the retaining holes 133a. In other words, the periphery of the retaining holes 133a is automatically held by the object-catching tips 125a merely by inserting the mounting members 133 into the through holes 119.

Moreover, the head portions 132a of the mounting leg portions 132 protruding from the individual mounting holes 120 are heated and thermally caulked to larger diameters with the root portions 132b of the mounting leg portions 132 abutting against the periphery of the mounting holes 120, so that they are retained on the periphery of the mounting holes 120 on the front side face of the body portion 117 of the knee panel 116. As a result, the airbag cover 130 can be mounted on the knee panel 116 to form the airbag assembly SA2.

When this airbag assembly SA2 is connected by fastening the individual joining members 121 of the body portion 117 on the brackets 103 and 104 on the body 101 side by means of the bolts 129, the knee protecting airbag device S4 can then be mounted on the vehicle.

After the airbag device S4 was mounted on the vehicle, the lead wire 144 is connected with the airbag activating circuit, and the upper panel 112a and the lower panel 112b of the dashboard 112 and an under cover 114 (see Figs. 17 and 18) is mounted on the vehicle.

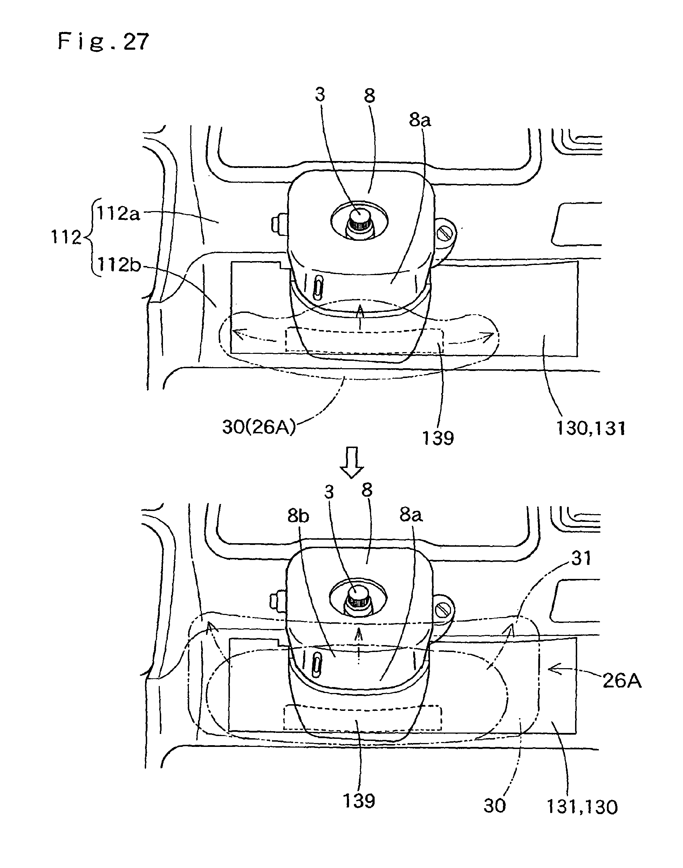

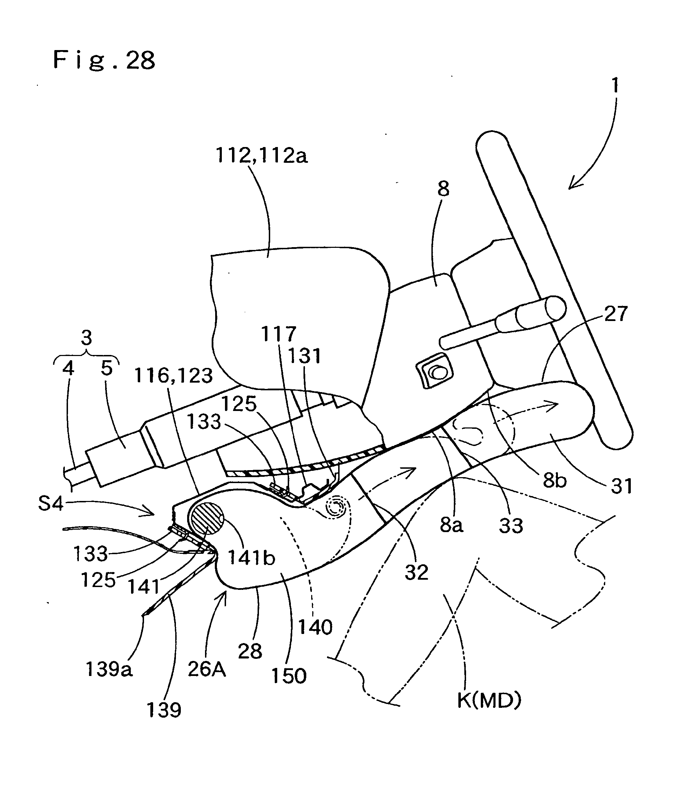

If the predetermined electric signal is inputted to the inflator 141 after the airbag device S4 was mounted on the vehicle, the inflating gas G is discharged from the gas discharge ports 141b to inflate the airbag 26A. Then, the airbag 26A breaks the not-shown wrapping film and pushes the door portion 139 of the airbag cover 130 thereby to break the breakaway portion 135, so that the door portion 139 is opened downward on the hinge portion 137. As a result, the airbag 26A protrudes backward of the vehicle from the opening 123a of the housing portion 123 through an opening 140 of the airbag cover 130. Moreover, the airbag 26A extends and expands largely upward (see Figs. 27 and 28) along the column cover lower face 8a while being transversely and vertically unfolded.

At the airbag cover 130 in the airbag device S4 of the embodiment, moreover, the mounting members 133 arranged at the portions near the periphery of the opening 123a in the general portion 131 are mounted on the housing portion 123 through the through holes 119 of the knee panel 116. During the extending and expanding of the airbag 26A, therefore, the breakaway portion 135 and the hinge portion 137 of the general portion 131 at the portions near the periphery of the opening 123a hardly move at all relative to the housing portion 123. As a result, the pushing force of the airbag 26A acts properly to break the breakaway portion 135 smoothly. Moreover, the hinge portion 137 for providing the pivot at the opening time hardly moves at all relative to the housing portion 123 so that it can stabilize the opening action of the door portion 139. Therefore, the door portion 139 can smoothly open when pushed by the airbag 26A, even if the airbag cover 130 is made of a synthetic resin such as a thermally plastic elastomer.

In the fourth airbag device S4, therefore, the door portion 139 can be smoothly opened by the push of the airbag 26A, even when the airbag cover 130 having the integrated door portion 139 is mounted on the knee panel 116 (as the holding member) arranged in front of the knees K of the driver MD.

In order to retain the smooth breakage of the breakaway portion 135 and the smooth opening action of the door portion 139, the mounting members 133 to be mounted on the housing portion 123 through the body portion 117 of the knee panel 116 may be arranged on the periphery of the opening 123a at the vicinity of the breakaway portion 135 on the leading edge 139a side of the opening door portion 139 opposite from the hinge portion 137 and the vicinity of the hinge portion 137.

However, the smooth breakage of the breakaway portion 135 and the stable opening action of the door portion 139 can be better retained, if the mounting members 133 are arranged on the entire periphery of the generally rectangular opening 123a in the housing portion 123 as in the embodiment.

In the case of the embodiment, moreover, one door portion 139 is opened to allow the airbag 26A to protrude from the opening 140. However, the shape of the door portion should not be limited thereto, but the opening 123a of the housing portion 123 may be covered with two double-open door portions such as double-hinged doors. In this case, the breakaway portion is arranged in the shape of letter "H" or Japanese letter "I", as viewed from the vehicle rear side. In such case, the hinge portions are arranged between the ends of the vertical portions of the letter "H" positioned at the left and right sides. If the breakaway portion is formed in the shape of Japanese letter "I", moreover, the hinge portions are arranged between the ends of the horizontal portions of the letter "I" positioned at upper and lower sides. In these cases, moreover, it is desired that the mounting members are arranged at least on the periphery of the housing opening in the vicinity of the hinge portions.

Moreover, if the mounting members 133 are arranged only one side of the periphery of the opening 123a of a generally rectangular shape (e.g. , on the side of the wall portions 124a and 124b), one suitably enlarged mounting member 133 may be so arranged that it can retain the mounting strength. Alternatively, a plurality of mounting members 133 may be arranged (on the upper side or lower side of the periphery of the opening 123a).

Still moreover, the individual mounting members 133 of the airbag cover 130 of the embodiment are merely inserted into the through holes 119 in the periphery of the opening 123a of the knee panel 116 so that the body portion 117 of the knee panel 116 is not reduced in its frontal area. Thus, in an unexpanded state of the airbag 26A, even if the two knees K (KL and KR) of the driver MD interfere with the body portion 117, the knee panel 116 can catch the two left and right knees KL and KR over a wide area. In this mode, the body portion 117 of the knee panel 116 can support the front side of the airbag 26A which has completed its expansion through the general portion 131 of the airbag cover 130, so that the airbag 26A which has completed its extension and expansion is stably supported by the body portion 117 of the knee panel 116.

In the knee protecting airbag device S4 of the embodiment, moreover, the airbag 26A, the inflator 141, the airbag cover 130 and the knee panel 116 can be integrated in advance into the airbag assembly SA2. If this airbag assembly SA2 is formed in advance, therefore, the airbag 26A and so on can be transported and stored in the assembly state. As a result, the individual members are easily handled till they are mounted on the vehicle.

In the airbag device S4 of the embodiment, still moreover, the individual hooks 125 of the housing portion 123 are inserted into the retaining holes 133a of the individual mounting members 133 of the airbag cover 130 to retain the mounting members 133 with the retaining hook portions 125a of the individual hooks 125, so that the mounting members 133 can be completely mounted on the housing portion 123. It is, therefore, possible to reduce the number of steps of and the cost for mounting the airbag cover 130 on the knee panel 116. Especially in the embodiment, the individual mounting members 133 are automatically loosened merely by inserting them into the through holes 119, and the periphery of the retaining holes 133a are retained on the retaining hook portions 125a so that the number of mounting steps can be further reduced. If this is not used, the individual mounting members 133 may be mounted on the housing portion 123 by using bolts, nuts or rivets without providing the hooks 125.

In the airbag device S4 of the embodiment, still moreover, the brackets 103 and 104 acting as the energy absorbing members are arranged on the body 101 side for connecting the joining portions 121 of the knee panel 116. When the airbag 26A is completely depressed so that the kinetic energy of the knees K cannot be further absorbed by the airbag 26A, therefore, the brackets 103 and 104 are plastically deformed to absorb the forward kinetic energy of the knees K. Moreover, the brackets 103 and 104 are plastically deformed in the unexpanded state of the airbag 26A even if the knees K of the driver MD interfere with the knee panel 116. Therefore, the knees K of the driver MD can be properly protected by lessening the impact.

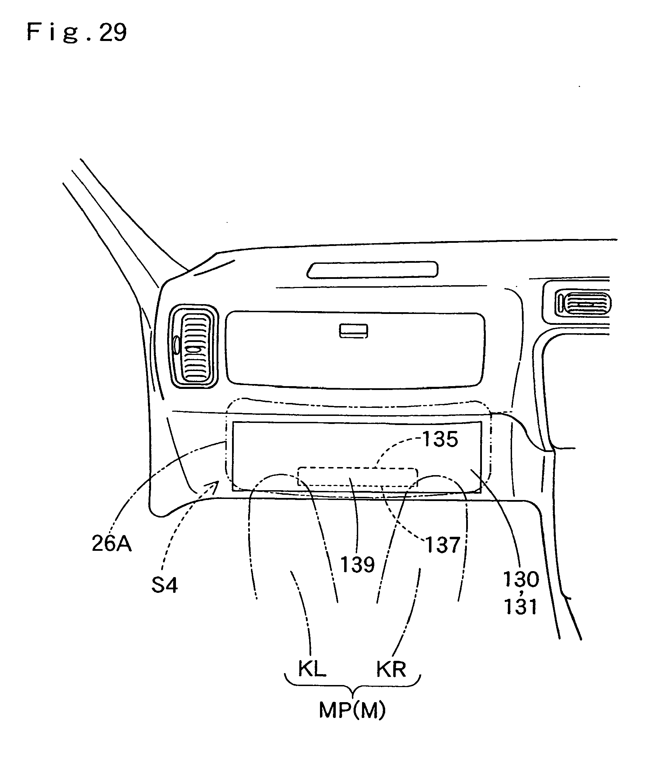

Here, the embodiment has been described by exemplifying the airbag device S4 which is in front of the seated driver MD so as to protect the knees K of the driver MD. In order to protect the knees of the passenger MP seated on the passenger's seat, however, the airbag device S4 may be in front of the passenger MP seated on the passenger's seat, as shown in Fig. 29.

Here will be described a knee protecting airbag device S5 .

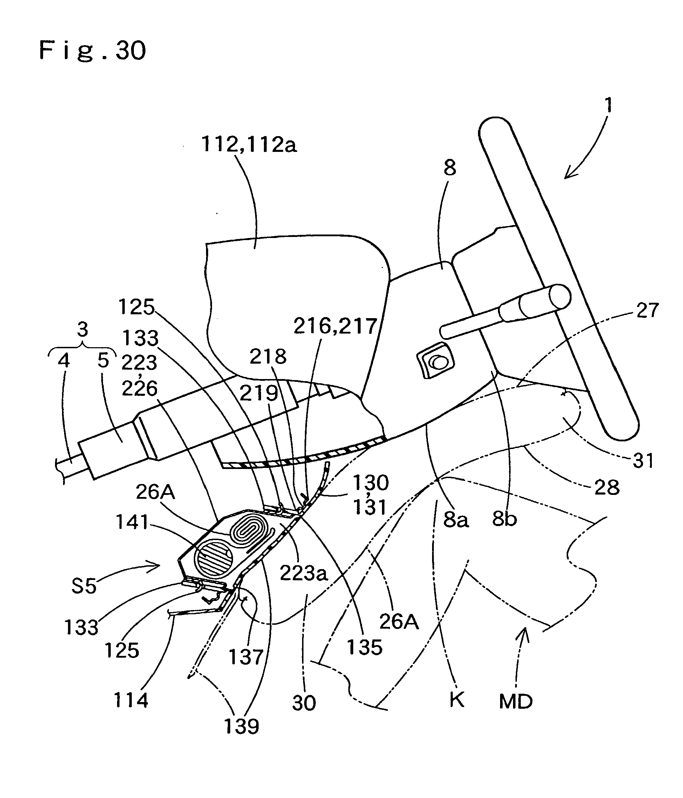

As shown in Fig. 30, the constructions of this airbag device S5 other than the knee panel 216 as the holding member are similar to those of the aforementioned airbag device S4 of the embodiment. Therefore, the same members will not be described and will referred to by the same reference numerals.

The knee protecting airbag device S5 comprises the folded knee protecting airbag 26A, the inflator 141, a case 223 for housing the airbag 26A and the inflator 141, the airbag cover 130 for covering the vehicle rear side in the opening 223a of the case 223, and a knee panel 216. The case 223 is provided with the opening 223a which allows the airbag 26A when extending and expanding to protrude toward the rear. In the embodiment, moreover, an airbag assembly SA3 as the airbag module comprises the airbag 26A, the inflator 141 and the case 223 (or the knee panel 216) and the airbag cover 130. In the case of the embodiment, the case 223 is formed integrally with the knee panel 216 by pressing one metal sheet. Of course, the case 223 and the knee panel 216 may be formed separately of each other and assembled by using the bolts, nuts and rivets and the welding method.

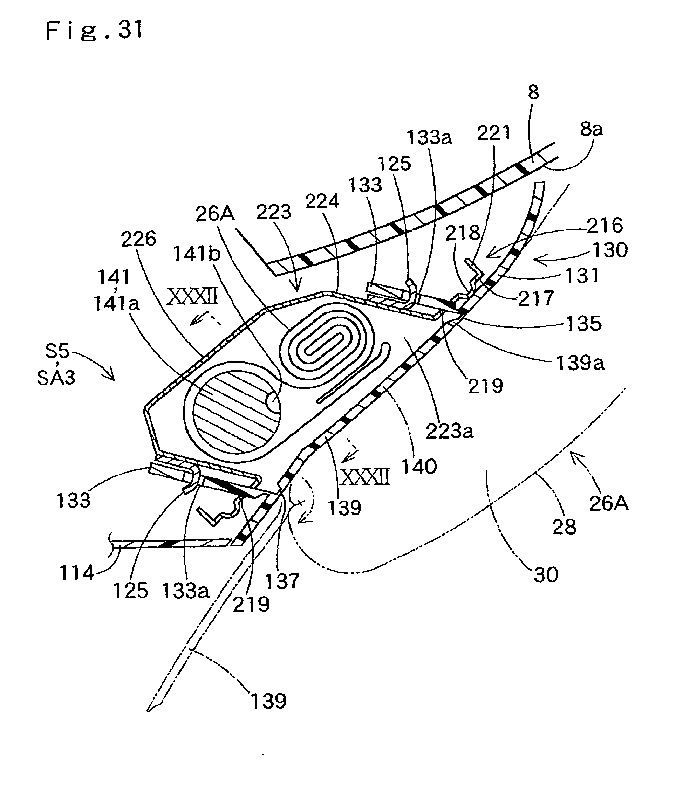

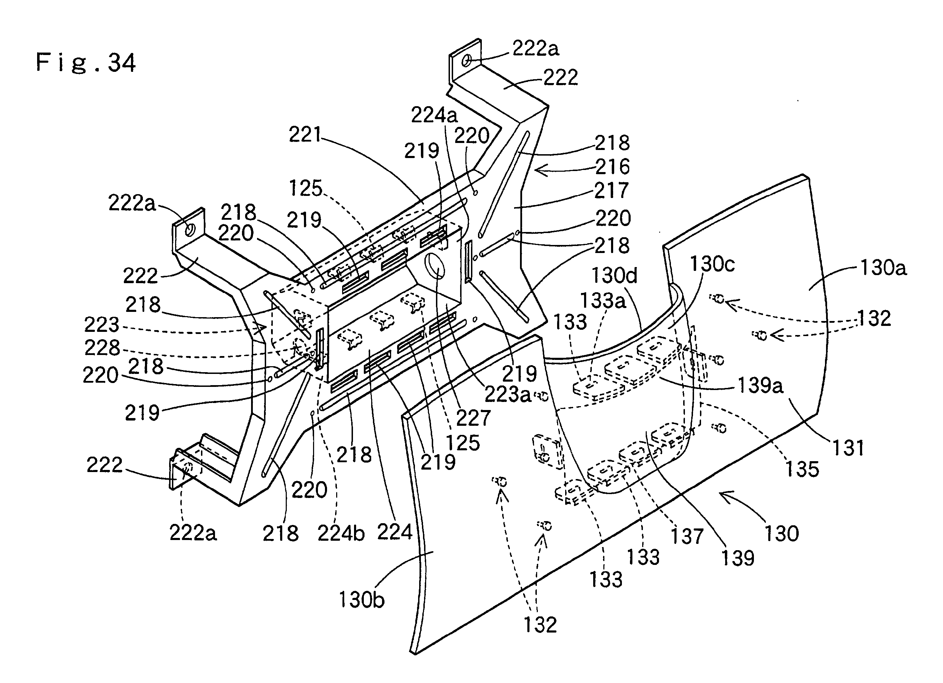

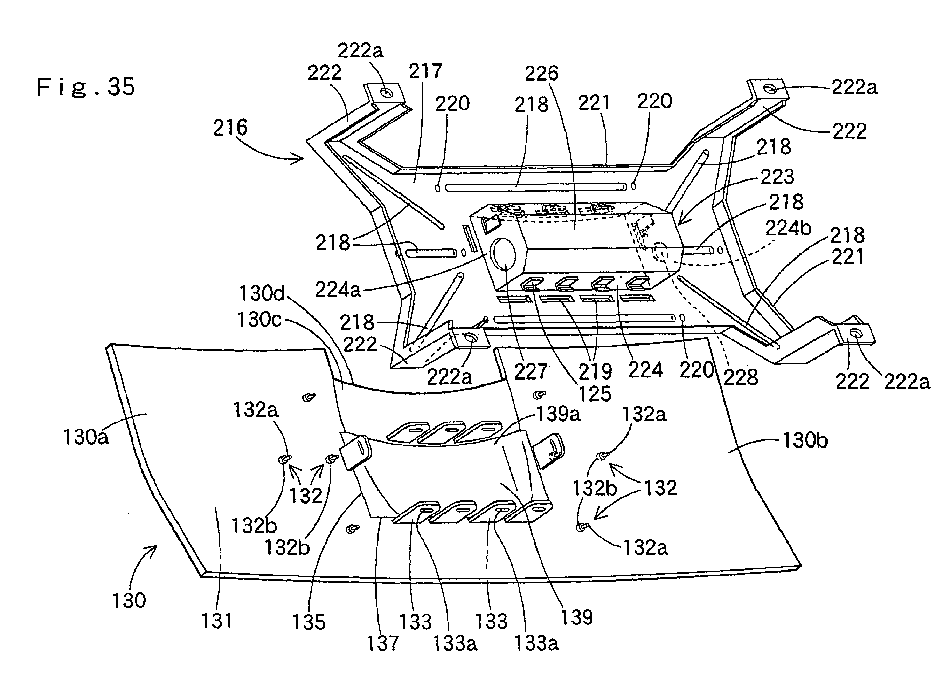

The case 223 is formed into a bottomed box shape having an opening 223a on the vehicle rear side, as shown in Figs. 31, 32, 34 and 35. In the case of the embodiment, the case 223 is formed into a generally parallelepiped box shape including a bottom wall portion 226 of a generally rectangular shape and a peripheral wall portion 224 of a generally rectangular tubular shape. In the peripheral wall portion 224 of the case 223, mounting holes 227 and 228, one made large and one made small for mounting the inflator 141, are arranged in wall portions 224a and 224b positioned in the transverse direction. The mounting hole 227 is so formed to insert thereinto the body portion 141a of the inflator 141 that can support the outer circumference of the body portion 141a on its inner circumference. The mounting hole 228 is given an internal diameter to small for the body portion 141a of the inflator 141 but which can allow the screw portion 141c of the inflator 141 to protrude through. The inflator 141 is mounted in the case 223 in the same way that it is mounted in the housing portion 123 in the airbag device S4 of the embodiment.

The hooks 125 are fixed on the outer circumference of the peripheral wall portion 224 as in the housing portion 123 in the airbag device S4 of the embodiment.

The knee panel 216 as the holding member comprises, as shown in Figs. 31 to 35, a plate-shaped portion 217 and four mounting portions 222. The plate-shaped portion 217 extends vertically and transversely from the periphery of the opening 223a of the case 223. Moreover, the plate-shaped portion 217 is formed into such a generally rectangular shape as to cover widely in front of the two left and right knees K (KL and KR) of the seated driver MD. The plate-shaped portion 217 is arranged on the vehicle front side in the region of the lower expansion portion 30 of the airbag 26A which has completed its expansion. The individual mounting portions 222 are arranged at the four corners of the periphery of the plate-shaped portion 217.

From the periphery of the opening 223a to the outer periphery of the plate-shaped portion, moreover, there are formed ribs 218 for enhancing the bending rigidity of the plate-shaped portion 217. In the case of the embodiment, those ribs 218 are formed into a U-shaped section and are formed integrally with the plate-shaped portion 217 by pressing it. Moreover, the ribs 218 support the general portion 131 of the airbag cover 130 on the rear-facing side.

Moreover, the plate-shaped portion 217 is bent at its outer periphery forward and is provided with a flange portion 221 for enhancing the bending rigidity thereof.

These ribs 218 and flange portion 221 are so constructed by setting the number, shapes and arranged positions as to shorten the deformation stroke of the plate-shaped portion 217 at the time the plate bends forward to absorb the kinetic energy of the knees K smoothly. In the case of the embodiment, moreover, the bending deformation load of the plate-shaped portion 217 is so set that the plate-shaped portion 217 may start a bending plastic deformation when the airbag 26A which has extended and expanded is pushed flat at one portion by the knees K against its internal pressure. At this time, the vehicle side wall portion 27 of the airbag 26A comes into abutment against the general portion 131 of the airbag cover 130, and the passenger side wall portion 28 comes into contact with the column cover side wall portion 27.

In the periphery of the opening 223 in the plate-shaped portion 217, on the other hand, there are formed a plurality of through holes 219 which extend through the periphery. The individual mounting members 133 of the airbag cover 130 are so inserted into those through holes 219 as to retain the mounting members 133 on the individual hooks 125.

In the two left and right sides apart from the case 223 in the plate-shaped portion 217, moreover, there are formed a plurality of mounting holes 220 which extend therethrough. These mounting holes 220 are portions at which the airbag cover 130 is mounted on the knee panel 216 by thermally caulking it. This airbag cover 130 is mounted on the knee panel 216 like the airbag cover 130 mounted on the knee panel 116 in the aforementioned airbag device S4.

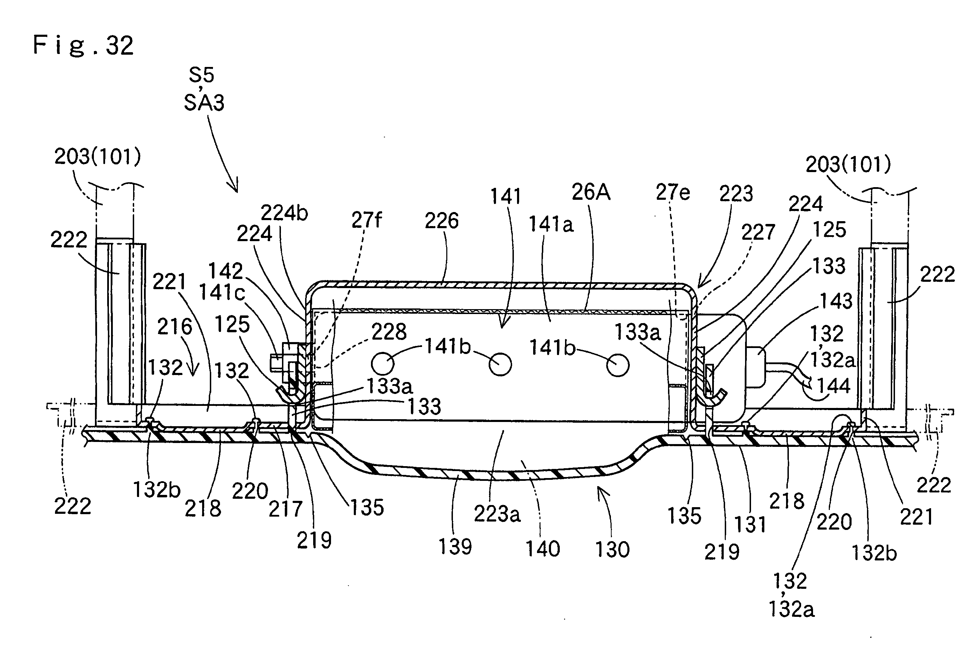

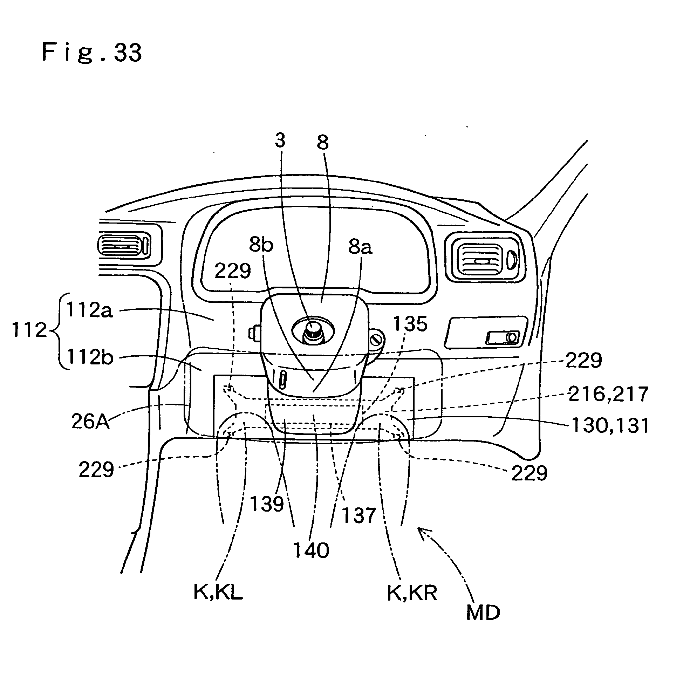

Each of the mounting portions 222 of the knee panel 216 is provided with a joint hole 222a for mounting it on the side of the body 101 by means of a bolt 229 (Fig. 33). On the side of the body 101 for mounting the mounting portions 222, there are arranged brackets 203 (Fig. 32). These brackets 203 are connected to rigid portions such as the not-shown dashboard reinforcement, center brace or front body pillar on the side of the body 101.

This airbag device S5 according to a fourth comparative example can be mounted on the vehicle like the airbag device S4 of the embodiment. Specifically, the airbag 26A and the inflator 141 are mounted in the case 223, and the airbag cover 130 is mounted on the knee panel 216 as in the aforementioned airbag device S4. As a result, the airbag assembly SA3 can be formed as the airbag module.

When the individual joining members 222 of the plate-shaped portion 217 in the knee panel 216 are connected to the brackets 203 on the side of the body 101 by means of the bolts 229, moreover, the knee protecting airbag device S5 can be mounted on the vehicle.

In the airbag device S5, when the airbag 26A is extended and expanded, the knees K are cushioned by the expanded lower expansion portion 30. At this time, if the lower expansion portion 30 of the airbag 26A is flattened at one position so that the kinetic energy E of the knees K cannot be completely absorbed by the lower expansion portion 30, the plate-shaped portion 217 of the knee panel 216 as the holding member receives the pushing force of the knees K through the airbag 26A through the general portion 131 of the airbag cover 130. As a result, the plate-shaped portion 217 of the knee panel 216 is plastically bent and deformed to absorb the excessive kinetic energy of the knees K.

Moreover, the plate-shaped portion 217 of the knee panel 216 extends from the periphery of the opening 223a of the case 223 so that it may be arranged toward the vehicle front in the area of the lower expansion portion 30 of the airbag which has completed its expansion. Therefore, the kinetic energy of the knees K can be properly absorbed by the plate-shaped portion 217 through the lower expansion portion 30 of the airbag 26A which has completed its expansion.

Of course, the plate-shaped portion 217 of the knee panel 216 is so extended from the periphery of the opening 223a of the case 223 that it is arranged toward the vehicle front in the area of the lower expansion portion 30 upon completion of the expansion. In other words, the plate-shaped portion 217 of the knee panel 216 is arranged with a large flat area vertically and transversely. Even with a small deformation stroke d at the time of absorbing the kinetic energy E, therefore, the kinetic energy of the knees K can be sufficiently absorbed by the plate-shaped portion 217 of the knee panel 216.

In the knee panel 216 serving as the holding member, moreover, the portions to be fixed on the vehicle body are the mounting portions 222 arranged near the periphery of the plate-shaped portion 217, and the mounting portions 222 do not obstruct the deformation of the plate-shaped portion 217.

Moreover, the plate-shaped portion 217 of the knee panel 216 does not extend longitudinally like the mounting brackets of the prior art. Specifically, the plate-shaped portion 217 of the knee panel 216 is so extended from the periphery of the opening 223a of the case 223 and arranged in the flat shape vertically and transversely that it may be arranged toward the vehicle front in the area of the airbag lower expansion portion 30 upon completion of the expansion. Even if there is less space in front side of the airbag assembly SA3 as the airbag module, therefore, it is easy to install the airbag assembly SA3.

In the knee protecting airbag device S5, therefore, the kinetic energy E of the knees K can be absorbed, even when it cannot be received by the airbag 26A, and the degree of mounting freedom on the vehicle can be improved.

In the airbag device S5, moreover, the ribs 218 capable of adjusting the absorption quantity of the kinetic energy by the knees K are arranged on the plate-shaped portion 217 of the knee panel 216, and the flange portion 221 capable of adjusting the absorption quantity of the kinetic energy of the knees K is also arranged on the periphery of the plate-shaped portion 217. By setting the number, shapes and arranged positions of those ribs 218 and flange portion 221, therefore, the absorption quantity of the kinetic energy can be easily adjusted to match the deformation stroke or the like of the plate-shaped portion 217.

Here, the mounting portions 222 of the knee panel 216 are formed to extend forward from the vicinity of the periphery of the plate-shaped portion 217. However, the mounting portions 222 arranged near the periphery of the plate-shaped portion 217 in the knee panel 216 need not be extended much forward from the periphery of the plate-shaped portion 217. If the airbag assembly SA3 can be mounted and fixed on a predetermined portion of the vehicle body, it can be arranged to extend transversely from the periphery of the plate-shaped portion 217, as indicated by double-dotted lines in Fig. 32, so that it can be located at a rigid portion such as the not-shown dashboard reinforcement, center brace or front body pillar on the side of the body 101. In this case, the airbag device S5 can be made shorter and more compact in the longitudinal directions of the vehicle to improve the degree of freedom for mounting on the vehicle.

Moreover, the plate-shaped portion 217 of the knee panel 216 is plastically bent and deformed at the time of absorbing the kinetic energy of the knees K. However, the mounting portion 222 may be so constructed to buckle and be deformed that the knee panel 216 can absorb more energy. Moreover, the plate-shaped portion 217 may be modified to absorb the kinetic energy of the knees K not only by the plastic deformation but instead by brittle fracture, employing a brittle material.

Moreover, the fourth comparative example has been described by exemplifying the airbag device S5 which is arranged in front of the driver MD so as to protect the knees K of the driver MD. In order to protect the two knees of the passenger of the passenger's seat, however, the airbag device S5 may be arranged at a position in front of the passenger seated on the passenger's seat.

Here will be described knee protecting airbag devices S6 to S8.

Here, the constructions of the vehicle for mounting the knee protecting airbag device S6 of a fifth comparative example are similar to those of the aforementioned airbag device S1 first comparative example except for dashboard 312. Therefore, the same members will not be described and will given the same reference numerals.

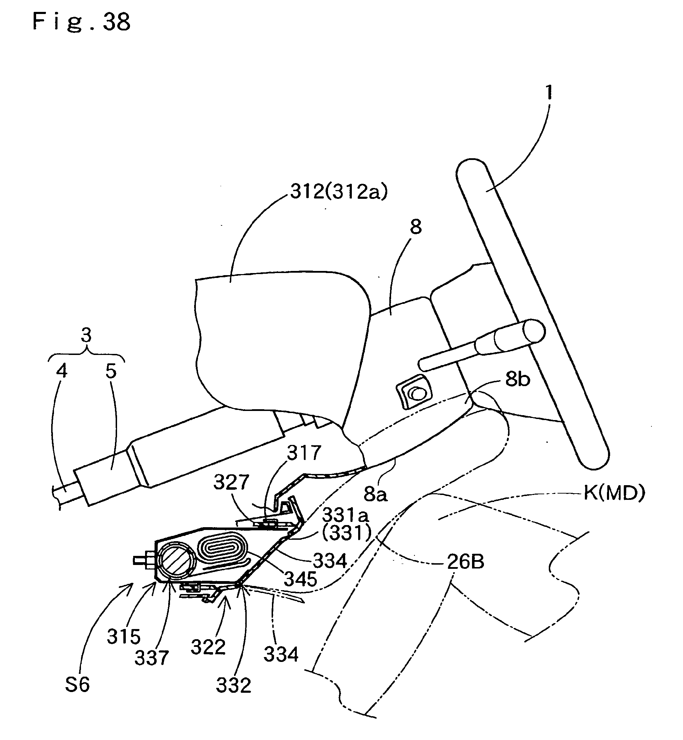

The knee protecting airbag device S6 is arranged below the steering column 3 on the vehicle front side of the driver MD, as shown in Figs. 38 to 41, so that it may be able to protect the knees K of the driver MD or the passenger M.

The knee protecting airbag device S6 comprises a folded airbag 26B, an inflator 337, a case 315 for housing the folded airbag 26B and the inflator 337, and an airbag cover 322. The case 315 is opened toward the rear of the vehicle.

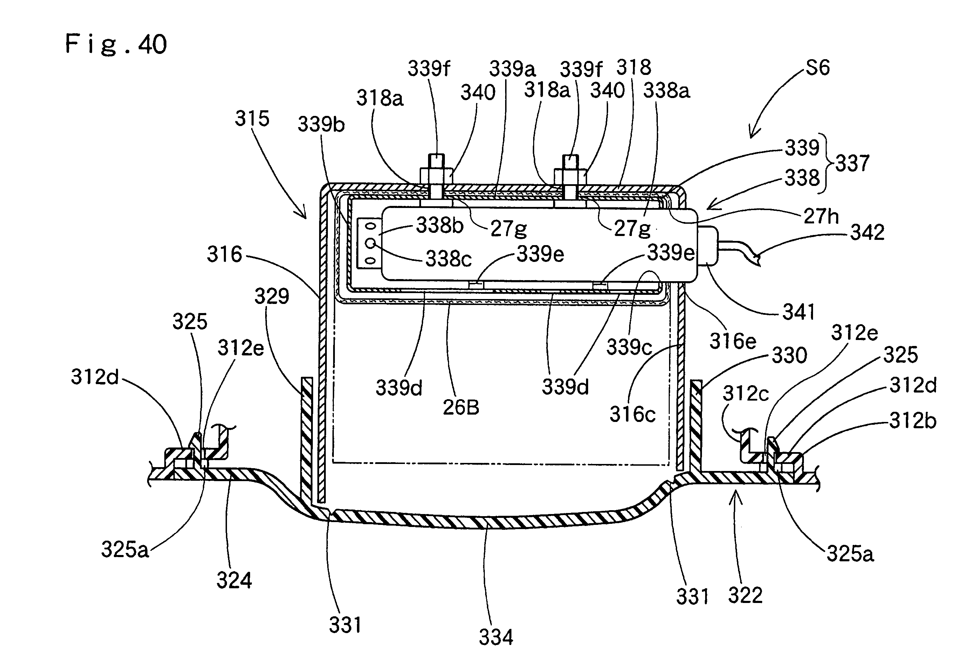

The case 315 is made of a sheet metal. The case 315 includes a peripheral wall portion 316 of a generally rectangular tubular shape and a bottom wall portion 318 for closing the vehicle front side of the peripheral wall portion 316. On the outer peripheral faces of wall portions 316a and 316b, which are vertically opposite to each other, moreover, there are fixed a plurality of hooks 317 having roughly C-shape. Each of these hooks 317 has a retaining hook portion 317a at the top end. The retaining hook portion 317a is inverted to the bottom wall portion 318 side. Four hooks 317 are arranged on the wall portion 316a, and three hooks 317 are arranged on the wall portion 316b. In the wall portion 316c of the peripheral wall portion 316, moreover, there is formed an insert hole 316e which can hold the end portion of the later-described body 338 of the inflator 337 (see Fig. 40). In the bottom wall portion 318, there are formed insert holes 318a for passing the later-described bolts 339f of the inflator 337. This case 315 is connected and fixed to the not-shown dashboard reinforcement arranged near the steering column 3, by using not-shown brackets.

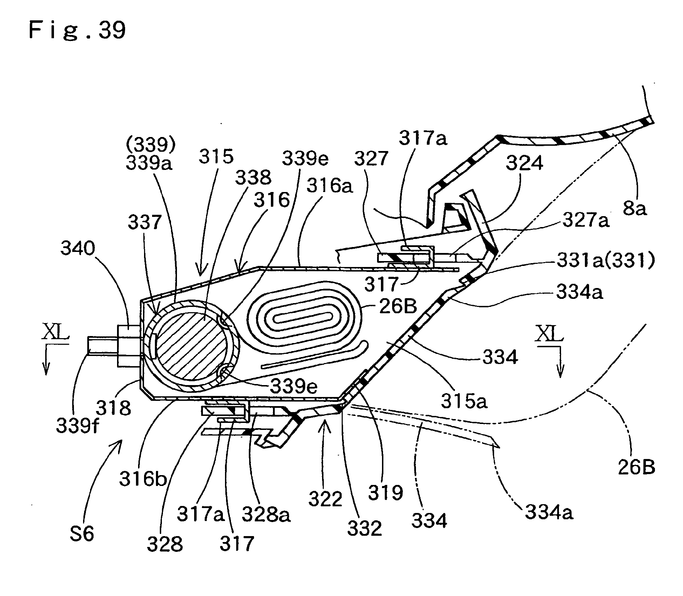

Near the later-described door portion 334 of the airbag cover 322 in the case 315, moreover, there is arranged a guide wall portion 319 serving as extension promoting means. The guide wall portion 319 is constructed to extend from the rear edge of the wall portion 316b and to cover the lower side of the opening 315a. This guide wall portion 319 is arranged, as shown in Fig. 39, along the door portion 334 of the airbag cover 322. Specifically, the guide wall portion 319 is arranged its upper side on the rear side and is inclined to intersect obliquely the plane perpendicular to the longitudinal direction of the vehicle.

The airbag cover 322 is made of a thermoplastic elastomer such as polyolefin. Moreover, the airbag cover 322 covers the vehicle rear side of the case 315.

Moreover, the airbag cover 322 is arranged on the periphery of the column cover 8 on a lower panel 312b side of the dashboard 312. The airbag cover 322 covers the lower side periphery of the column cover 8 protruding from the dashboard 312. Therefore, as viewed from the vehicle rear side, the airbag cover 322 is so recessed downward at the vicinity of the upper edge center as to be protruded with the column cover 8 backward. Moreover, the airbag cover 322 is constructed by raising the upper edge side below the recess to curve backward in a manner to match the curved face of the column cover lower portion 8a. Furthermore, the airbag cover 322 is so integrally formed by an injection molding method or the like as to include the door portion 334 for covering the opening 315a of the case 315 and a general portion 324 arranged around the door portion 334.

The door portion 334 is formed into a generally rectangular plate shape slightly larger than the opening 315a for covering the opening. The door portion 334 arranges a hinge portion 332 at its lower end for providing the pivot when it opens. The door portion 334 has a thinned breakaway portion 331 arranged at the inverted U-shape portion of the outer periphery excepting the hinge portion 332. Moreover, the door portion 334 is arranged at such an inclination as to intersect the vertical direction perpendicular to the longitudinal direction of the vehicle. In the door portion 334, more specifically, the side of an upper end 334a is arranged on the vehicle rear side, and the hinge portion 332 is arranged on the vehicle front side. The hinge portion 332 is made of an integral hinge and is made thinner than the general portion 324 and the door portion 334 but still within the unbreakable range. The breakaway portion 331 is so formed to have continuous or interrupted grooves in the front face so that it may be easily broken when the door portion 334 is pushed by the expanding airbag.

At portions of the general portion 324 near the periphery of the door portion 334, there are arranged four side wall portions 327, 328, 329 and 330. These individual side wall portions 327, 328, 329 and 330 protrude forward on the outer peripheral side of the case 315. Moreover, the upper side wall portion 327 arranged on the upper side of the case peripheral wall portion 316 and the lower side wall portion 328 arranged on the lower side of the case peripheral wall portion 316 are mounting wall portions for mounting the airbag cover 322 on the case 315. The upper and lower side wall portions 327 and 328 are provided with retaining holes 327a and 328a, respectively, for retaining the retaining hook portions 317a of the hooks 317 arranged on the peripheral wall portion 316.

The upper side wall portion 327 serves as extension promoting means together with the hooks 317 of the case 315. The upper side wall portion 327 is arranged transversely near above the upper end breakaway portion 331a arranged at the upper end of the door portion 334. Also, the upper side wall portion 327 is arranged along the upper end breakaway portion 331a. The upper side wall portion 327 is retained on the peripheral wall portion 316 of the case 315 by using the hooks 317. More specifically, the portion near the upper end breakaway portion 331a on the door upper end 334a side is firmly connected to the case 315 by the upper side wall portion 327 and the hooks 317. When the airbag 26B protrudes, therefore, the area of the upper end breakaway portion 331a is not moved relatively to the case 315 even when pushed by the airbag 26B, so that the breakaway portion 331a can be smoothly broken by the airbag 26B.

At predetermined positions in the general portion 324, on the other hand, there are formed mounting leg portions 325 which extend forward of the vehicle. These mounting leg portions 325 are arranged to mount and fix the airbag cover 322 on the lower panel 312b. The mounting leg portions 325 are retained in the periphery of retaining holes 312e of the lower panel 312b. This lower panel 312b is provided with a housing recess 312c for housing the case 315. Moreover, these retaining holes 312e are formed (see Fig. 40) in a flange portion 312d which is formed at the periphery of the housing recess 312c of the lower panel 312b. On the root portion of the mounting leg portion 325, there are formed ribs 325a. The ribs 325a come, when the mounting leg portions 325 are retained in the retaining holes 312e, into abutment against the flange portion 312d of the lower panel 312b to support the general portion 324. Here, three mounting leg portions 325 each are formed near the left and right edges of the general portion 324.

The inflator 337 is constructed into the cylinder type, in which its axial direction is arranged transversely of the vehicle, as shown in Figs. 38 to 40. The inflator 337 is provided with the generally cylindrical body 338 and a bracket 339. The body 338 is provided with a cylindrical general portion 338a and a reduced diameter portion 338b protruding from the end face of the general portion 338a. A plurality of gas discharge ports 338c are arranged in the outer circumference of the reduced diameter portion 338b. With the end face of the general portion 338a apart from the reduced portion diameter 338b, moreover, there is connected a connector 341 which is connected with a lead wire 342 for inputting an activating signal.

The bracket 339 is provided with a holding cylindrical portion 339a formed of a sheet metal into a generally cylindrical shape for covering the body 338, and a plurality of (e.g., two) bolts 339f protruded from the holding cylindrical portion 339a. This holding cylindrical portion 339a is provided on the side of its leading end with a bottom portion 339b for covering the diametrically reduced portion 338b of the body 338. The holding cylindrical portion 339a is provided on the side of the other end face with an insert hole 339c for holding the general portion 338a of the body 338. In the holding cylindrical portion 339a, there are formed a plurality of gas outflow ports 339d for allowing the inflating gas discharged from the gas discharge ports 338c of the body 338 to flow out. The gas outflow ports 339d are opened in the vehicle rear side face of the holding cylinder portion 339a, as mounted on the vehicle. On the holding cylindrical portion 339a, moreover, there are arranged a plurality of clamping portions 339e for holding the body 338. Each of the clamping portions 339e is cut on its two sides in the axial directions of the holding cylindrical portion 339a and is plastically deformed to bend into the holding cylindrical portion 339a. Moreover, the body 338 is fixed in the holding cylindrical portion 339a by inserting the body 338 from the insert hole 339c with the diametrically reduced portion 338b being ahead and by pushing the individual clamping portions 339e further onto the outer circumferential side of the general portion 338a.

This inflator 337 is fed, together with the not-shown airbag device mounted in the steering wheel 1, with the activating signal through the lead wire 342 when the airbag activating circuit mounted on the vehicle detects a front collision of the vehicle.

The airbag 26B used has constructions similar to those of the airbag 26 in the airbag device S1 of the first comparative example. Therefore, these constructions will not be explained and the same reference numbers will be used. In the lower side of the vehicle side wall portion 27 in the airbag 26B, there are formed through holes 27g, 27g and 27h. The insert holes 27g and 27g are used to insert the individual bolts 339f of the inflator 337. The insert hole 27h is used to insert the body 338 of the inflator 37. Moreover, the airbag 26B is mounted in the case 315 by protruding the body 338 of the inflator 337 from the insert hole 27h to clamp the periphery of each insert hole 27g between the holding cylindrical portion 339a and the bottom wall portion 318 of the case 315.

Here will be described how to assemble the airbag device S6. First of all, the airbag 26B is folded with the inflator 337 being housed therein. At this time, the inflator 337 is housed in the airbag 26B by protruding the individual bolts 339f from the insert holes 27g and by protruding the root portion side of the inflator body 338 from the insert hole 27h. Moreover, the airbag 26B is folded up like the airbag 26 in the airbag device S1 of the first embodiment.

Then, the airbag 26B is wrapped, after being folded up, with the not-shown breakable wrapping film so that the airbag may not become loose. Here, the bolts 339f of the inflator 337 protruded from the insert holes 27g and the end portion of the body 338 protruded from the insert hole 27h are also protruded from the wrapping film.

Next, the inflator 337 is housed together with the folded airbag 26B in the case 315 by protruding the individual bolts 339f of the inflator 337 from the insert holes 318a and by protruding the end portion of the inflator body 338 from the insert hole 316e. When nuts 340 are then fastened on the individual bolts 339f, the inflator 337 and the airbag 26B can be housed in the case 315 and mounted in the case 315.

The not-shown brackets of the case 315 are mounted on the dashboard reinforcement of the vehicle, on which an upper panel 312a and the lower panel 312b have already been mounted. The connector 341 having the lead wire 342 connected therewith is connected with the body 338 of the inflator 337. Next, the airbag cover 322 is pushed forward to insert and retain the individual mounting leg portions 325 in the retaining holes 312e of the lower panel 312b. Simultaneously with this, the hooks 317 of the case 315 are retained in the individual retaining holes 327a and 328a of the upper side wall portion 327 and the lower side wall portion 328 so that the airbag device S6 can be mounted on the vehicle.

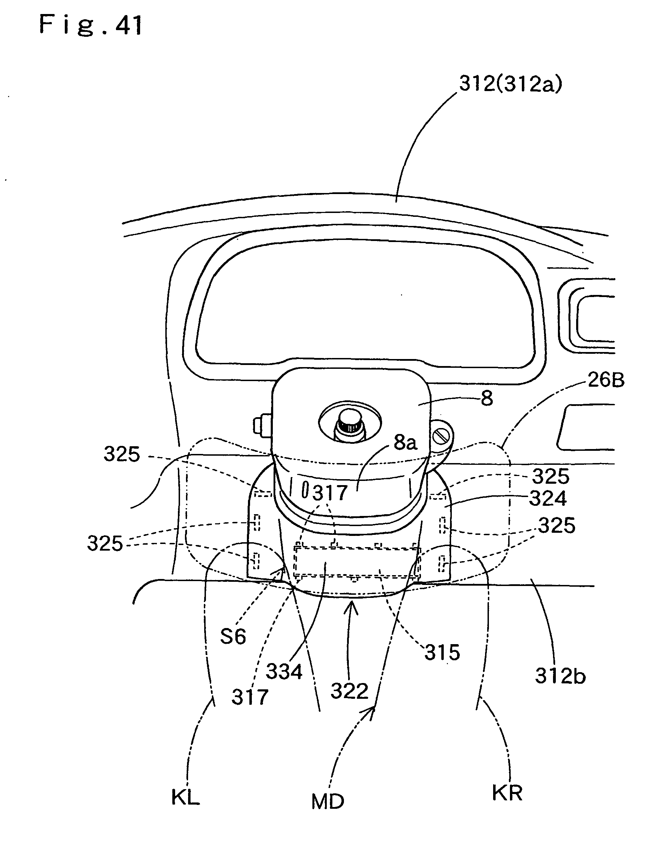

If the activating signal is inputted through the lead wire 342 to the body 338 of the inflator 337 after the airbag device S6 is mounted on the vehicle, the inflating gas is discharged from the gas discharge ports 338c of the inflator 337. Then, the inflating gas flows into the airbag 26B through the gas outflow ports 339d of the bracket 339. Then, the airbag 26B expands and breaks the not-shown wrapping film , and pushes the door portion 334 of the airbag cover 322 to break the breakaway portion 331. Then, the airbag 26B opens the door portion 334 downward on the hinge portion 332 so that it extends and inflates upward along the column cover lower face 8a, as indicated by double-dotted lines in Figs. 38 and 41.

Moreover, the airbag device S6 is constructed such that the extension promoting means for opening the door portion 334 quickly is arranged near the door portion 334 of the airbag cover 322. The extension promoting means is the guide wall portion 319 which is arranged along the door portion 334 for covering the lower side of the case opening 315a. Near the area of upper end breakaway portion 331a formed on the upper end 334a side of the door portion 334, there is arranged the upper side wall portion 327 (or the mounting wall portion) serving as extension promoting means, which is mounted and fixed on the peripheral wall portion 316 by the hooks 317.

Therefore, the airbag 26B to be extended and expanded by feeding the inflating gas from the inflator 337 can be guided toward the upper end 334a of the door portion 334 by the guide wall portion 319. As a result, the upper end breakaway portion 331a arranged on the upper edge 334a of the door portion 334 is broken at the beginning of the expansion of the airbag 26B by the protruding airbag 26B so that the door portion 334 can be smoothly opened downward from the upper end 334a.

Moreover, the portion near the area of the upper end breakaway portion 331a is firmly connected to the case 315 by the upper side wall portion 327 and the hooks 317 so that the area of the upper end breakaway portion 331a is not moved relatively to the case 315 by the pushing force of the airbag 26B when the airbag 26B protrudes. By the airbag 26B, therefore, it is possible to break smoothly the upper end breakaway portion 331a on the upper end 334a side, or the opening starting side of the door portion 334. Then, the remaining breakaway portion 331 is broken smoothly.

As a result, in the airbag device S6, the door portion 334 can be quickly opened to protrude the airbag 26B quickly from the opening of the door portion 334 opened, thereby to extend and expand the airbag 26B.

In the airbag device S6, moreover, the door portion 334 can be opened with the largest opening size on the upper end 334a side, because the door portion 334 opens downwardly. Specifically, the airbag 26B to protrude from the case 315 and to extend and expand is easily allowed to protrude upward from the largest opened portion on the upper end 334a side of the door portion 334. By the opening action of the door portion 334, therefore, the airbag 26B can be guided toward the upper side so that it can be quickly extended and expanded toward the upper side.

In the airbag device S6, therefore, the airbag 26B can be quickly extended to protect the knees K of the driver MD as the passenger M properly.

In the airbag device S6, moreover, the airbag cover 322 is integrally molded to include the door portion 334 having the breakaway portion 331 arranged therearound, and the general portion 324 around the door portion 334. Therefore, the door portion 334 causes no disharmony with the surrounding general portion 324 so that its design is excellent.

In the airbag device S6, moreover, the upper end 334a side which is the first side of the door portion 334 to open is arranged at a position on the vehicle rear side, or the side which is removed from the airbag 26B and the inflator 337. However, the guide wall portion and the upper side wall portion 327 near the upper end breakaway portion 331a as the extension promoting means are arranged in the vicinity of the door portion 334 so that the door portion 334 can be quickly opened to extend and expand the airbag 26B quickly.

In the airbag device S6, moreover, the lower side of the door portion 334 in the airbag cover 322 is arranged on the vehicle front side so that a wide space can be retained in front of the knees K of the driver MD as the passenger M. Therefore, the airbag device S6 can be mounted on the vehicle without any interference with the toes or the like of the driver MD. If this point is not seen to be important, it is natural that the door portion 334 need not be inclined, arranging the upper end 334a side more toward the vehicle rear and by arranging the hinge portion 332 more toward the vehicle front. For example, the door portion may be arranged in the vertical direction.

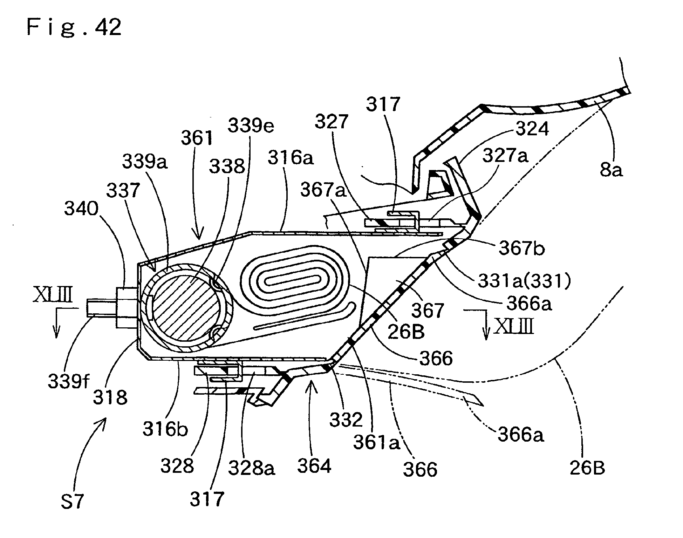

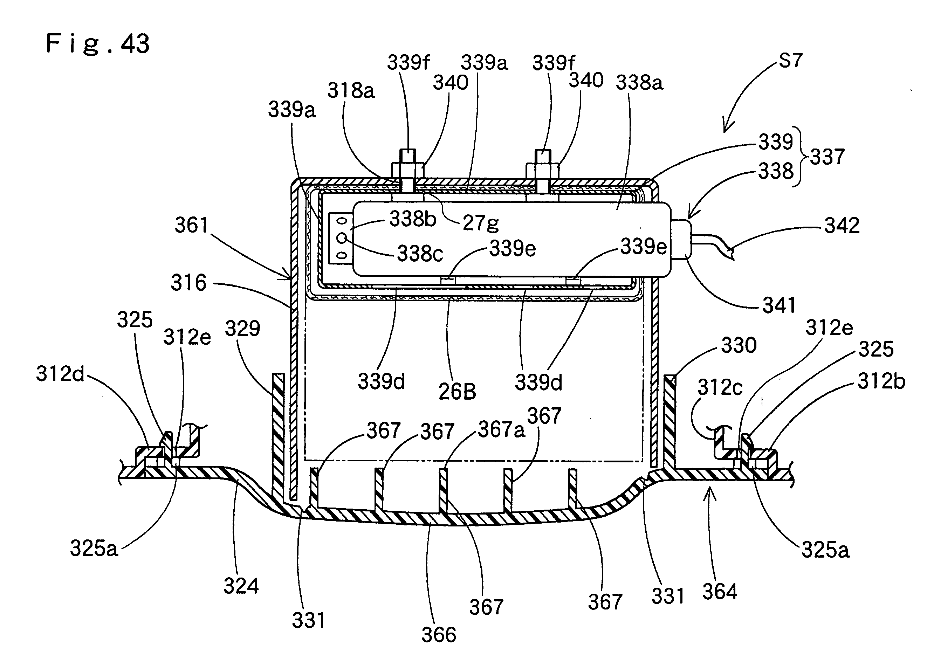

Next, the airbag device S7 of a sixth comparative example is shown in Figs. 42 and 43. Here, the constructions of the airbag device S7 are similar other than a case 361 and an airbag cover 364 to those of the aforementioned airbag device S6. Therefore, the same members will not be explained and will be given the same reference number.

The case 361 used in the airbag device S7 is constructed not to have the aforementioned guide wall portion 319 formed in the case 315, and the remaining constructions are similar to those of the case 315. Therefore, the same members will not be explained and will be given the same reference number.

Here, the constructions of the airbag cover 364 are similar other than a door portion 366 are similar to those of the aforementioned airbag cover 322. Therefore, the same members will not be explained and will be given the same reference number.

The door portion 366 of the airbag cover 364 is provided, as shown in Figs. 42 and 43, with a plurality of (e.g., five) ribs 367 of a generally triangular plate shape protruding forward. These individual ribs 367 are juxtaposed in the transverse direction of the vehicle. Moreover, the faces of the individual ribs 367 on the vehicle front side are easily pushed faces 367a serving as extension promoting means. These easily pushed faces 367a are arranged in the vertical directions and are pushed by the airbag 26B at the expanding time. On the other hand, the upper ends 367b of the individual ribs 367 are arranged at positions near the upper end 366a of the door portion 366 (or near the upper end breakaway portion 331a), as shown in Fig. 42. These ribs 367 are pushed on their easily pushed faces 367a backward at the beginning of the expansion of the airbag 26B by the protruding airbag 26B. As a result, the door portion 366, pushed at its easily pushed faces 367a by the airbag 26B, is opened to be quickly broken the surrounding breakaway portion 331.

In the airbag device S7, too, the door portion 366 has the upper end 366a arranged on the vehicle rear side and the hinge portion 332 arranged on the vehicle rear side. In other words, the door portion 366 is arranged at an inclination to intersect the vertical direction perpendicular to the longitudinal direction of the vehicle.

With this construction of the airbag device S7, at the beginning of the expansion of the airbag 26B, the protruding airbag 26B pushes the easily pushed faces 367a of the ribs 367 backward to open the door portion 366. Normally in the case of a knee protecting airbag device having no rib arranged on the door portion, the protruding airbag pushes the vehicle front side face of the door portion to open the door portion. With the airbag device S7 having the aforementioned construction, however, the ribs 367 shorten the distance between the airbag 26B and the door portion 366 substantially. Therefore, the door portion 366 can be opened more quickly than that construction having no rib. As a result, the airbag 26B can be quickly protruded to extend and expand from the opening of the quickly opened door portion 366.

In the airbag device S7, moreover, the upper ends 367b of the ribs 367 are arranged near the upper end breakaway portion 331a. Therefore, the pushing force from the airbag 26B easily acts on the upper end breakaway portion 331a so that the upper end breakaway portion 331a can be smoothly broken by the protruding airbag 26B.

Here, the comparative example is constructed such that the plate-shaped ribs 367 are juxtaposed in the transverse directions of the vehicle. However, the shape and the number of arranged ribs should not be limited thereto. For example, the construction may be modified by arranging one rib which has a generally T-shaped section and an enlarged easily pushed face toward the front.

In the airbag device S7, too, the area of the upper end breakaway portion 331a arranged on the upper end side of the door portion 366 is firmly connected to the case 315 by the upper side wall portion 327. When the airbag 26B protrudes, therefore, the area of the upper end breakaway portion 331a is not moved relatively to the case 315 and the breakaway portion 331a can be smoothly broken by the push of the airbag 26B. As a result, in the airbag device S7, the door portion 366 can be quickly opened to extend the airbag 26B quickly.

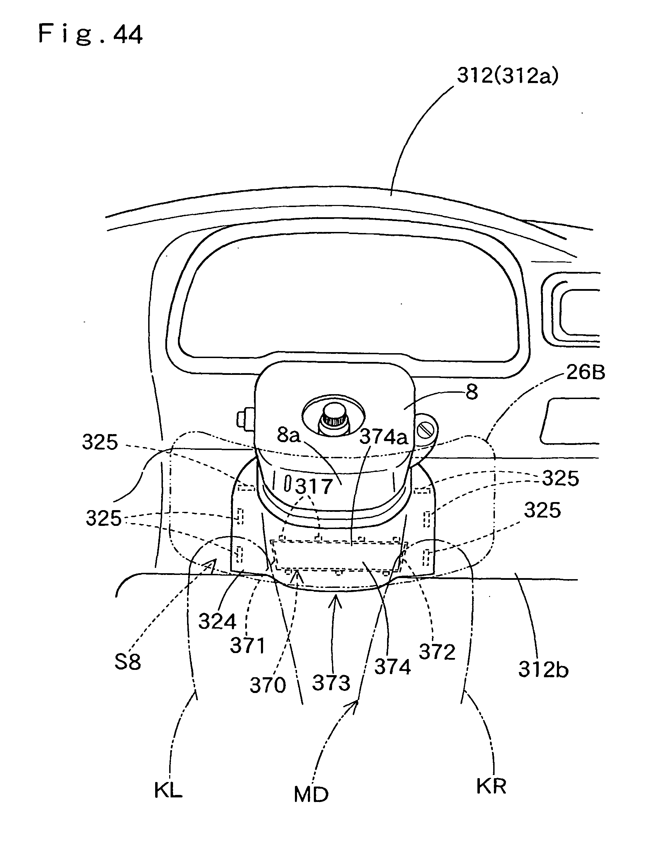

Next, an airbag device S8 of a seventh comparative example is shown in Fig. 44. The constructions of this airbag device S8 are similar other than a case 370 and an airbag cover 373 to those of the aforementioned airbag device S6. Therefore, the same members will not be explained and will have the same reference numerals.

The case 370 is formed to have a generally trapezoidal shape in which the sectional shape in the transverse directions of the vehicle is set wider on the upper end side, as shown in Fig. 44. The door portion 374 of the airbag cover 373 is formed into the generally trapezoidal shape which is made wider on its upper end side according to the shape of a case opening 370a.

In the airbag device S8, more specifically, a left side wall portion 371 and a right side wall portion 372 of the case 370 are inclined upward apart from each other. In other words, the left side wall portion 371 and the right side wall portion 372 are inclined each other so that the upper side distance between the left side wall 371 portion and the right side wall portion 372 is set longer than the lower side distance between the left side wall portion 371 and the right side wall portion 372.

With this construction of the airbag device S8, the inflating gas discharged from the inflator is guided upward in the airbag 26B by the left side wall portion 371 and the right side wall portion 372 of the case 370. In other words, the airbag 26B to be extended and expanded by introducing the inflating gas from the inflator can be guided toward the upper end 371a of the door portion 374. With the protruding of the airbag 26B, therefore, the door portion 374 to open downward can be smoothly opened from its upper end 374a side. As a result, the airbag 26B can be quickly protruded to extend and expand from the quickly opened opening of the door portion.

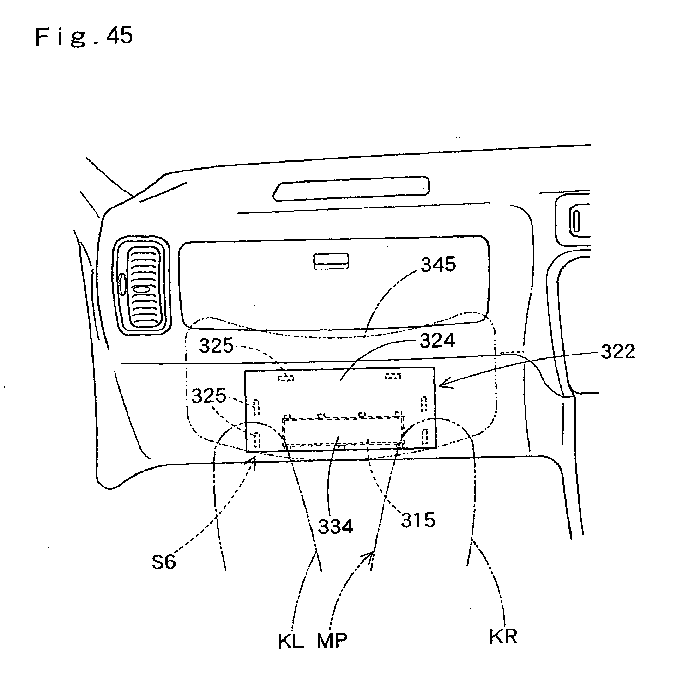

Here, the fifth to seventh comparative examples have been described by exemplifying the airbag devices S6 to S8 arranged on the vehicle front side of the driver MD so as to protect the knees of the driver MD. As shown in Fig. 45, however, the airbag device S6 may be arranged in front of the passenger MP seated on the passenger's seat so as to protect the knees of the seated passenger MP.

Here will be described knee protecting airbag devices S9 to S11.

Here, the constructions of a vehicle for mounting the knee protecting airbag device S9 of an eigth comparative example are similar to those of the aforementioned airbag device S1 of the first embodiment. Therefore, the common members will be omitted on their description by designating them by the common reference numerals.

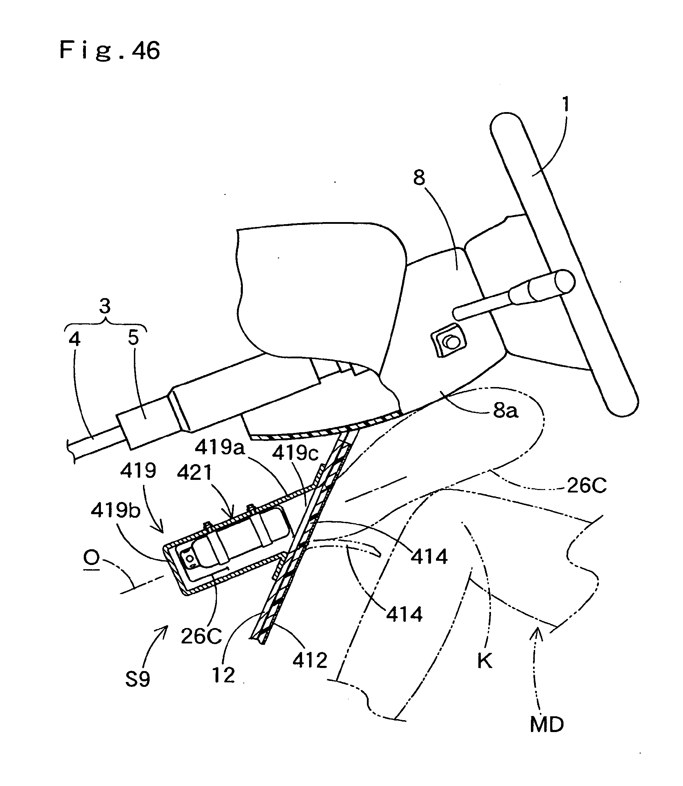

The knee protecting airbag device S9 is shown in Figs. 46 to 48. The airbag device S9 comprises a folded airbag 26C, an inflator 421, a case 419 for housing the airbag 26C and the inflator 421, and an airbag cover 412 for covering the folded airbag 26C. Moreover, the airbag device S9 is so mounted on the holding member 12 that the case 419 is arranged to the front of the plate-shaped holding member 12. The constructions of this holding member 12 are similar to those of the holding member 12 in the airbag device S1 of the first embodiment.

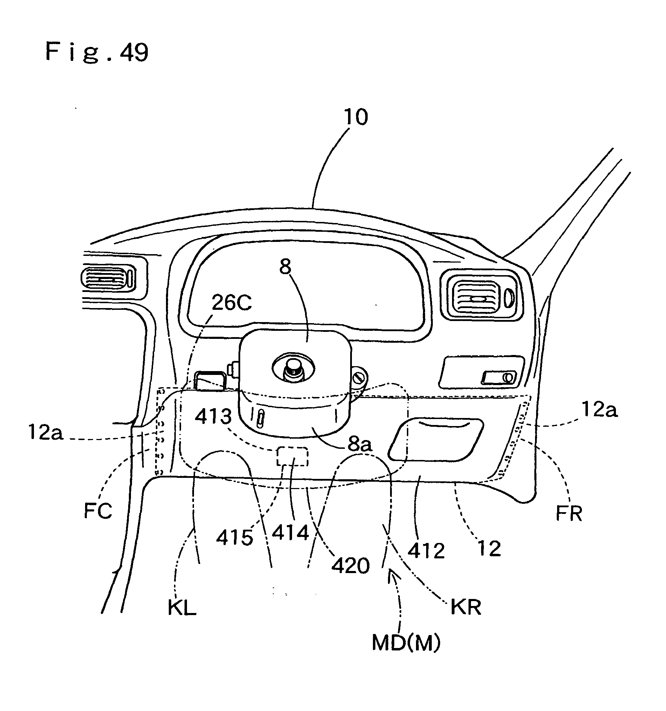

The case 419 is made of a sheet metal. This case 419 comprises, as shown in Figs. 46 to 48, a peripheral wall portion 419a of a generally rectangular tubular shape and a bottom wall portion 419b of a generally rectangular shape. The bottom wall portion 419b closes the vehicle front side of the peripheral wall portion 419a. On the periphery of the opening 419c on the vehicle rear side of the peripheral wall portion 419a, there is formed a flange portion 419d which protrudes outward for mounting the case 419 on the holding member 12. Moreover, the case 419 is mounted and fixed on the holding member 12 by means of the not-shown bolts or the like using the flange portion 419d, as shown in Figs. 46 to 49. As shown in Fig. 46, moreover, the case 419 is arranged to protrude the airbag 26C along the lower face 8a of the column cover 8 when the housed airbag 26C protrudes from the case 419. In other words, the case 419 is so arranged that the axial directions O of the peripheral wall portion 419a may extend along the lower face 8a of the column cover 8 (or along the axial directions of the steering column 3).

In the upper side wall portion 419e of the peripheral wall portion 419a, moreover, there are formed mounting holes 419f, as shown in Figs. 46 to 48. These mounting holes 419f are arranged to mount the inflator 421 in the case 419 by inserting the later-described bolts 423b of the inflator 421. The case 419 mounts and fixes the inflator 421 on the upper side wall portion 419e of the peripheral wall portion 419a, as shown in Figs. 46 to 48. Moreover, the folded airbag 26C is housed in the case 419 on the left and right sides of the inflator 421.

As shown in Figs. 46 to 48, 50 and 51, the inflator 421 is of the cylinder type which can discharge the inflating gas G in response to the electric signal. The inflator 421 is provided with a generally cylindrical body 422 and two bracket portions 423 and 423. Moreover, the inflator 421 is so arranged in the case 419 that its axial direction CO is substantially parallel to the axial direction O of the peripheral wall portion 419a of the case 419.

In the body 422, a plurality of gas discharge ports 422a for discharging the inflating gas are arranged at the front end side. The body 422 is activated simultaneously with the airbag device for the steering wheel by the electric signal coming from the control device for activating the not-shown airbag device which is mounted on the steering wheel 1. Each of the bracket portions 423 comprises a retaining ring 423a made of a sheet metal, and the bolt 323b protruding from the retaining ring 423a. This retaining ring 423a is plastically deformable to have such a reduced diameter that it can clamp the body 422. The inflator 421 is mounted and fixed on the case 419 in the following manner. Specifically, the body 422 assembled the bracket portions 423 and 423 is arranged in the airbag 26C, and the bolts 423b and 423b are protruded from the airbag 26C. Then, these bolts 423b and 423b are inserted into the mounting holes 419f and 419f of the case 419 and are fastened to the case 419 by means of nuts 424 and 424. Moreover, the not-shown lead wire is connected with the body 422.

Moreover, the airbag cover 412 is mounted and fixed on the vehicle rear side face of the holding member 12, as shown in Figs. 46 to 49. Moreover, the airbag cover 412 also plays the role of the interior decorative portion to cover the vehicle rear side of the folded airbag 26C and to cover the face of the holding member 12 on the interior side. In the airbag cover 412, there is formed a door portion 414 of a generally rectangular plate shape, which is located at the arranged position of the opening 419c of the case 419. The door portion 414 is pushed by the extending and expanding airbag 26C and opened into the vehicle. Around this door portion 414, there are arranged a thinned breakaway portion 413 having an inverted U-shape, as viewed from the interior side, and a hinge portion 415 having an integral hinge on the lower edge. The door portion 414 is pushed by the extending and expanding airbag 26C to break the breakaway portion 413 and opened downward to the interior side.

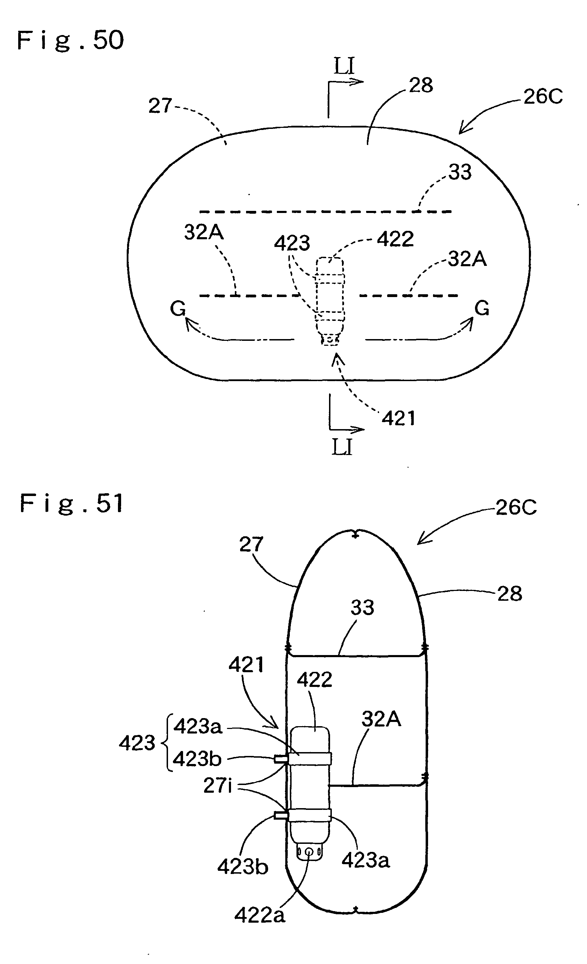

The airbag 26C used has constructions similar to those of the airbag 26 in the airbag device S1. Therefore, the same members will not be explained and will be given the same reference number. In the lower side of the vehicle side wall portion 27 in the airbag 26C, there are formed insert holes 27i and 27i for inserting the individual bolts 423b of the inflator 421 thereinto. In the airbag 26C, moreover, two tethers 32A and 32A on the lower side are arranged on the left and right sides of the inflator 421 (see Figs. 50 and 51).

Here will be described how to mount the airbag device S9 on the vehicle. First of all, the airbag 26C is folded while housing the inflator 421 therein. At this time, the individual bolts 423b of the inflator 421 are protruded from the individual insert holes 27i formed in the airbag 26C. Moreover, the not-shown lead wire extending from the body 422 is extended from the predetermined not-shown insert hole in the airbag 26C. Moreover, the airbag 26C is wrapped, after folded up, with the not-shown breakable wrapping film. The individual bolts 423b are protruded from the wrapping film and are assembled with the not-shown thinned spring nuts.

Next, the folded airbag 26C is inserted together with the inflator 421 into the case 419, and the individual bolts 423b are protruded out of the case 419 through the individual mounting holes 419f of the case 419. By fastening the individual protruded bolts 423b on the case 419 by using the nuts 424, the folded airbag 26C and the inflator 421 are housed in the case 419. Moreover, the not-shown lead wire extending from the inflator body 422 is led from the wrapping film and from the not-shown insert hole of the case 419.

Then, the case 419 is mounted and fixed on the holding member 12 by using the flange portion 419d to form the airbag assembly. The mounting portions 12a and 12a on the two transverse ends of the holding member 12 mounted the airbag cover 412 are individually fixed by means of the bolts on the frame portions FC and FR of the vehicle, which are arranged on the left and right side. Then, the not-shown lead wire is connected with the control circuit, and the dashboard 10 and so on is mounted on the vehicle. As a result, the airbag device S9 can be mounted on the vehicle, as shown in Figs. 46 to 49.

When the predetermined electric signal is inputted to the inflator body 422 after the airbag device S9 was mounted on the vehicle, the inflating gas G is discharged from the gas discharge ports 422a to expand the airbag 26C, as shown in Fig. 50. Then, the airbag 26C breaks the not-shown wrapping film and pushes and opens the door portion 414 of the airbag cover 412 so that the airbag 26C extends and expands upward from the communication hole 12b along the column cover lower face 8a.

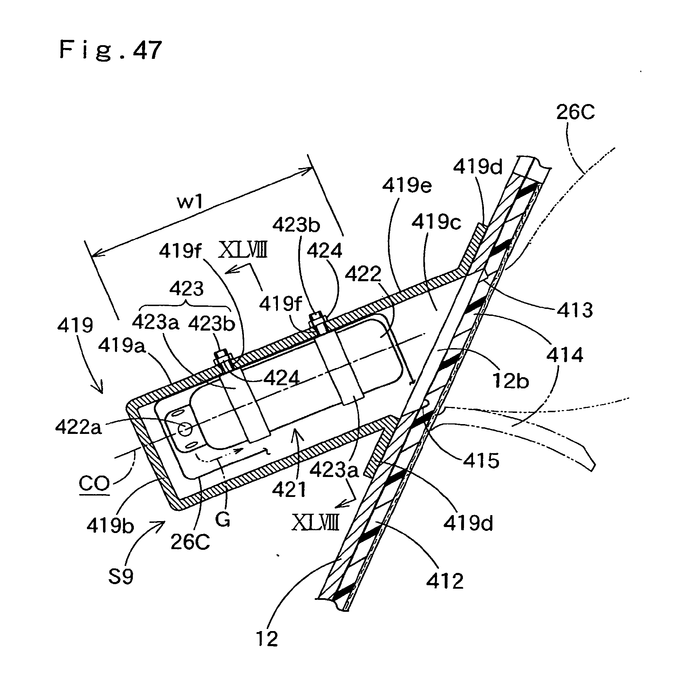

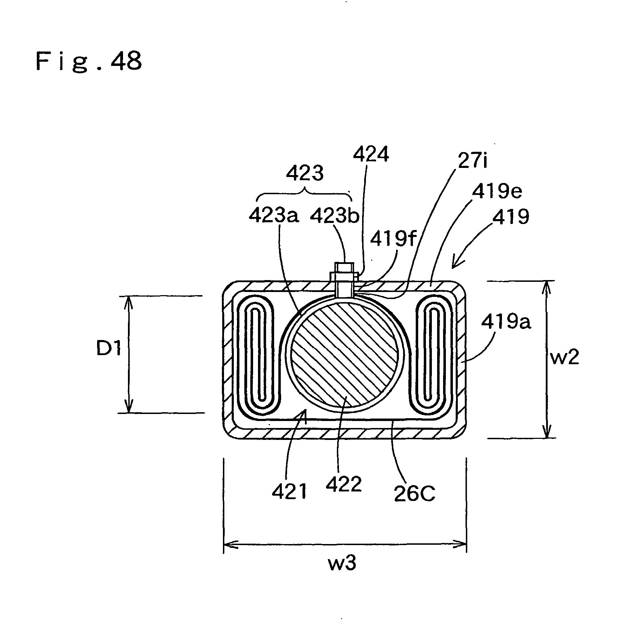

In the airbag device S9, the inflator 421 of the cylinder type is arranged in its axial direction CO in parallel with the axial direction O of the peripheral wall portion 419a of the case 419. Specifically, the inflator 421 of the cylinder type is made longer in the axial length w1 than the external diameter D1, as shown in Figs. 47 and 48. In the airbag device S9, therefore, the vertical and transverse widths w2 and w3 perpendicular to the axis O of the case 419 can be set as following. The widths w2 and w3 of the case 419 can be set the sizes which are calculated by adding the housing space of the airbag 26C to the external diameter D1 of the inflator 421. In other words, the widths w2 and w3 of the case 419 can be made smaller than those of the case in which the inflator 421 is arranged with its axial direction CO being generally perpendicular to the axial directions O of the case peripheral wall portion 419a.

Therefore, the airbag device S9 can be arranged in a narrow housing space by reducing the widths w2 and w3 perpendicular to the axis O of the case 419.

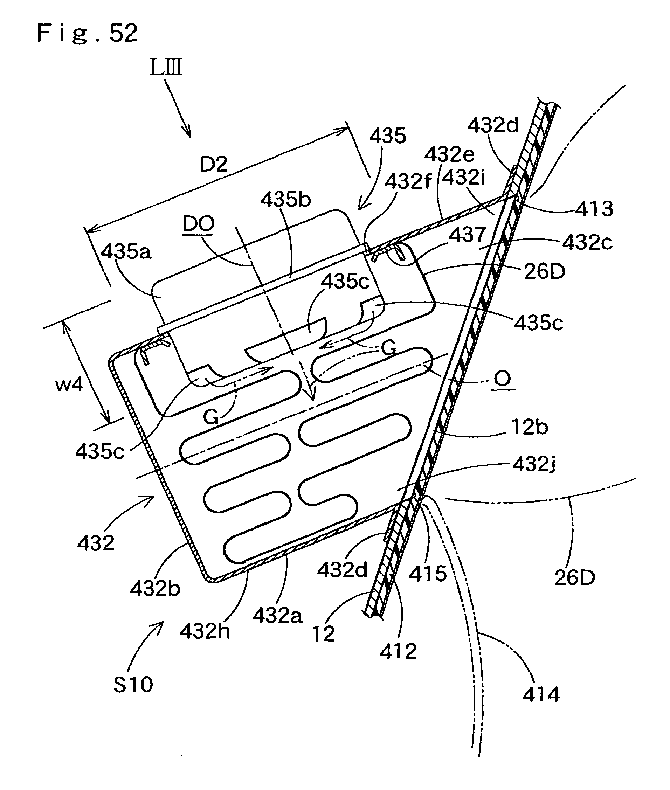

Here will be described an airbag device S10 of a ninth comparative example. The airbag device S10 is constructed, as shown in Fig. 52, to use a disc type inflator 435 as the inflator. The constructions of the airbag device S10 are similar other than the inflator 435 and a case 432 to those of the aforementioned airbag device S9. Therefore, the same members will not be explained and will have the same reference numbers.

The airbag device S10 comprises a folded airbag 26D, the disc type inflator 435, and the case 432 for housing the airbag 26D and the inflator 435. Moreover, the airbag device S10 is mounted like the aforementioned airbag device S9 on the holding member 12 by arranging the case 432 on the front side of the holding member 12.

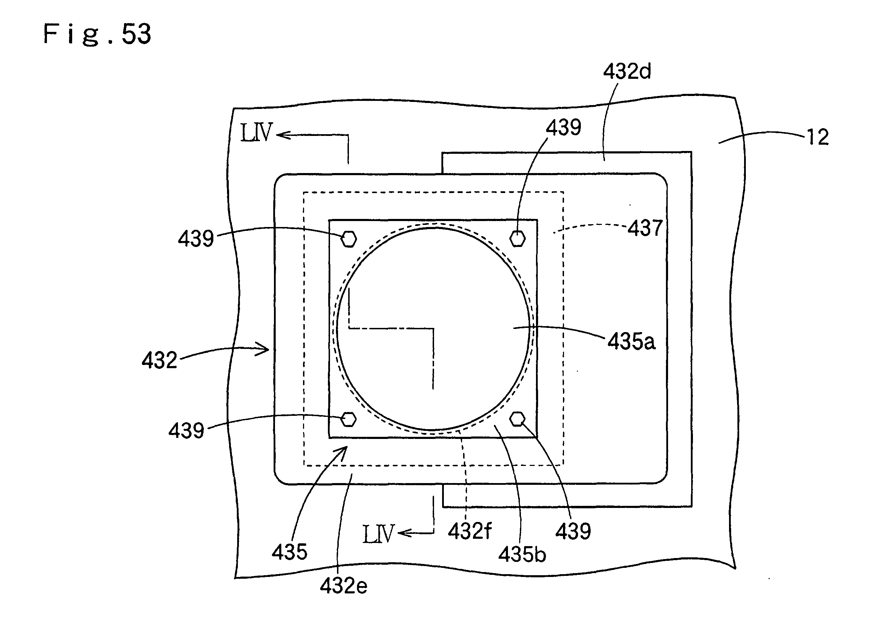

The case 432 comprises, as shown in Figs. 52 to 54, a peripheral wall portion 432a of a generally rectangular tubular shape, and a bottom wall portion 432b of a generally rectangular shape. The bottom wall portion 432b closes the vehicle front side of the peripheral wall portion 432a. From the periphery of an opening 432c of the peripheral wall portion 432a on the vehicle rear side, as in the aforementioned case 419, there is protruded outward a flange portion 432d for mounting the case 432 on the holding member 12. In an upper side wall portion 432e in the peripheral wall portion 432a, as shown in Figs. 52 to 54, there are formed an insert hole 432f and four mounting holes 432g. The insert hole 432f is arranged to hold the later-described body 435a of the inflator 435. The individual mounting holes 432g are arranged to pass four bolts 438 for mounting the inflator 435 on the case 432. As shown in Figs. 52 to 54, the case 432 mounts and fixes the inflator 435 on its upper side wall portion 432e of the peripheral wall portion 432a. Then, the folded airbag 26D is housed below the inflator 435 in the case 432.

Moreover, the case 432 is formed such that the opening 432c of the peripheral wall portion 432a on the vehicle rear side is positioned closer at its upper end 432i to the vehicle rear than its lower end 432j (see Fig. 52). In other words, at the peripheral wall portion 432a, the rear end side of the upper side wall portion 432e is positioned closer to the vehicle rear side than the rear end side of the lower side wall portion 432h.

The inflator 435 is of the disc type, as shown in Figs. 52 to 54. This inflator 435 includes the generally cylindrical body 435a capable of discharging the inflating gas G in response to the electric signal, and a generally square annular flange portion 435b protruding from the outer circumference of the body 435a. In the end portion of the lower side of the body 435a, there are formed a plurality of gas discharge ports 435c. In the flange portion 435b, there are formed four insert holes 435d for passing the bolts 438 formed on a retainer 437 arranged in the airbag 26D. Moreover, the body 435a is connected with a not-shown lead wire.

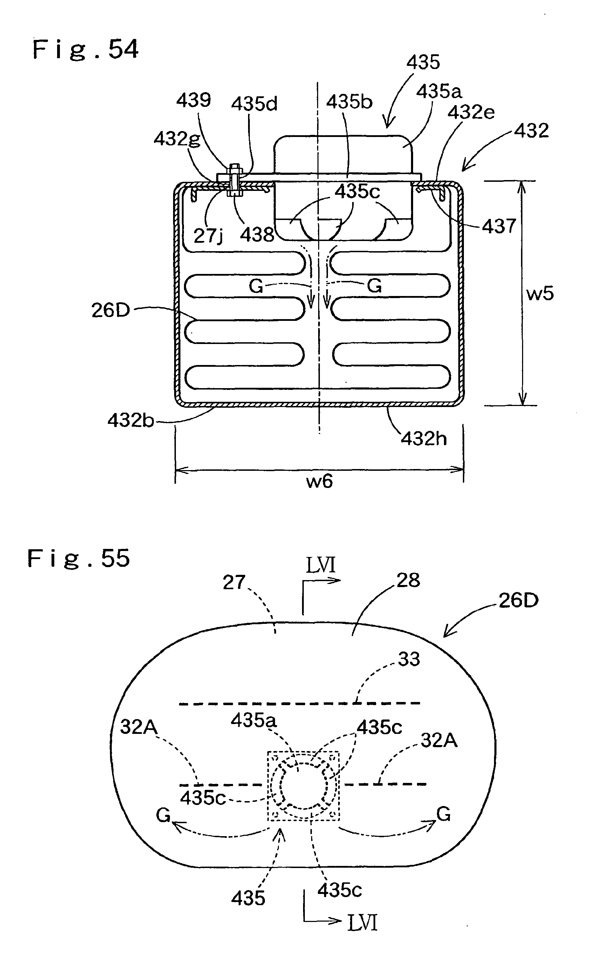

The inflator 435 and the airbag 26D are mounted and fixed in the case 432 by using the generally square annular retainer 437 which is arranged in the airbag 26D. Specifically, the individual bolts 438 of the retainer 437 are inserted, as shown in Fig. 54, into the later-described insert holes 27j of the airbag 26D, the mounting holes 432g of the case 432 and the insert holes 435d formed in the flange portion 435b of the inflator 435 and are individually fastened by nuts 439. Thus, the inflator 435 and the airbag 26D are mounted and fixed on the upper side wall portion 432e of the case 432. Then, the inflator 435 is so mounted and fixed on the upper side wall portion 432e (or the peripheral wall portion 432a) of the case 432 that its axial direction DO is generally perpendicular to the axial direction O of the case peripheral wall portion 432a, as shown in Fig. 52.

The airbag 26D has a construction similar to that of the airbag 26C. In the lower side of the vehicle side wall portion 27 in the airbag 26D, moreover, there are formed the insert holes 27j for inserting the individual bolts 438 of the retainer 437, and an insert hole 27k opened circularly for holding the main body 435a of the inflator 435.

In the airbag device S10, as described above, the disc type inflator 435 is so mounted and fixed on the upper side wall portion 432e (or the peripheral wall portion 432a) of the case 432 that its axial direction DO may be generally perpendicular to the axial direction O of the case peripheral wall portion 432a. Moreover, the disc type inflator 435 is made larger in the external diameter D2 including the retainer 437 than in the length (or the thickness) w4 in the axial direction DO, as shown in Fig. 52. In the airbag device S10, therefore, the distance from the upper side wall portion 432e (the wall portion mounted the inflator 435) to the lower side wall portion 432h (the wall portion confronting the inflator 435), that is, the vertical width w5 of the case 432 perpendicular to the axis O of the peripheral wall portion 432a can be set as follows. The width w5 of the case 432 can be set the size which is calculated by adding the housing space of the airbag 26D to the length size (or the thickness size) w4 of the inflator 435. As a result, the width w5 of the case 432 can be made smaller than that of the case in which the inflator 435 is mounted and fixed on the bottom wall portion 432b of the case 432 so that the axial direction DO is parallel to the axial directions of the case peripheral wall portion 432a.

Therefore, the airbag device S10 can be arranged in a narrow housing space by reducing the width w5 in the directions perpendicular to the axis of the case 432.

In the airbag device S10, moreover, the inflator 435 is mounted and fixed on the upper side wall portion 432e of the case 432. This upper side wall portion 432e is positioned on its rear end side closer to the vehicle rear side than the rear end side of the lower side wall portion 432h. In other words, the upper side wall portion 432e can be made longer in the longitudinal direction than the remaining peripheral wall portion 432a (i.e., the lower side wall portion 432h) in the case 432. Compared with the case in which the inflator 435 is mounted and fixed on the lower wall portion 432a, therefore, the depth of the case 432 is reduced. Of course if this point is not given importance it is possible that the inflator 435 may be mounted and fixed on the lower side wall portion 432h. The inflator 435 may naturally be arranged on the left and right side wall portions of the case peripheral wall portion 432a. When the inflator 435 is arranged on the left and right side wall portions of the peripheral wall portion 432a, it is possible to reduce the width w6 (see Fig. 54) in the transverse directions which are the perpendicular directions to the axis of the case peripheral wall portion 432a.

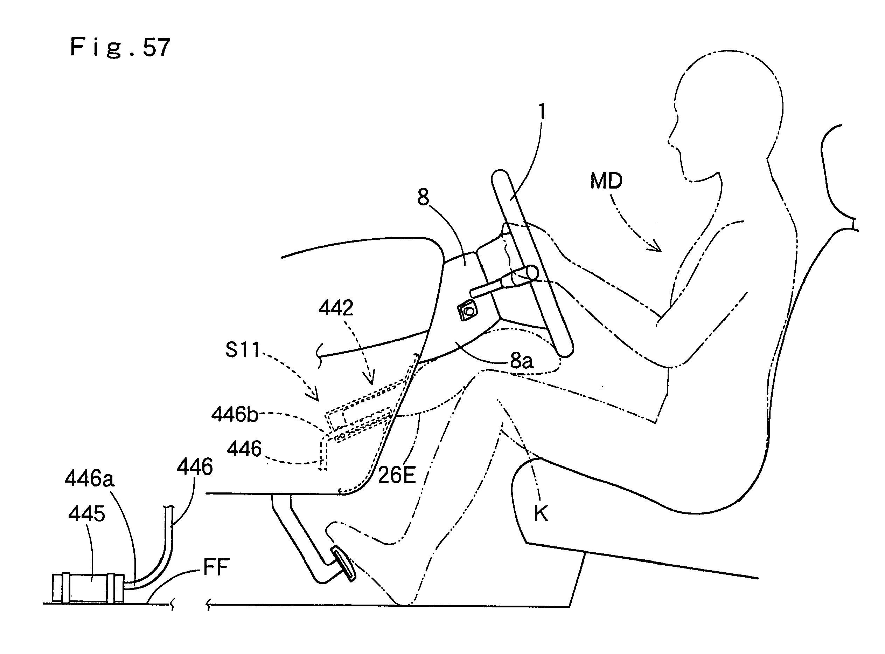

Here will be described an airbag device S11 of a tenth comparative example. This airbag device S11 is constructed, as shown in Fig. 57, such that a cylinder type inflator 445 is arranged outside of a case 442 and provided with a gas feed passage 446 for feeding the inflating gas to an airbag 26E folded and housed in the case 442. Moreover, the constructions of the airbag device S11 are similar to those of the aforementioned airbag devices S9 and S10 excepting the inflator 445, the gas feed passage 446 and the case 442. Therefore, the same members will not be explained and will be given the same reference numerals.

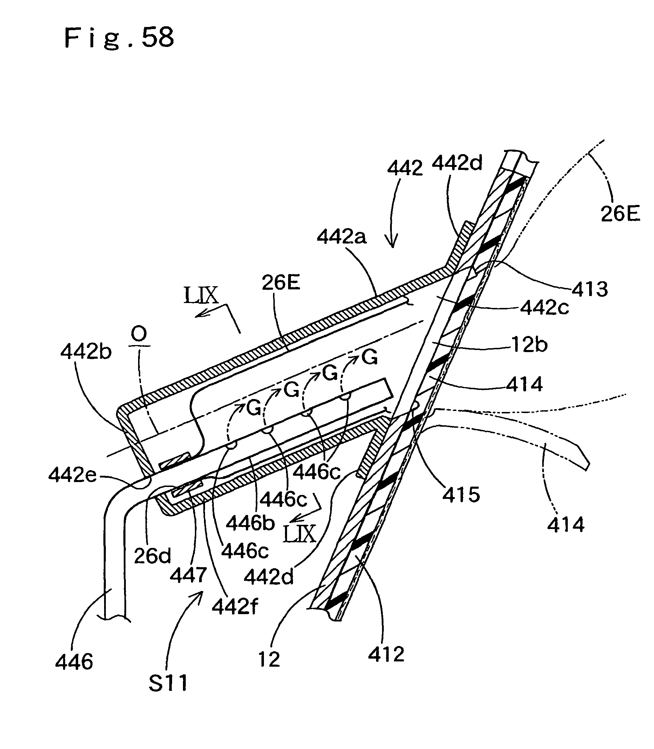

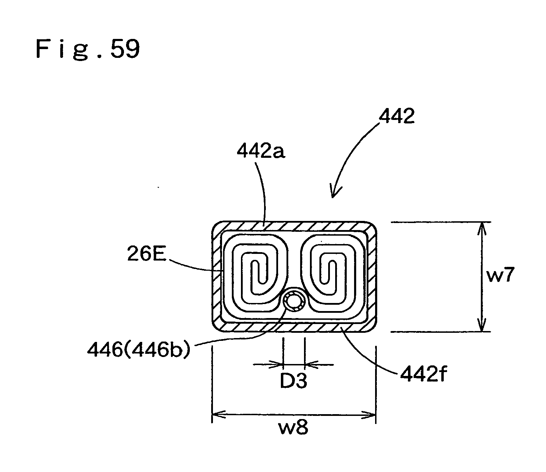

The case 442 is provided, as shown in Figs. 58 and 59, with a peripheral wall portion 442a of a generally rectangular tubular shape, and a bottom wall portion 442b of a generally rectangular shape for closing the vehicle front side of the peripheral wall portion 442a. From the periphery of an opening 442c of the peripheral wall portion 442a on the vehicle rear side, moreover, there is protruded outward a flange portion 442d for mounting the case 442 on the holding member 12. In the bottom wall portion 442b of the case 442, as shown in Fig. 58, there is formed an insert hole 442e for the gas feed passage 446. As shown in Figs. 58 and 59, in the case 442, the later-described end portion 446b of the gas feed passage 446 is arranged near a lower side wall portion 442f of the peripheral wall portion 442a and generally in parallel with the axial direction O of the case peripheral wall portion 442a. Moreover, the folded airbag 26E is housed on the left and right sides of the gas feed passage 446 in the case 442.

The gas feed passage 446 is constructed, as shown in Fig. 57, into a pipe shape to connect its one end 446a to the inflator 445 and its other end portion 446b to the airbag 26E folded and housed in the case 442. The inflator 445 is mounted and fixed on a frame FF such as a floor panel on the vehicle front side of the case 442. The end portion 446b of the gas feed passage 446 is inserted, as shown in Fig. 58, into the airbag 26E through the insert hole 442e formed in the case 442 and an insert hole 26d formed in the airbag 26E. In the end portion 446b of the gas feed passage 446, there are axially formed a plurality of gas discharge ports 446c for introducing the inflating gas G into the airbag 26E. The airbag 26E and the gas feed passage 446 are connected and fixed by a clamp 447, as shown in Fig. 58.

With this construction of the airbag device S11, the inflator 445 is not arranged in the case 442, in which there are arranged only the folded airbag 26E and the gas feed passage 446 for feeding the inflating gas G to the airbag 26E. This gas feed passage 446 need not be provided with a gas producing mechanism but may pass the inflating gas G, so that it can have a smaller volume than that of the inflator 445. For example, as shown in Fig. 59, the gas feed passage 446 can be given a smaller external diameter D3 than that of the cylinder type inflator. As compared with the airbag device S9 having the cylinder type inflator 421 arranged in the case 419, therefore, the vertical and transverse widths w7 and w8 perpendicular to the axis of the case peripheral wall portion 442a can be made smaller.

In the airbag device S11, therefore, the case 442 can be arranged in the narrow housing space by reducing the widths w7 and w8 perpendicular to the axis of the case 442.

In the airbag device S11, moreover, an intermediate portion 446d of the gas feed passage 446 between the end portions 446a and 446b may be bent and arranged without any interference with the members arranged around the airbag device S11. Therefore, the intermediate portion 446d of the gas feed passage 446 can be easily arranged in the narrow space.

When the inflator 445 acts in this airbag device S11, the inflating gas G is discharged from the inflator 445 via the gas feed passage 446 and the gas discharge ports 446c into the airbag 26E. Then, the expanding airbag 26E extends and expands while pushing and opening the door portion 414 of the airbag cover 412.

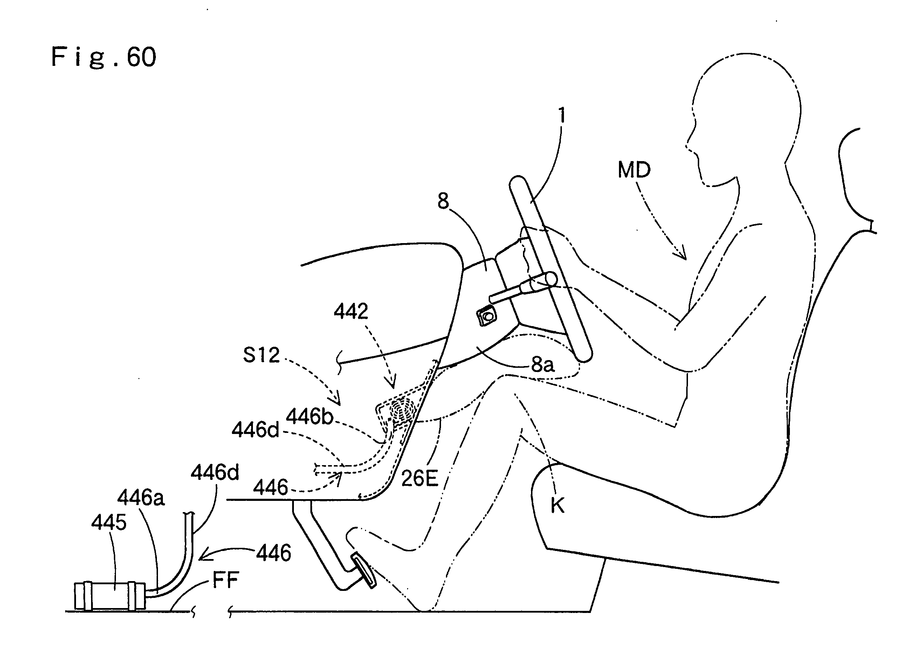

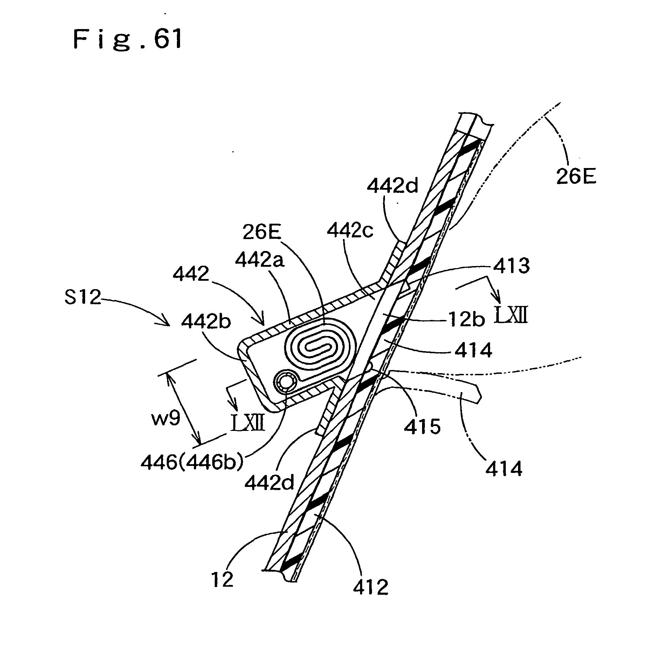

In case the inflator 445 is to be arranged at a position different from that of the case 442, on the other hand, an airbag device S12 may be constructed, as shown in Figs. 60 to 62, such that the end portion 446b of the gas feed passage 446 is arranged in the case 442 and generally perpendicularly of the axial direction O of the case peripheral wall portion 442a. The constructions of the airbag device S12 are similar to those of the aforementioned airbag device S11, excepting that the end portion 446b of the gas feed passage 446 is arranged in the case 442 and generally perpendicularly of the axial direction O of the case peripheral wall portion 442a. Therefore, the same members will not be explained and will be given the same reference numerals.

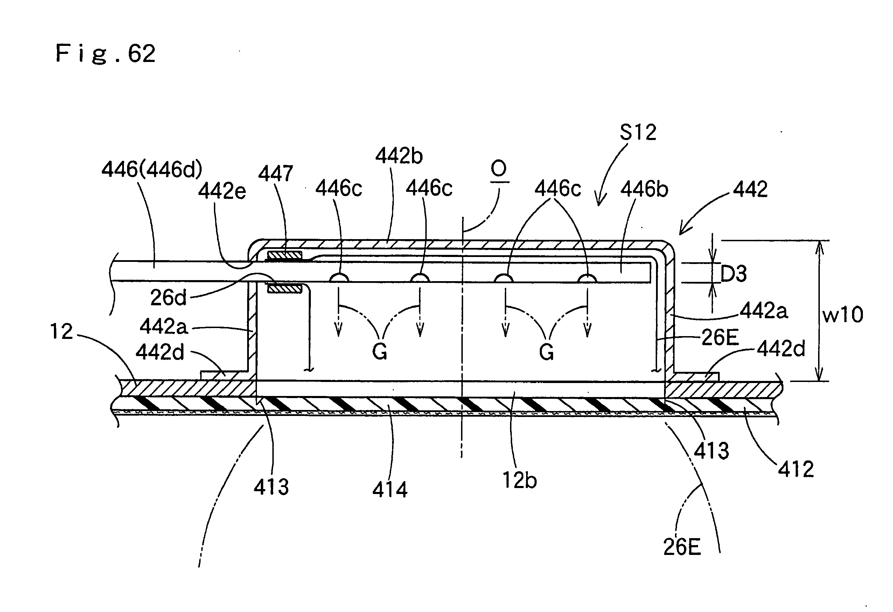

In the airbag device S12, on the other hand, the insert hole 442e for holding the gas feed passage 446 is formed in the case peripheral wall portion 442a, as shown in Fig. 62. In the case 442, moreover, the gas feed passage 446 is so arranged near the bottom wall portion 442b and along the transverse directions as to intersect the axial direction O of the case peripheral wall portion 442a generally perpendicularly. Moreover, the folded airbag 26E is housed on the vehicle rear side of the gas feed passage 446 in the case 442.

With this construction of the airbag device S12, the gas feed passage 446 is given the smaller external diameter D3 than that of the cylinder type inflator. Therefore, the vertical width w9 in the directions perpendicular to the axis O of the case peripheral wall portion 442a can be made smaller than that of the case, in which the inflator 421 used in the aforementioned airbag device S9 of the eigth comparative example is so axially arranged like the airbag device S12 in the directions generally perpendicular to the axial directions O of the case peripheral wall portion 419a. With this construction, moreover, it is possible to reduce the depth w10 of the case 442 toward the vehicle front side, too.

Here in the individual airbag devices S9 to S12, the cases 419, 432 and 442 are made separate of the holding member 12. However, the cases 419, 432 and 442 may be formed integrally with the holding member 12 by the pressing or welding method using a metallic material such as a sheet metal or by the die-casting method using a light metal alloy material of aluminum or the like.

In the individual airbag devices S9 to S12, moreover, the cases 419, 432 and 442 are held by the holding member 12. However, the cases 419, 432 and 442 may be held by a portion within the column cover 8 by attaching brackets or the like on a portion of the column tube 5 in the steering column 3 which does not move. In an alternative case in which the lower panel of the dashboard 10 is arranged below the column cover 8, the cases 419, 432 and 442 may be housed and arranged in the lower panel.

A knee protecting airbag device comprises an airbag, an inflator, and a case housing the airbag and the inflator and arranged in front of a passenger. When the airbag extends and expands, it protrudes toward the rear of the vehicle from the opening of the case, to protect the knees of the passenger. The knee protecting airbag device further comprises a holding member having a mounting portion for mounting the knee protecting airbag device on the vehicle. The holding member holds the case. In the holding member, there are formed a communication hole and a support face arranged on the periphery of the communication hole. The communicating hole communicates with the opening of the case and allows the airbag extending and expanding to protrude therethrough. The support face can support the vehicle front side face of the extending and expanding airbag.

## Claims

1. A knee protecting airbag device,
wherein a knee protecting folded airbag (26A) and an inflator (141) for feeding an inflating gas to said airbag (26A) are housed in a plate-shaped holding member (116) arranged in front of the knees (K) of a seated passenger (MP), said holding member (116) including:
- a bottomed box-shaped housing portion (123) for housing said airbag (26A) and said inflator (141) comprising a bottom wall portion (126) and a peripheral wall portion (124) defining an opening (123a) opened toward the vehicle rear side; and
- a body portion (117) extending from the periphery of the opening (123a) of the housing portion (123),
wherein an airbag cover (130) for covering the housed airbag (26A) in a manner allowing the airbag (26A) to protrude is mounted on said holding member (116),
said airbag cover (130) including:
- a door portion (139) for covering the opening (123a) of said housing portion (123) to open pushed by said expanding airbag (26A);
- a thinned breakaway portion (135) arranged around a periphery of said door portion (139) broken for said door portion (139) to open;
- a hinge portion (137) arranged at an edge side of said door portion (139) for providing a pivot for said door portion (139) being opened;
- a general portion (131) arranged around said door portion (139) and said breakaway portion (135) and said hinge portion (137) for covering the vehicle rear side of the body portion (117) of the holding member (116); and
- a plurality of mounting members (133) protruding forwardly from a plurality of portions of said general portion (131),
the body portion (117) of the holding member (116) comprising a plurality of corresponding through holes (119) formed along the periphery of the housing portion opening (123a) through which the corresponding mounting members (133) of the airbag cover protrude, means (133a; 125; 125a) being provided on the individual mounting members (133) and the peripheral wall portion (124) of the housing portion (123) for retaining said mounting members (133) on said housing portion (123) of the holding member (116).

2. A knee protecting airbag device as set forth in Claim 1, wherein the individual mounting members (133) of said airbag cover (130) have retaining holes (133a); and wherein said housing portion (123) has a plurality of hooks (125) to be inserted into said retaining holes (133a) for retaining said mounting members (133).

3. A knee protecting airbag device as set forth in Claim 1, wherein said holding member (117) has a joining portion (121) which is connected to the vehicle body side when said knee protecting airbag device is mounted on the vehicle; and
wherein a kinetic energy absorbing member (103, 104) capable of absorbing the kinetic energy of the knees (K) is arranged on the vehicle body side, to which said joining portion (121) is connected.

## Patentansprüche

1. Knieschutzairbagvorrichtung, wobei ein knieschützender, gefalteter Airbag (26A) und eine Aufblasvorrichtung (141) zum Zuführen eines Aufblasgases zu dem Airbag (26A) in einem plattenförmigen Haltebauteil (116) untergebracht sind, das vor den Knien (K) eines sitzenden Insassen (MP) angeordnet ist, wobei das Haltebauteil (116) Folgendes aufweist:
einen kastenförmigen Unterbringungsabschnitt (123) mit einem Boden zum Unterbringen des Airbags (26A) und der Aufblasvorrichtung (141), der einen Bodenwandabschnitt (126) und einen Umfangswandabschnitt (124) aufweist, der eine Öffnung (123a) festlegt, die sich zu der Fahrzeugrückseite hin öffnet; und
einen Körperabschnitt (117), der sich von dem Umfang der Öffnung (123a) des Unterbringungsabschnitts (123) aus erstreckt, wobei eine Airbagabdeckung (130) zum Abdecken des untergebrachten Airbags (26A) in einer Art, die dem Airbag (26A) erlaubt, vorzuragen, an dem Haltebauteil (116) befestigt ist,
wobei die Airbagabdeckung (130) Folgendes aufweist:
einen Türabschnitt (139) zum Abdecken der Öffnung (123a) des Unterbringungsabschnitts (123), um sich von dem sich ausdehnenden Airbag (26A) gedrückt zu öffnen;
einen verjüngten Bruchabschnitt (135), der um einen Umfang des Türabschnitts (139) herum angeordnet ist, der gebrochen wird, um den Türabschnitt (139) zu öffnen;
ein Gelenkabschnitt (137), der an einer Randseite des Türabschnitts (139) angeordnet ist, zum Vorsehen eines Drehpunkts für den sich öffnenden Türöffnungsabschnitt (139);
einen Hauptabschnitt (131), der um den Türabschnitt (139) und den Bruchabschnitt (135) und den Gelenkabschnitt (137) herum angeordnet ist, zum Abdecken der Fahrzeugrückseite des Körperabschnitts (117) des Haltebauteils (116); und
eine Vielzahl von Befestigungsbauteilen (133), die von einer Vielzahl von Abschnitten des Hauptabschnitts (131) nach vorne hin vorragen,
wobei der Körperabschnitt (117) des Haltebauteils (116) eine Vielzahl von entsprechenden Durchgangslöchern (119) aufweist, die entlang des Umfangs der Unterbringungsabschnittsöffnung (123a) ausgebildet sind, durch die die entsprechenden Befestigungsbauteile (133) der Airbagabdeckung vorragen, wobei Einrichtungen (133a; 125; 125a) an den einzelnen Befestigungsbauteilen (133) und dem Umfangswandabschnitt (124) des Unterbringungsabschnitts (123) vorgesehen sind zum Halten der Befestigungsbauteile (133) an dem Unterbringungsabschnitt (123) des Haltebauteils (116).

2. Knieschutzairbagvorrichtung nach Anspruch 1, wobei die einzelnen Befestigungsbauteile (133) der Airbagabdeckung (130) Haltelöcher (133a) aufweisen; und wobei der Unterbringungsabschnitt (123) eine Vielzahl von in die Haltelöcher (133a) einzusetzende Haken (125) zum Halten der Befestigungsbauteile (133) aufweist.

3. Knieschutzairbagvorrichtung nach Anspruch 1, wobei das Haltebauteil (117) einen Verbindungsabschnitt (122) aufweist, der mit der Fahrzeugkörperseite verbunden ist, wenn die Knieschutzairbagvorrichtung an dem Fahrzeug befestigt ist; und wobei ein Bauteil (103, 104) zum Absorbieren von kinetischer Energie, das zum Absorbieren der kinetischen Energie der Knie (K) in der Lage ist, an der Fahrzeugkörperseite angeordnet ist, an dem der Verbindungsabschnitt (121) verbunden ist.

## Revendications

1. Dispositif de coussin de sécurité gonflable de protection des genoux,
dans lequel un coussin de sécurité gonflable plié (26A) de protection des genoux et un dispositif de gonflage (141) destiné à alimenter un gaz de gonflage audit coussin de sécurité gonflable (26A) sont logés dans un élément de maintien (116) en forme de plaque agencé en face des genoux (K) d'un passager assis (MP), ledit élément de maintien (116) comportant :
une partie (123) de logement en forme de boîte munie d'un fond pour loger ledit coussin de sécurité gonflable (26A) et ledit dispositif de gonflage (141) comprenant une partie (126) de paroi inférieure et une partie (124) de paroi périphérique définissant une ouverture (123a) ouverte vers le côté arrière du véhicule ; et
une partie (117) de corps s'étendant de la périphérie de l'ouverture (123a) de la partie (123) de logement,
où un couvercle (130) de coussin de sécurité gonflable destiné à couvrir le coussin de sécurité gonflable logé (26A) de façon à permettre au coussin de sécurité gonflable (26A) de faire saillie est monté sur ledit élément de maintien (116),
ledit couvercle (130) de coussin de sécurité gonflable comportant :
une partie (139) de porte destinée à couvrir l'ouverture (123a) de ladite partie (123) de logement pour s'ouvrir lorsqu'elle est poussée par ledit coussin de sécurité gonflable (26A) en déploiement ;
une partie (135) de rupture amincie agencée autour d'une périphérie de ladite partie (139) de porte rompue pour que ladite partie (139) de porte pour s'ouvrir ;
une partie (137) de charnière agencée au niveau d'un côté de bord de ladite partie (139) de porte pour fournir un pivot pour que ladite partie (139) de porte soit ouverte ;
une partie générale (131) agencée autour de ladite partie (139) de porte et de ladite partie (135) de rupture (135) et de ladite partie (137) de charnière pour couvrir le côté arrière du véhicule de la partie (17) de corps de l'élément de maintien (116) ; et
une pluralité d'éléments de montage (133) faisant saillie vers l'avant depuis une pluralité de parties de ladite partie générale (131),
la partie (117) de corps de l'élément de maintien (116) comprenant une pluralité de trous traversants correspondants (119) formés le long de la périphérie de l'ouverture (123a) de la partie de logement à travers lesquels les éléments de montage correspondants (133) du couvercle du coussin de sécurité gonflable font saillie, un moyen (133a ; 125 ; 125a) étant pourvu sur les éléments de montage individuels (133) et la partie (124) de paroi périphérique de la partie (123) de logement pour retenir lesdits éléments de montage (133) sur ladite partie (123) de logement de l'élément de maintien (116).

2. Dispositif de coussin de sécurité gonflable de protection des genoux selon la revendication 1, dans lequel les éléments de montage individuels (133) dudit couvercle (130) de coussin de sécurité gonflable ont des trous de retenue (133a) ; et où ladite partie (123) de logement a une pluralité de crochets (125) à insérer dans lesdits trous de retenue (133a) pour retenir lesdits éléments de montage (133).

3. Dispositif de coussin de sécurité gonflable de protection des genoux selon la revendication 1, dans lequel ledit élément de maintien (117) a une partie de jonction (121) qui est reliée au côté du corps du véhicule lorsque ledit dispositif de coussin de sécurité gonflable de protection des genoux est monté sur le véhicule ; et
où un élément (103, 104) d'absorption d'énergie cinétique capable d'absorber l'énergie cinétique des genoux (K) est agencé sur le côté du corps du véhicule, auquel ladite partie de jonction (121) est reliée.
